# EUROPEAN PATENT APPLICATION

(11) **EP 4 742 632 A1**
(43) Date of publication of application: **13.05.2026**
(21) Application number: 24899827.0
(22) Date of filing: 03.12.2024
(51) Int. Cl.: H04L 67/125

(54) **COCKPIT MULTI-SOUND-ZONE MANAGEMENT METHOD, RELATED APPARATUS AND COMMUNICATION SYSTEM**

(30) Priority: 05.12.2023 CN 202311669639
(71) Applicant: Huawei Technologies Co., Ltd., Shenzhen, Guangdong 518129 (CN)
(72) Inventor: LIANG, Libin, Shenzhen, Guangdong 518129 (CN); HUANG, Congdao, Shenzhen, Guangdong 518129 (CN); CAI, Xuejiang, Shenzhen, Guangdong 518129 (CN); QI, Quan, Shenzhen, Guangdong 518129 (CN)
(74) Representative: MERH-IP Matias Erny Reichl Hoffmann Patentanwälte PartG mbB
(86) International application number: PCT/CN2024/136572
(87) International publication number: WO 2025/119189

(57) **Abstract**

A cockpit multi-audio-zone management method, a related apparatus, and a communication system are provided. A cockpit system may divide a plurality of screens into a plurality of occupant zones based on a configuration file. Each occupant zone may be associated with one audio zone. The cockpit system may dynamically create and delete an audio zone based on a connection and removal of a sound generation device. The cockpit system may perform unified management on an audio focus, volume, an audio route, and a media session in one audio zone. An application corresponding to an occupant zone may apply for an audio focus in an audio zone associated with the occupant zone, and play an audio by using a sound generation device in the audio zone. Audios in different audio zones can be independently played without affecting each other. This can help different users in a vehicle listen to audios by using different audio zones, thereby improving audio listening experience of the users in the vehicle.

## Description

This application claims priority to Chinese Patent Application No. 202311669639.4, filed with the China National Intellectual Property Administration on December 5, 2023 and entitled "COCKPIT MULTI-AUDIO-ZONE MANAGEMENT METHOD, RELATED APPARATUS, AND COMMUNICATION SYSTEM", which is incorporated herein by reference in its entirety.

### TECHNICAL FIELD

This application relates to the field of intelligent vehicle technologies, and in particular, to a cockpit multi-audio-zone management method, a related apparatus, and a communication system.

### BACKGROUND

With development of electronic products, vehicles are configured with more electronic products. The vehicles are also increasingly intelligent. A cockpit system of an intelligent vehicle may be equipped with intelligent and networked vehicle-mounted products, to perform intelligent interaction with persons, roads, and the vehicle. A current cockpit system can support more screens and sound generation devices. Based on these screens and sound generation devices, the cockpit system may obtain one or more audio zones through division. The cockpit system needs to manage the audio zones, to provide better driving experience for users seated at different locations in the vehicle.

### SUMMARY

This application provides a cockpit multi-audio-zone management method, a related apparatus, and a communication system, to dynamically create or delete an audio zone based on a change of an externally connected sound generation device in a cockpit system. The cockpit system can perform unified management on an audio focus, volume, an audio route, and a media session in one audio zone. In addition, audios in audio zones can be independently played without affecting each other. This can help different users in a vehicle listen to audios by using different audio zones, thereby improving audio listening experience of the users in the vehicle.

According to a first aspect, this application provides a cockpit multi-audio-zone management method. The method is applied to a vehicle. The vehicle includes an in-vehicle speaker and a plurality of screens. The plurality of screens include a first screen and a second screen. Both the first screen and the second screen are associated with a first audio zone corresponding to the in-vehicle speaker. The vehicle may detect that a first application on the second screen requests to play a first audio, and play the first audio via the in-vehicle speaker. The vehicle detects that a second application on the first screen requests to play a second audio, plays the second audio via the in-vehicle speaker, and pauses playing of the first audio or reduces playing volume of the first audio. The vehicle detects an input operation that is performed on the second screen and that is for connecting a first sound generation device. The vehicle is connected to the first sound generation device, and creates a second audio zone corresponding to the first sound generation device. An audio zone associated with the second screen changes from the first audio zone to the second audio zone. The vehicle detects again that the first application requests to play the first audio, and plays the first audio via the first sound generation device.

It can be learned that, when the vehicle is externally connected to no sound generation device, the vehicle can include the first audio zone associated with the in-vehicle speaker. All the screens in the vehicle can be associated with the first audio zone. When the vehicle is externally connected to a sound generation device, the vehicle can create a new audio zone, and a corresponding screen is associated with the newly created audio zone. In this way, an audio zone associated with a screen can be dynamically adjusted, so that audios of applications on different screens are separated and played via different sound generation devices. In this way, different users can externally connect different sound generation devices to different screens, and then listen to audios that the users want to listen to by using the different sound generation devices without affecting each other. This can improve audio listening experience of users seated at different locations in the vehicle.

With reference to the first aspect, in some embodiments, the vehicle stores a first configuration file. The first configuration file indicates a correspondence between the plurality of screens and an occupant zone. Any one of the plurality of screens corresponds to one occupant zone. Audio zones associated with screens corresponding to a same occupant zone are consistent. Audio zones associated with screens corresponding to different occupant zones are the same or different.

Cockpit systems of different vehicle models may include different screens. In the foregoing embodiment, only configuration files need to be modified for different vehicle models, so that occupant zones of the different vehicle models can be configured. Cockpit systems of different vehicle models can create occupant zones based on configuration files corresponding to the cockpit systems.

With reference to the first aspect, in some embodiments, the vehicle includes a first audio focus stack corresponding to the first audio zone. The first audio focus stack includes audio focus information of an application that is running in a foreground or a background on a screen associated with the first audio zone. After detecting the input operation that is performed on the second screen and that is for connecting the first sound generation device, the vehicle may create a second audio focus stack corresponding to the second audio zone, and migrate audio focus information of an application that is running in a foreground or a background on the second screen from the first audio focus stack to the second audio focus stack.

With reference to the first aspect, in some embodiments, the vehicle includes a first audio routing table corresponding to the first audio zone. The first audio routing table includes application information of the application that is running in the foreground or the background on the screen associated with the first audio zone. A first audio channel of the in-vehicle speaker is configured in the first audio routing table, and indicates that an audio of the application corresponding to the application information in the first audio routing table is routed to the first audio channel. After detecting the input operation that is performed on the second screen and that is for connecting the first sound generation device, the vehicle may create a second audio routing table corresponding to the second audio zone, and migrate application information of the application that is running in the foreground or the background on the second screen from the first audio routing table to the second audio routing table; and create a second audio channel of the first sound generation device, and configure the second audio channel in the second audio routing table, where the second audio channel configured in the second audio routing table indicates that an audio of the application corresponding to the application information in the second audio routing table is routed to the second audio channel.

With reference to the first aspect, in some embodiments, the vehicle includes a first media session stack corresponding to the first audio zone. The first media session stack includes a media session of the application that is running in the foreground or the background on the screen associated with the first audio zone. After detecting the input operation that is performed on the second screen and that is for connecting the first sound generation device, the vehicle may create a second media session stack corresponding to the second audio zone, and migrate a media session of the application that is running in the foreground or the background on the second screen from the first media session stack to the second media session stack.

With reference to the first aspect, in some embodiments, before the vehicle detects the input operation that is performed on the second screen and that is for connecting the first sound generation device, when detecting an input operation that is performed on the first screen and that is used to view audio playing information, the vehicle may display a first list on the first screen based on the first media session stack, where the first list includes audio playing information indicated by the first media session stack; and when detecting an input operation that is performed on the second screen and that is used to view audio playing information, the vehicle displays the first list on the second screen based on the first media session stack.

With reference to the first aspect, in some embodiments, the first list includes audio playing information of the first audio. When the in-vehicle speaker plays the second audio, and playing of the first audio is paused, the vehicle detects an input operation that is performed on the first screen and that is for the audio playing information of the first audio in the first list, where the input operation for the audio playing information of the first audio in the first list is used to play the first audio. With reference to the first aspect, in some embodiments, the first audio is played via the in-vehicle speaker, and playing of the second audio is paused.

With reference to the first aspect, in some embodiments, after detecting the input operation that is performed on the second screen and that is for connecting the first sound generation device, the vehicle may detect an input operation that is performed on the first screen and that is used to view audio playing information, and display a second list on the first screen based on the first media session stack, where the second list includes the audio playing information indicated by the first media session stack, and the second list does not include the audio playing information of the first audio; and detect an input operation that is performed on the second screen and that is used to view audio playing information, and display a third list on the second screen based on the second media session stack, where the third list includes audio playing information indicated by the second media session stack, and the second list includes the audio playing information of the first audio.

With reference to the first aspect, in some embodiments, after being connected to the first sound generation device, the vehicle detects an input operation that is performed on the second screen and that is used to adjust volume to first volume, and adjusts, to the first volume, volume at which the first sound generation device plays an audio.

With reference to the first aspect, in some embodiments, after being connected to the first sound generation device, the vehicle detects an input operation that is performed on the first screen and that is used to adjust volume to second volume, and adjusts, to the second volume, volume at which the in-vehicle speaker plays an audio.

It can be learned that volume in different audio zones can be independently adjusted without affecting each other.

With reference to the first aspect, in some embodiments, the first screen displays a first interface of the second application. The first interface is a playing interface of the second audio. After the vehicle is connected to the first sound generation device, when detecting an input operation of migrating the first interface from the first screen to the second screen, the vehicle may display the first interface on the second screen, cancel displaying of the first interface on the first screen, and switch the second audio from the in-vehicle speaker to the first sound generation device to continue playing.

With reference to the first aspect, in some embodiments, after the vehicle switches the second audio from the in-vehicle speaker to the first sound generation device to continue playing, when detecting that a third application on the first screen requests to play a third audio, the vehicle plays the third audio via the in-vehicle speaker.

With reference to the first aspect, in some embodiments, after the vehicle switches the second audio from the in-vehicle speaker to the first sound generation device to continue playing, when detecting that the first application on the second screen requests to play the first audio, the vehicle plays the first audio via the first sound generation device, and pauses playing of the second audio or reduces playing volume of the second audio.

With reference to the first aspect, in some embodiments, the vehicle includes the first audio focus stack, the first audio routing table, and the first media session stack that correspond to the first audio zone, and the second audio focus stack, the second audio routing table, and the second media session stack that correspond to the second audio zone. The first audio focus stack includes audio focus information of the second application. The first audio routing table includes application information of the second application. The first media session stack includes a media session stack of the first application. After detecting the input operation of migrating the first interface from the first screen to the second screen, the vehicle may migrate the audio focus information of the second application from the first audio focus stack to the second audio focus stack, migrate the application information of the second application from the first audio routing table to the second audio routing table, and migrate a media session of the second application from the first media session stack to the second media session stack.

It can be learned that, in a screen migration process, a migrated application may not need to be adapted to a multimedia display interface and an audio stream based on a screen after screen migration. The application information of the second application is migrated to an audio routing table associated with the second audio zone. Therefore, the second application can find the second application in the audio routing table associated with the second audio zone, and then transmit an audio of the second application to an audio channel of the first sound generation device based on the audio routing table corresponding to the second audio zone. In this way, the audio of the second application can be seamlessly switched from the in-vehicle speaker to the first sound generation device, thereby maintaining audio playing continuity. That the audio of the second application is seamlessly switched from the in-vehicle speaker to the first sound generation device may indicate that, when the audio of the second application is switched to the first sound generation device, the first sound generation device may continue playing from a location at which the in-vehicle speaker stops playing the audio.

With reference to the first aspect, in some embodiments, the second screen displays a second interface of the first application. The second interface is a playing interface of the first audio. After the vehicle detects again that the first application requests to play the first audio, and plays the first audio via the first sound generation device, when detecting an input operation of sharing the second interface from the second screen to the first screen, the vehicle displays the second interface on the first screen, and switches the first audio from the first sound generation device to the in-vehicle speaker to continue playing.

With reference to the first aspect, in some embodiments, the vehicle further includes a third screen. The third screen is associated with a third audio zone of a second sound generation device. The second sound generation device is connected to the vehicle. The vehicle detects an input operation of sharing the second interface from the second screen to the third screen, and displays the second interface on the third screen.

With reference to the first aspect, in some embodiments, after the vehicle switches the first audio from the first sound generation device to the in-vehicle speaker to continue playing, when detecting that a fourth application on the second screen requests to play a fourth audio, the vehicle plays the fourth audio via the first sound generation device.

With reference to the first aspect, in some embodiments, the vehicle detects that a fifth application on the third screen requests to play a fifth audio, and plays the fifth audio via the second sound generation device.

With reference to the first aspect, in some embodiments, after the vehicle switches the first audio from the first sound generation device to the in-vehicle speaker to continue playing, when detecting that a sixth application on the first screen requests to play a sixth audio, the vehicle plays the sixth audio via the in-vehicle speaker, and pauses playing of the first audio.

With reference to the first aspect, in some embodiments, the vehicle includes the first audio focus stack and the first audio routing table that correspond to the first audio zone, and the second audio focus stack and the second audio routing table that correspond to the second audio zone. The second audio focus stack includes audio focus information of the first application. The second audio routing table includes application information of the first application. After detecting the input operation of sharing the second interface from the second screen to the first screen, the vehicle migrates the audio focus information of the first application from the second audio focus stack to the first audio focus stack, and migrates the application information of the first application from the second audio routing table to the first audio routing table.

It can be learned that, in a screen sharing process, a shared application may not need to be adapted to a multimedia display interface and an audio stream based on a screen that accepts screen sharing. An audio routing policy of the first application is migrated to an audio routing table associated with the first audio zone. Therefore, an audio track of the first application can find the audio track in the audio routing table associated with the first audio zone, and then an audio of the first application is transmitted to an audio channel of the in-vehicle speaker based on the audio routing table associated with the first audio zone. In this way, the audio of the first application can be seamlessly switched from the first sound generation device to the in-vehicle speaker, thereby maintaining audio playing continuity.

With reference to the first aspect, in some embodiments, after the vehicle is connected to the first sound generation device, when detecting that the first sound generation device is disconnected, the vehicle changes the audio zone associated with the second screen from the second audio zone to the first audio zone; and when the in-vehicle speaker plays the second audio, detects that the first application on the second screen requests to play the first audio, plays the first audio via the in-vehicle speaker, and pauses playing of the second audio or reducing the volume of the second audio.

With reference to the first aspect, in some embodiments, the vehicle includes the first audio focus stack corresponding to the first audio zone and the second audio focus stack corresponding to the second audio zone. After detecting that the first sound generation device is disconnected, the vehicle migrates the audio focus information in the second audio focus stack to the first audio focus stack, and deletes the second audio focus stack.

With reference to the first aspect, in some embodiments, the vehicle includes the first audio routing table corresponding to the first audio zone and the second audio routing table corresponding to the second audio zone. After detecting that the first sound generation device is disconnected, the vehicle migrates the application information in the second audio routing table to the first audio routing table, and deletes the second audio routing table.

With reference to the first aspect, in some embodiments, the vehicle includes the first media session stack corresponding to the first audio zone and the second media session stack corresponding to the second audio zone. After detecting that the first sound generation device is disconnected, the vehicle migrates the media session in the second media session stack to the first media session stack, and deletes the second media session stack.

With reference to the first aspect, in some embodiments, the vehicle further includes a fourth screen. An audio zone associated with the fourth screen is consistent with the audio zone associated with the second screen. After the vehicle detects again that the first application requests to play the first audio, and plays the first audio via the first sound generation device, the vehicle detects that a seventh application on the fourth screen requests to play a seventh audio, plays the seventh audio via the first sound generation device, and pauses playing of the first audio or reducing playing volume of the seventh audio. The fourth screen and the second screen may correspond to a same occupant zone.

According to a second aspect, this application provides a vehicle. The vehicle may include a screen, an in-vehicle speaker, a memory, and a processor. The screen may be configured to display a user interface. The in-vehicle speaker may be configured to play an audio. The memory may be configured to store a computer program. The processor may be configured to invoke the computer program, to enable the vehicle to perform the method according to any possible implementation of the first aspect.

According to a third aspect, this application provides a computer-readable storage medium, including instructions. When the instructions are run on a vehicle, the vehicle is enabled to perform the method according to any possible implementation of the first aspect.

According to a fourth aspect, this application provides a computer program product. The computer program product may include computer instructions. When the computer instructions are run on a vehicle, the vehicle is enabled to perform the method according to any possible implementation of the first aspect.

According to a fifth aspect, this application provides a chip. The chip is used in a vehicle. The chip includes one or more processors. The processor is configured to invoke computer instructions to enable the vehicle to perform the method according to any possible implementation of the first aspect.

It may be understood that the vehicle provided in the second aspect, the computer-readable storage medium provided in the third aspect, the computer program product provided in the fourth aspect, and the chip provided in the fifth aspect are all configured to perform the method provided in embodiments of this application. Therefore, for beneficial effect that can be achieved, refer to the beneficial effect in the corresponding method. Details are not described herein again.

### BRIEF DESCRIPTION OF DRAWINGS

FIG. 1 is a diagram of a relationship between an occupant zone and a screen according to an embodiment of this application;
FIG. 2 is a diagram of a structure of a vehicle 100 according to an embodiment of this application;
FIG. 3 is a diagram of a cockpit audio zoning architecture according to an embodiment of this application;
FIG. 4A and FIG. 4B are a diagram of an architecture of a cockpit system according to an embodiment of this application;
FIG. 5 is a diagram of a cockpit audio zoning architecture when no sound generation device is externally connected according to an embodiment of this application;
FIG. 6 is a diagram of a cockpit audio zoning architecture when a headset 1 and a headset 2 are externally connected according to an embodiment of this application;
FIG. 7 is a flowchart of an audio zone creation method according to an embodiment of this application;
FIG. 8 is a diagram of externally connecting a sound generation device to a cockpit system according to an embodiment of this application;
FIG. 9 is a flowchart of an audio channel creation method according to an embodiment of this application;
FIG. 10A to FIG. 11 are diagrams of a specific process in which a cockpit system creates an audio zone according to an embodiment of this application;
FIG. 12A and FIG. 12B are a flowchart of a method for deleting an audio channel when a sound generation device is removed according to an embodiment of this application;
FIG. 13A to FIG. 14 are diagrams of a specific process in which a cockpit system deletes an audio zone according to an embodiment of this application;
FIG. 15A to FIG. 15D are some diagrams of an audio playing scenario in which a sound generation device is removed according to an embodiment of this application;
FIG. 16A and FIG. 16B are a diagram of audio stream transmission in different audio zones according to an embodiment of this application;
FIG. 17A and FIG. 17B are a diagram of applying for an audio focus according to an embodiment of this application;
FIG. 18A and FIG. 18B are a diagram of adjusting volume by a multimedia playing application according to an embodiment of this application;
FIG. 19A and FIG. 19B are a diagram of adjusting volume by a system application according to an embodiment of this application;
FIG. 20A to FIG. 20D are some diagrams of a volume adjustment scenario according to an embodiment of this application;
FIG. 21 is a diagram of media session management according to an embodiment of this application;
FIG. 22 is a diagram of a screen migration method according to an embodiment of this application;
FIG. 23 and FIG. 24 are diagrams of a screen migration scenario according to an embodiment of this application;
FIG. 25 is a diagram of a screen sharing method according to an embodiment of this application;
FIG. 26 and FIG. 27 are diagrams of a screen sharing scenario according to an embodiment of this application; and
FIG. 28A to FIG. 28F are some other diagrams of a screen sharing scenario according to an embodiment of this application.

### DESCRIPTION OF EMBODIMENTS

The following describes the technical solutions in embodiments of this application with reference to the accompanying drawings in embodiments of this application. In the descriptions of embodiments of this application, terms used in the following embodiments are merely intended to describe specific embodiments, but are not intended to limit this application. The terms "one", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one or more than two (including two). The term "and/or" is used to describe an association relationship between associated objects and indicates that three relationships may exist. For example, A and/or B may indicate the following cases: Only A exists, both A and B exist, and only B exists, where A and B each may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiment. Therefore, the statements "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "contain", "have", and variants of the terms all mean "include but are not limited to", unless otherwise specifically emphasized in another manner. The term "connection" includes a direct connection and an indirect connection, unless otherwise stated. "First" and "second" are merely intended for a purpose of description, and shall not be understood as an indication or implication of relative importance or implicit indication of a quantity of indicated technical features.

In embodiments of this application, a term like "example" or "for example" is used to represent giving an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

The term "user interface (user interface, UI)" in the following embodiments of this application is a medium interface for interaction and information exchange between an application (application, APP) or an operating system (operating system, OS) and a user, and implements conversion between an internal form of information and a form acceptable to a user. The user interface is source code written in a specific computer language like Java or an extensible markup language (extensible markup language, XML). The interface source code is parsed and rendered on an electronic device, and is finally presented as content that can be identified by the user. A commonly-used representation form of the user interface is a graphical user interface (graphical user interface, GUI), and is a user interface that is displayed in a graphical manner and that is related to a computer operation. The user interface may be a visual interface element like text, an icon, a button, a menu, a tab, a text box, a dialog box, a status bar, a navigation bar, or a widget that is displayed on a screen of the electronic device.

A cockpit system may include a plurality of screens and a plurality of sound generation devices. A plurality of applications on the plurality of screens may apply for audio focuses, to obtain permission to use the sound generation devices to play audios. The cockpit system needs to manage application for the audio focuses, determine which applications can obtain audio focuses, and route audios of the applications that obtain the audio focuses to appropriate sound generation devices. When receiving a user operation for adjusting volume, the cockpit system needs to determine a sound generation device whose volume is to be adjusted. It can be learned that audio zone management in the cockpit system relates to content such as audio routing, volume management, and audio focus management.

The cockpit system may further include an in-vehicle OS of a vehicle. The in-vehicle OS may be used to manage and control in-vehicle software and hardware resources, support development and data connections of upper-layer software of the vehicle, and support running of the upper-layer software. The in-vehicle OS may be further used to control running of the applications, and provide human-machine interaction interfaces in a plurality of forms.

The cockpit system may also be referred to as a cockpit, an intelligent cockpit, or the like.

In some embodiments, a cockpit system based on an Android open source project (Android open source project, AOSP) includes an audio routing-related management module, a volume-related management module, and an audio focus-related management module. The audio routing-related management module may match audio content (context) with a playing address (address) based on car_audio_configuration.xml, and then generate an audio routing policy. The volume-related management module may be configured to manage volume in each audio zone, and classify different context into different volume groups (Volume Groups) for management. The audio focus-related management module manages the audio focuses according to a focus policy that one audio corresponds to one audio focus. These management modules independently work, which is not conducive to unified management of the audio zones by the cockpit system. The cockpit system based on the AOSP lacks unified management of media sessions of applications in a plurality of audio zones.

In addition, in a scenario in which an audio is transferred from one audio zone to another audio zone in the cockpit system, the cockpit system based on the AOSP requires an audio playing application to be adapted (for example, the audio is adapted to different audio zones, and an audio playing interface is adapted to screens corresponding to the different audio zones). Methods for adapting different audio/video applications are different. This not only increases workload of audio/video application developers, but also affects audio listening experience of a user.

This application provides a cockpit multi-audio-zone management method, to independently manage each audio zone. A cockpit system may perform unified management on an audio focus, volume, an audio route, and a media session in one audio zone. The cockpit system may divide a sound generation device (for example, an in-vehicle speaker) built in a vehicle into one audio zone, and divide a sound generation device (for example, a headset) externally connected to the cockpit system into one or more audio zones. The cockpit system may dynamically create and delete an audio zone based on a connection and removal of a sound generation device.

In this application, a layered cockpit audio zoning architecture is constructed, and an audio system part in the cockpit system is divided into a plurality of layers, to support flexible configuration of a screen and an audio in the cockpit. The audio system part in the cockpit system may be divided into four layers: a screen, an occupant zone, an audio zone, and a sound generation device. Screens in the cockpit system may be divided into a plurality of occupant zones. Each occupant zone may be associated with one audio zone. An application on a screen may apply for an audio focus in an audio zone associated with an occupant zone to which the screen belongs. In other words, an audio of an application on a screen may be played by a sound generation device corresponding to an audio zone associated with an occupant zone to which the screen belongs. A relationship between the screen and the occupant zone may be determined based on a configuration file. An association relationship between the occupant zone and the audio zone may be determined based on a correspondence between the sound generation device corresponding to the audio zone and the screen. The correspondence between the sound generation device and the screen may be dynamically variable. Therefore, the association relationship between the occupant zone and the audio zone is also dynamically variable. Based on the foregoing layered cockpit audio zoning architecture, different vehicle models can implement the multi-audio-zone management method in this application through configuration.

In a scenario in which audio transfer needs to be performed, the cockpit system may migrate an audio focus, an audio route, and a media session of an audio playing application in one audio zone to another audio zone in a unified manner, so that a sound generation device that plays an audio can be seamlessly switched from a sound generation device corresponding to the audio zone to a sound generation device corresponding to the another audio zone. The sound generation device corresponding to the another audio zone may continue to play the audio. In this way, transfer of an audio from one sound generation device to another sound generation device does not cause audio playing interruption or playing from the beginning, bringing good audio listening experience to a user. In addition, the audio playing application does not sense the audio transfer scenario, and the audio playing application does not need to be adapted.

For ease of understanding, the following describes some concepts in this application.

### 1. Audio focus

The audio focus may be permission to play an audio by using a sound generation device. When an APP obtains an audio focus, the APP may play an audio by using a sound generation device. When an APP loses an audio focus, the APP pauses or stops playing of an audio, or reduces volume at which the audio is played. It may be understood that, when a plurality of APPs simultaneously use a same sound generation device to play audios, the audios of the plurality of APPs are mixed and played together. After audio mixing, the user may not clearly hear played content. To prevent all the applications from simultaneously using one sound generation device to play the audios, usually only one application can obtain an audio focus in a same time period. When the application holds the audio focus, another application may still apply for an audio focus or preempt the audio focus.

A type of the audio focus may include a permanent focus, a transient focus, a ducking focus, and an exclusive focus. When applying for the audio focus, the application may apply for any one of the foregoing types of audio focuses as required.

The permanent focus (AUDIOFOCUS_GAIN) may indicate an audio focus that needs to be occupied for a long time. When the audio focus of the application is a permanent focus, the application stops playing an audio after losing the permanent focus. In some embodiments, after the application that holds the permanent focus stops playing the audio, another application that previously plays an audio does not resume playing. For example, when a music APP 1 holds an audio focus to play music, a music APP 2 applies for a permanent focus in response to an operation of starting the music APP 2 to play music. The music APP 2 may preempt the audio focus of the music APP 1, and start to play the music. When the music APP 2 pauses playing of the music, the music APP 1 does not actively resume playing. When the music APP 2 preempts the audio focus of the music APP 1, a cockpit system may delete audio focus information of the music APP 1 from an audio focus stack. In this case, when wanting to play the music, the music APP 1 needs to re-apply for an audio focus. In other words, when an application applies for a permanent focus, the cockpit system may clear the audio focus stack. An application corresponding to audio focus information at a stack top of the audio focus stack may be an application that currently holds an audio focus and plays an audio by using a sound generation device.

The transient focus (AUDIOFOCUS_TRANSIENT) may indicate an audio focus that is to be occupied for a short time. The transient focus may make an application that loses an audio focus pause playing, and the application that loses the audio focus resumes playing after the transient focus is abandoned. For example, when a music APP 1 holds an audio focus to play music, a phone application receives an incoming call. The phone application may apply for a transient focus. The phone application may preempt the audio focus of the music APP 1, and start to play an incoming call alert tone. When the call ends, the phone application may actively abandon the transient focus, and the music APP 1 may re-obtain an audio focus and resume playing of the music. When the phone application preempts the audio focus of the music APP 1, the cockpit system may place audio focus information of the phone application at the stack top of the audio focus stack, and place audio focus information of the music APP 1 below the stack top (namely, a next one of the audio focus information of the phone application). When the call ends, the cockpit system may delete the audio focus information of the phone application from the audio focus stack. In this way, the audio focus information of the music APP 1 is at the stock top again in the audio focus stack. The music APP 1 may actively resume playing after the call of the phone application ends.

The ducking focus (AUDIOFOCUS_TRANSIENT_MAY_DUCK) may indicate an audio focus that is to be occupied for a short time. Different from the transient focus, the ducking focus may allow an application that previously obtains an audio focus to reduce volume, and simultaneously perform playing with an application that newly obtains the ducking focus. For example, in a scenario in which music is listened to and navigation is performed, when a music APP 1 holds an audio focus to play the music, a navigation application needs to play a navigation alert tone. The navigation application may apply for the ducking focus. The navigation application may preempt the audio focus of the music APP 1, and start to play the navigation alert tone. When the navigation application plays the navigation alert tone, the music APP 1 may reduce volume and play the music, to ensure that the user can hear the navigation alert tone more clearly. When the navigation alert tone is played, the navigation application may actively abandon the ducking focus, and the music APP 1 may restore the volume at which the music is played. When the navigation application preempts the audio focus of the music APP 1, the cockpit system may place audio focus information of the navigation application at the stack top of the audio focus stack, and place audio focus information of the music APP 1 below the stack top. When the navigation alert tone is played, the cockpit system may delete the audio focus information of the navigation application from the audio focus stack. In this way, the audio focus information of the music APP 1 is at the stock top again in the audio focus stack. The music APP 1 may actively restore the volume at which the music is played.

The exclusive focus (AUDIOFOCUS_TRANSIENT_EXCLUSIVE) may indicate an audio focus that is to be occupied for a short time. Different from the transient focus and the ducking focus, the exclusive focus has a highest priority, and an application that applies for an exclusive focus may be allowed to preempt an audio focus of another application, but the another application is not allowed to preempt the exclusive focus when applying for the audio focus.

There may be one or more audio zones in the cockpit system. One audio zone has one audio focus. Applications that hold audio focuses in different audio zones may be different. Therefore, each audio zone may correspond to one audio focus stack. The cockpit system may manage the audio focus stack of each audio zone based on a type of a focus applied for by an application. A plurality of applications corresponding to one occupant zone may compete for an audio focus in an audio zone associated with the occupant zone.

### 2. Audio routing

Each sound generation device in a cockpit system corresponds to an audio channel. The audio channel may be used to transmit audio playing data.

Audio routing may be a relationship between an application and an audio channel used by the application when an audio is played. The cockpit system may determine, based on audio routing, an audio channel through which the audio of the application is transmitted, that is, a sound generation device by which the audio of the application is played.

### 3. Media session (Media Session)

The media session may be a bridge between a cockpit system and a multimedia playing application. The multimedia playing application may include an APP used to play an audio and/or a video. When playing the audio and/or the video, the multimedia playing application may create a media session. The media session may notify the cockpit system that the multimedia playing application is playing multimedia content (for example, the audio and/or the video), and may further notify the cockpit system of what multimedia content is being played and how to control (for example, pause playing of/play/forward/rewind) the multimedia content that is being played.

In some embodiments, the cockpit system may display, in a user interface of an audio center based on the media session, a control used to control playing of the multimedia content. In this way, the user can conveniently control the multimedia content at a location outside the multimedia playing application.

### 4. Occupant zone (Occupant Zone)

The occupant zone may be divided based on a screen in a cockpit system. The cockpit system may include one or more occupant zones. One occupant zone may correspond to one or more screens.

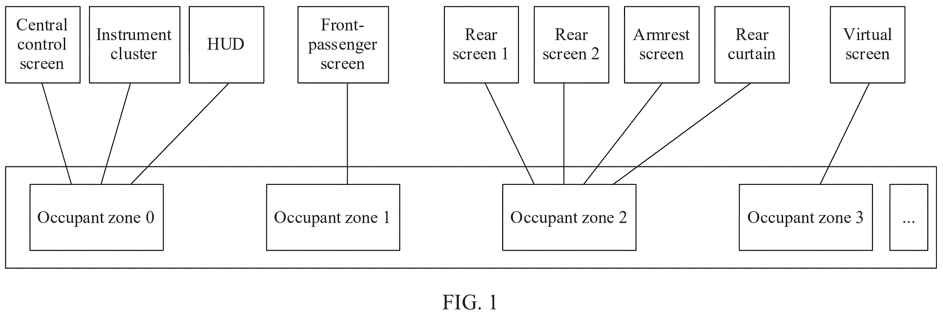

FIG. 1 is a diagram of an example of a relationship between an occupant zone and a screen.

For example, one cockpit system may include an occupant zone 0, an occupant zone 1, an occupant zone 2, and an occupant zone 3. A screen corresponding to the occupant zone 0 may include a central control screen, an instrument cluster, and a head up display (head up display, HUD). A screen corresponding to the occupant zone 1 may include a front-passenger screen. The front-passenger screen may be a screen disposed in a zone in which a front passenger seat is located, and may be conveniently watched by a user seated on the front passenger seat. A screen corresponding to the occupant zone 2 may include a rear screen 1, a rear screen 2, an armrest screen, and a rear curtain. The rear screen 1 and the rear screen 2 may be screens disposed in a zone in which a rear seat is located, and may be conveniently watched by a user seated on the rear seat. A screen corresponding to the occupant zone 3 may include a virtual screen. The virtual screen may be a screen that is set to use, as an independent audio zone, an out-of-vehicle speaker configured outside a vehicle. The virtual screen may be a screen that does not have a physical entity, or may be a screen that has a physical entity outside the vehicle. The occupant zone 3 may be associated with the audio zone corresponding to the out-of-vehicle speaker. In this way, the user can play, through an operation of transferring an audio to the virtual screen, the audio by using the out-of-vehicle speaker.

The occupant zone 0 may be referred to as an occupant zone 0. The occupant zone 1 may be referred to as an occupant zone 1. The occupant zone 2 may be referred to as an occupant zone 2. The occupant zone 3 may be referred to as an occupant zone 3. A screen corresponding to an occupant zone may be referred to as a screen in the occupant zone or a screen bound to the occupant zone. A correspondence between an occupant zone and a screen may also be referred to as a binding relationship between an occupant zone and a screen.

It can be learned that the screen bound to the occupant zone 0 is mainly used to serve a driver. The screen bound to the occupant zone 1 is mainly used to serve a user seated on the front passenger seat. The screen bound to the occupant zone 2 is mainly used to serve a user seated at a rear location. The screen bound to the occupant zone 3 may be used to serve a user outside the vehicle. In division into the foregoing occupant zones, the vehicle may be divided into a plurality of zones based on locations of the screens in the vehicle: a driver zone, a front passenger zone, a rear zone, and an out-of-vehicle zone.

Division into the occupant zones in the cockpit system is not limited in this application. Without being limited to the occupant zone 0 to the occupant zone 3, the cockpit system may include more or fewer occupant zones. Without being limited to the binding relationship between an occupant zone and a screen shown in FIG. 1, more or fewer screens may be bound to the occupant zone in the cockpit system.

Each screen in the cockpit system may be configured with one or more applications. Two different screens may be configured with different applications, or may be configured with a same application. The central control screen and the front-passenger screen are used as an example for description. Both the central control screen and the front-passenger screen may be configured with an application market APP for installing an APP. In response to an operation of installing one or more applications in the application market APP on the central control screen, the cockpit system may configure the one or more applications on the central control screen. In response to an operation of installing one or more other applications in the application market APP on the front-passenger screen, the cockpit system may configure the one or more other applications on the front-passenger screen. In other words, the cockpit system may configure an application on a screen on which a user operation for installing the application is performed. A source of an application on each screen is not limited in embodiments of this application.

An application on the screen corresponding to the occupant zone may be referred to as an application corresponding to the occupant zone. When one occupant zone is bound to a plurality of screens, applications corresponding to the occupant zone may include applications on the plurality of screens.

In some embodiments, the cockpit system may store a configuration file of the occupant zone. The configuration file may include a binding rule between the screen and the occupant zone. The cockpit system may create an occupant zone based on the configuration file, and determine a screen corresponding to the occupant zone. The configuration file may be referred to as a first configuration file.

Cockpit systems of different vehicle models may include different screens. In the foregoing embodiment, only configuration files need to be modified for different vehicle models, so that occupant zones of the different vehicle models can be configured. Cockpit systems of different vehicle models can create occupant zones based on configuration files corresponding to the cockpit systems.

### 5. Audio zone (Audio Zone)

The audio zone may be obtained through division based on a sound generation device in a cockpit system. The cockpit system may include one or more audio zones. One audio zone may be associated with one or more sound generation devices.

For example, the cockpit system may divide all in-vehicle speakers configured in a vehicle into one audio zone, and create an audio zone 0 (Audio Zone 0). A sound generation device associated with the audio zone 0 is the in-vehicle speaker. Optionally, the cockpit system may alternatively divide the in-vehicle speakers into a plurality of audio zones. This is not limited in embodiments of this application.

In some embodiments, when an out-of-vehicle speaker is configured outside the vehicle, the cockpit system may divide the out-of-vehicle speaker into one audio zone, and create an audio zone associated with the out-of-vehicle speaker.

In some embodiments, the cockpit system may be externally connected to one or more sound generation devices, for example, a headset. The headset may include a wired headset and a wireless headset (for example, a Bluetooth headset). When detecting an externally connected sound generation device, for example, a headset 1, the cockpit system may divide the headset 1 into another audio zone, and create an audio zone 1 (Audio Zone 1). A sound generation device associated with the audio zone 1 may include the headset 1. When detecting that the headset 1 is disconnected, the cockpit system may delete the audio zone 1.

In some embodiments, the cockpit system may associate the audio zone 0 with the occupant zone 0 shown in FIG. 1. In this way, applications corresponding to the occupant zone 0 may compete for an audio focus in the audio zone 0, and after obtaining the audio focus, play an audio by using the in-vehicle speaker.

When there is only one audio zone, namely, the audio zone 0, in the cockpit system, the cockpit system may associate all occupant zones with the audio zone 0. In this way, applications corresponding to all occupant zones in the cockpit system all compete for the audio focus in the audio zone 0, and after obtaining the audio focus, play an audio by using the in-vehicle speaker.

When the cockpit system is externally connected to the headset 1, the cockpit system may determine a screen to which the headset 1 is bound. In response to an operation that is performed on one screen and that is for connecting an external sound generation device to the cockpit system, the cockpit system may bind the sound generation device to the screen. A sound generation device may be bound to a screen via which the sound generation device is connected to the cockpit system. Then, the cockpit system may associate an audio zone corresponding to the sound generation device with an occupant zone bound to the screen bound to the sound generation device.

For example, when the headset 1 is connected to the cockpit system via the front-passenger screen, the cockpit system may bind the headset 1 to the front-passenger screen. Then, the cockpit system may associate the audio zone 1 corresponding to the headset 1 with the occupant zone 1 bound to the front-passenger screen shown in FIG. 1. In this way, applications corresponding to the occupant zone 1 may compete for an audio focus in the audio zone 1, and after obtaining the audio focus, play an audio by using the headset 1.

### Device software and hardware structures

The following describes a structure of a vehicle 100 and a software architecture of a cockpit system in the vehicle 100 in this application.

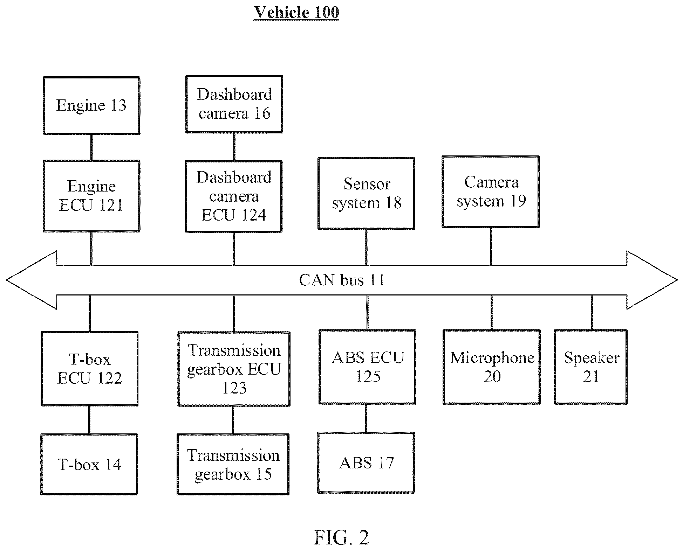

**FIG. 2** **is a diagram of an example of the structure of the vehicle 100.**

As shown in FIG. 2, the vehicle 100 may include a controller area network (controller area network, CAN) bus 11, a plurality of electronic control units (electronic control units, ECUs), an engine 13, a telematics box (telematics box, T-box) 14, a transmission gearbox 15, a dashboard camera 16, an anti-lock brake system (anti-lock brake system, ABS) 17, a sensor system 18, a camera system 19, a microphone 20, a speaker 21, and the like.

The CAN bus 11 is a serial communication network that supports distributed control or real-time control, and is configured to connect components of the vehicle 100. Any component on the CAN bus 11 may monitor all data transmitted on the CAN bus 11. Frames transmitted by the CAN bus 11 may include a data frame, a remote frame, an error frame, and an overload frame, and different frames transmit different types of data. In this embodiment of this application, the CAN bus 11 may be configured to transmit data related to each component in a multi-audio-zone management method. For a specific implementation of the method, refer to detailed descriptions of the following method embodiments.

This is not limited to the CAN bus 11. In some other embodiments, the components of the vehicle 100 may alternatively be connected and communicate with each other in another manner. For example, the components may alternatively communicate with each other via a vehicle-mounted ethernet (ethernet) local interconnect network (local interconnect network, LIN) bus, a FlexRay bus, or a common vehicle-mounted network system (media oriented system, MOST) bus. This is not limited in embodiments of this application. In the following embodiment, an example in which the components communicate with each other through the CAN bus 11 is used for description.

The ECU is equivalent to a processor or a brain of the vehicle 100, and is configured to indicate, according to an instruction obtained from the CAN bus 11 or based on an operation entered by a user, a corresponding component to perform a corresponding action. The ECU may include a security chip, a microcontroller unit (microcontroller unit, MCU), a random access memory (random access memory, RAM), a read-only memory (read-only memory, ROM), an input/output (I/O) interface, an analog/digital converter (A/D converter), and a large-scale integrated circuit with an input circuit, an output circuit, a shaping circuit, a drive circuit, and the like.

There are various types of ECUs. Different types of ECUs can be configured to implement different functions.

The plurality of ECUs in the vehicle 100 may include, for example, an engine ECU 121, a telematics box (telematics box, T-box) ECU 122, a transmission gearbox ECU 123, a dashboard camera ECU 124, and an anti-lock brake system (anti-lock brake system, ABS) ECU 125.

The engine ECU 121 is configured to: manage the engine and coordinate various functions of the engine, for example, may be configured to start up the engine, or shut down the engine. The engine is an apparatus that provides power for the vehicle 100. The engine is a machine that converts a form of energy into mechanical energy. The vehicle 100 may be configured to: convert chemical energy from combustion of liquid or gas, or electric energy into mechanical energy, and output power to the outside. Components of the engine may include two main mechanisms: a crank-link mechanism and a valve mechanism, and five systems: a cooling system, a lubrication system, an ignition system, an energy supply system, and a start-up system. Main components of the engine are a cylinder block, a cylinder head, a piston, a piston pin, a connecting rod, a crankshaft, a flywheel, and the like.

The T-box ECU 122 is configured to manage the T-box 14.

The T-box 14 is mainly used to communicate with an internet, provide a remote communication interface for the vehicle 100, and provide services including navigation, entertainment, traveling data collection, traveling trajectory recording, vehicle fault monitoring, remote vehicle query and control (for example, unlocking or locking, air conditioner control, window control, engine torque limit, engine startup or shutdown, seat adjustment, and queries about a state of charge, a fuel level, or a door status), driving behavior analysis, wireless hotspot sharing, road rescue, exception notification, and the like.

The T-box 14 may be configured to communicate with a vehicle telematics service provider (telematics service provider, TSP) and an electronic device on a user (for example, a driver) side, to implement vehicle status display and control on an electronic device. After the user sends a control command via a vehicle management application on the electronic device, the TSP sends a request instruction to the T-box 14. After obtaining the control command, the T-box 14 sends a control packet through the CAN bus and controls the vehicle 100, and finally feeds back an operation result to the vehicle management application on the electronic device on the user side. In other words, data read by the T-box 14 via the CAN bus 11, for example, data such as a vehicle status report, a traveling report, fuel consumption statistics, a traffic violation query, a location trajectory, and a driving behavior, may be transmitted to a TSP background system via a network, and the TSP background system forwards the data to the electronic device on the user side for viewing by the user.

The T-box 14 may specifically include a communication module and a screen.

The communication module may be configured to: provide a wireless communication function, and support the vehicle 100 in communicating with another device via a wireless communication technology like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or ultra-wideband (ultra-wideband, UWB). The communication module may be further configured to: provide a mobile communication function, and support the vehicle 100 in communicating with another device through communication technologies such as a global system for mobile communications (global system for mobile communications, GSM), a universal mobile telecommunications system (universal mobile telecommunications system, UMTS), wideband code division multiple access (wideband code division multiple access, WCDMA), time-division code division multiple access (time-division code division multiple access, TD-SCDMA), long term evolution (long term evolution, LTE), 5G, and future 6G.

The communication module may establish a connection to and communicate with another device like a server or an electronic device on a user side via a vehicle to everything (vehicle to everything, V2X) communication technology based on a cellular network (cellular V2X, C-V2X). For example, the C-V2X may include long term evolution (long term evolution, LTE)-based V2X (LTE-V2X) and 5G-V2X.

The screen may be configured to provide a visual interface. The vehicle 100 may include one or more screens, for example, may include an instrument cluster disposed in front of a driver seat, a screen disposed above a seat and configured to display a surrounding situation, and an HUD that projects information onto a windshield. The screen in the vehicle 100 may further include a central control screen, a front-passenger screen, a rear screen, an armrest screen, a rear curtain, and the like. One or more rear screens may be configured in a rear seat zone of the vehicle 100. For example, one screen is configured in a zone of rear left seat. Another screen is configured in a zone f a rear right seat. A quantity and locations of screens included in the vehicle 100 are not limited in this application.

The T-box 14 may also be referred to as an in-car infotainment system, a remote information processor, a vehicle gateway, or the like. This is not limited in embodiments of this application.

The transmission gearbox ECU 123 is configured to manage the transmission gearbox.

The transmission gearbox 15 may be used to change a rotational speed and a torque of the engine, and can change a transmission ratio of an output shaft to an input shaft in a fixed manner or based on a gear. Components of the transmission gearbox 15 may include a variable-speed transmission mechanism, a control mechanism, a power output mechanism, and the like. A main function of the variable-speed transmission mechanism is to change a value and a direction of the torque and the rotational speed. A main function of the control mechanism is to control the transmission mechanism and implement a change in the transmission ratio of the transmission gearbox, that is, to implement gear shifting, thereby implementing speed and torque variation.

The dashboard camera ECU 124 is configured to manage the dashboard camera 16.

Components of the dashboard camera 16 may include a host, a vehicle speed sensor, data analysis software, and the like. The dashboard camera 16 is an instrument that records an image and a sound of the vehicle in a traveling process, including related information such as traveling time, a speed, a location, and the like. In this embodiment of this application, when the vehicle travels, the vehicle speed sensor collects a wheel rotational speed, and sends vehicle speed information to the dashboard camera 16 via the CAN bus.

The ABS ECU 125 is configured to manage the ABS 17.

The ABS 17 automatically controls a value of braking force of a brake when the vehicle brakes, so that wheels are not locked and are in a state of rolling and sliding, to ensure that adhesion between the wheels and the ground is a maximum value. In a braking process, when an electronic control apparatus determines, based on a wheel rotational speed signal input by a wheel rotational speed sensor, that the wheels tend to be locked, the ABS enters an anti-lock braking pressure adjustment process.

The sensor system 18 may include an acceleration sensor, a vehicle speed sensor, a vibration sensor, a gyro sensor, a radar sensor, a signal transmitter, a signal receiver, and the like. The acceleration sensor and the vehicle speed sensor are configured to detect a speed of the vehicle 100. The vibration sensor may be disposed under a seat, or at a seat belt, a seat back, an operation panel, an airbag, or another location, and is configured to: detect whether the vehicle 100 is collided and detect a location of the user. The gyro sensor may be configured to determine a motion posture of the vehicle 100. The radar sensor may include a lidar, an ultrasonic radar, a millimeter-wave radar, and the like. The radar sensor is configured to: emit an electromagnetic wave to illuminate a target and receive an echo from the target, to obtain information such as a distance from the target to an electromagnetic wave emission point, a distance change rate (radial speed), an orientation, and a height, and then recognize another vehicle, a pedestrian, a roadblock, or the like near the vehicle 100. The signal transmitter and the signal receiver are configured to receive and send signals. The signal may be used to detect the location of the user, and the signal may be, for example, an ultrasonic wave, a millimeter wave, or a laser.

The camera system 19 may include a plurality of cameras, and the camera is configured to capture a static image or a video. The cameras in the camera system 19 may be disposed at locations such as a front of the vehicle, a rear of the vehicle, a side edge, or the interior of the vehicle, to implement functions such as assisted driving, traveling recording, panoramic surround view, and in-vehicle monitoring.

The sensor system 18 and the camera system 19 may be configured to detect an ambient environment, so that the vehicle 100 makes a corresponding decision to cope with an environmental change, for example, may be configured to complete a task of focusing on the ambient environment in an autonomous driving phase.

The microphone 20, also referred to as a "mike" or a "mic", is configured to convert a sound signal into an electrical signal. When making a call or outputting a voice instruction, the user may make a sound near the microphone 20 through the mouth of the user, to input a sound signal to the microphone 20. At least one microphone 20 may be disposed in the vehicle 100. In some other embodiments, two microphones 20 may be disposed in the vehicle 100, to collect a sound signal and further implement a noise reduction function. In some other embodiments, three, four, or more microphones 20 may be alternatively disposed in the vehicle 100 to form a microphone array, to collect a sound signal, reduce noise, identify a sound source, so as to implement a directional recording function and the like.

In addition, the vehicle 100 may further include a plurality of interfaces, for example, a USB interface, an RS-232 interface, and an RS485 interface, and may be externally connected to an electronic device like a camera, a microphone, and a headset.

In this embodiment of this application, the microphone 20 may be configured to detect a voice instruction input by the user. The sensor system 18, the camera system 19, the T-box 14, and the like may be configured to identify the voice instruction of the user. When the voice instruction is identified, the T-box ECU 122 may execute the voice instruction.

The speaker 21 may also be referred to as a "sound box" or a "loudspeaker", and may be configured to convert an electrical signal into a sound signal. The speaker 21 may be configured to play an audio. At least one speaker 21 may be disposed in the vehicle 100. For example, the vehicle 100 may include a plurality of in-vehicle speakers. The plurality of in-vehicle speakers may be distributed at different locations in the vehicle, so that users seated at various locations in the vehicle can have good audio listening experience. In some embodiments, the vehicle 100 may further include an out-of-vehicle speaker. In some embodiments, the vehicle 100 may be further externally connected to a sound generation device (for example, a Bluetooth headset), and play an audio via the externally connected sound generation device.

In some embodiments, a memory in the vehicle 100 may be configured to store a binding relationship between the vehicle and a user.

It may be understood that the structure shown in this embodiment of this application does not constitute a specific limitation on the vehicle system. The vehicle 100 may include more or fewer components than those shown in the figure, or a combination of a part of the components, or splits from a part of the components, or an arrangement of different components. The components shown in the figure may be implemented by hardware, software, or a combination of the software and the hardware.

For example, the vehicle 100 may further include a separate memory, a battery, a vehicle lamp, a windshield wiper, a dashboard, a vehicle-mounted terminal (transmission control unit, TCU), an auxiliary control unit (auxiliary control unit, ACU), a passive entry passive start (passive entry passive start, PEPS) system, an on board unit (on board unit, OBU), a body control module (body control module, BCM), and a charging interface.

In this application, the memory of the vehicle 100 may be configured to store a configuration file of an occupant zone. The configuration file may be used to determine a binding relationship between a screen of the vehicle 100 and an occupant zone.

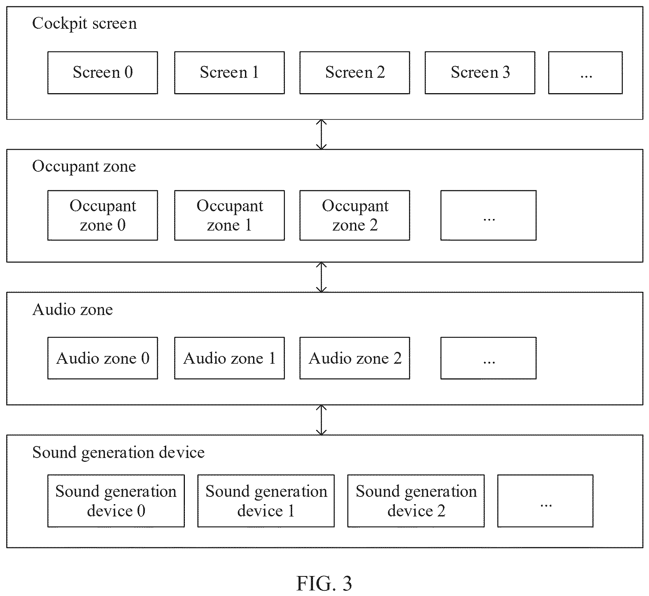

**FIG. 3** **is a diagram of an example of a cockpit audio zoning architecture according to this application.**

As shown in FIG. 3, an audio system part in a cockpit system may be logically divided into four layers: a cockpit screen, an occupant zone, an audio zone, and a sound generation device.

The cockpit screen may include the screens in the vehicle 100, for example, a screen 0, a screen 1, a screen 2, and a screen 3. The screen 0 may be a central control screen. The screen 2 may be an instrument cluster. The screen 3 may be a front-passenger screen. The screen 4 may be a rear screen.

For the occupant zone and the audio zone, refer to the descriptions of the foregoing embodiments. For example, the occupant zone may include an occupant zone 0, an occupant zone 1, and an occupant zone 2. The occupant zone 0 may be bound to the central control screen and the instrument cluster (namely, the screen 0 and the screen 1). The occupant zone 1 may be bound to the front-passenger screen (namely, the screen 2). The occupant zone 2 may be bound to the rear screen (namely, the screen 3). The audio zone may include an audio zone 0, an audio zone 1, an audio zone 2, and the like.

The occupant zone 0 may be associated with the audio zone 0. The occupant zone 1 may be associated with the audio zone 1. The occupant zone 2 may be associated with the audio zone 2. An association relationship between the occupant zone and the audio zone is not limited in embodiments of this application.

The sound generation device may include a sound generation device built in the vehicle 100 and an externally connected sound generation device, for example, a sound generation device 0, a sound generation device 1, and a sound generation device 2. The sound generation device 0 may be an in-vehicle speaker of the vehicle 100. The sound generation device 1 may be an externally connected headset 1. The sound generation device 2 may be an externally connected headset 2.

The audio zone 1 may be created when the sound generation device 1 is connected. Therefore, the sound generation device 1 may be associated with the audio zone 1. The audio zone 2 may be created when the sound generation device 2 is connected. Therefore, the sound generation device 2 may be associated with the audio zone 2.

In some embodiments, the sound generation device 1 is connected via the screen 2. The cockpit system may associate the audio zone 1 associated with the sound generation device 1 with the occupant zone 1 bound to the screen 2. The sound generation device 2 is connected via the screen 3. The cockpit system may associate the audio zone 2 associated with the sound generation device 2 with the occupant zone 2 bound to the screen 3.

When an application on the screen 0 needs to play an audio, the cockpit system may complete audio focus application of the application via the occupant zone 0 and the audio zone 0, and determine that the audio of the application needs to be routed to an audio channel of the sound generation device 0. In this way, the application on the screen 0 can play the audio via the sound generation device 0. Similarly, when an application on the screen 2 needs to play an audio, the cockpit system may complete audio focus application of the application via the occupant zone 1 and the audio zone 1, and determine that the audio of the application needs to be routed to an audio channel of the sound generation device 1. In this way, the application on the screen 2 can play the audio via the sound generation device 1.

In the foregoing cockpit audio zoning architecture, the cockpit screen may be bound to the occupant zone via a configuration file. The association relationship between the occupant zone and the audio zone and an association relationship between the audio zone and the sound generation device may be dynamically determined based on a connection or removal of the sound generation device.

The cockpit audio zoning architecture can support flexible configuration of an occupant zone to which a screen belongs and an audio route to a sound generation device, support dynamic creation and deletion of an audio zone, and further support seamless switching of an audio between sound generation devices in a screen migration scenario and a screen sharing scenario, without requiring a multimedia playing application to be adapted.

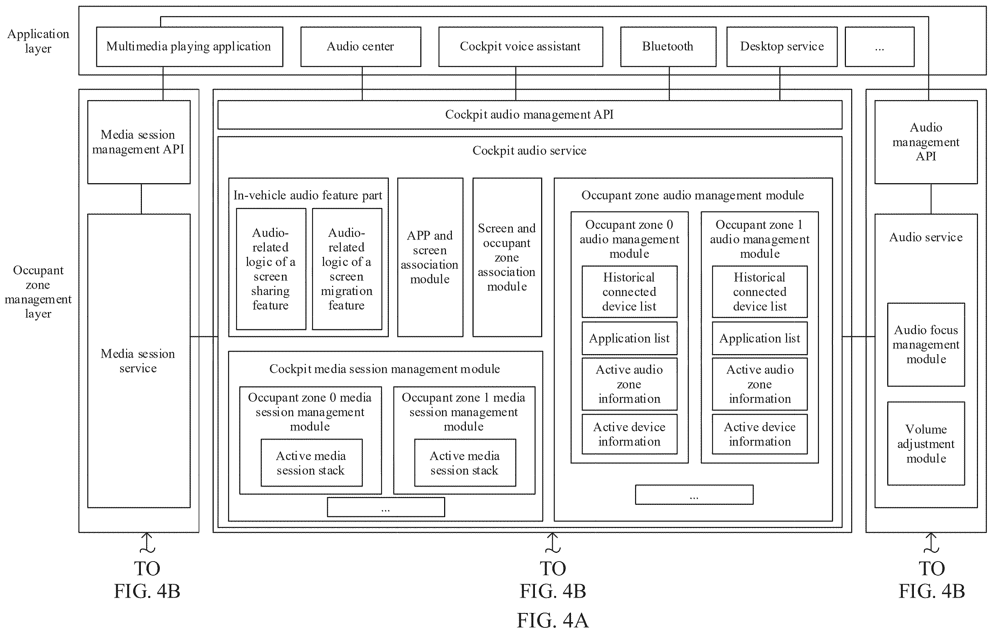

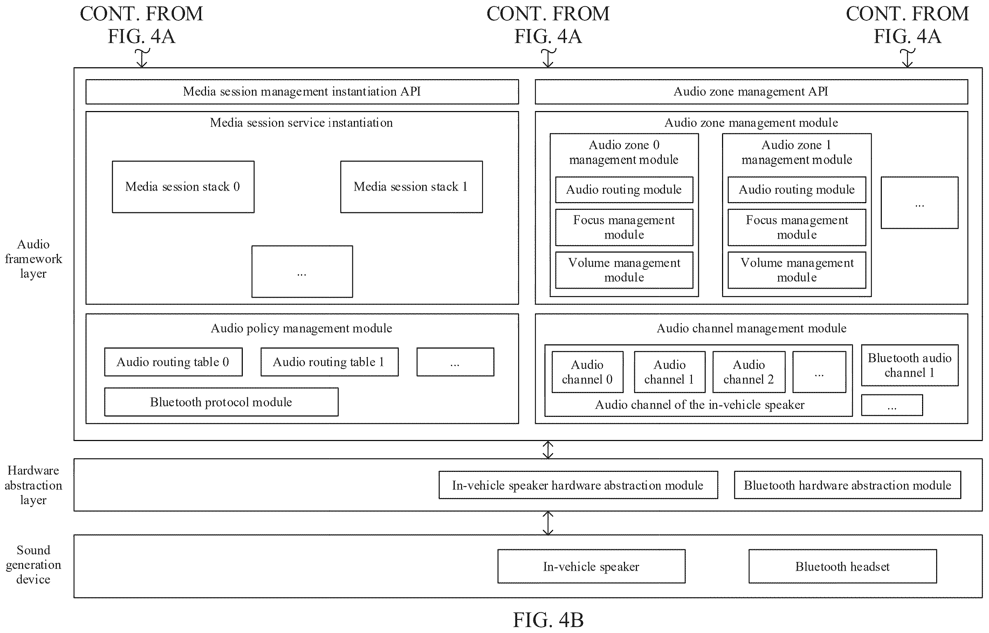

**FIG. 4**A and FIG. 4B **are a diagram of an example of an architecture of a cockpit system according to this application.**

As shown in FIG. 4A and FIG. 4B, the cockpit system may include an application layer, an occupant zone management layer, an audio framework (audio framework) layer, a hardware abstraction layer (hardware abstraction layer, HAL), and a sound generation device.

### 1. Application layer

The application layer may include one or more APPs, for example, a multimedia playing application, an audio center, a cockpit voice assistant, Bluetooth, and a desktop service. The multimedia playing application may be an APP used to play multimedia content (for example, an audio and/or a video). The multimedia playing application may include but is not limited to a music APP, a phone APP, a video APP, an audiobook APP, a radio APP, a navigation APP, and the like. The multimedia playing application may be a third-party application. The audio center, the cockpit voice assistant, the Bluetooth, and the desktop service may be system applications. A difference between the third-party application and the system application lies in whether global management and control can be performed on another application. The third-party application cannot perform global management and control on the another application. The system application can perform global management and control on the another application.

In some embodiments, the system applications are configured on all of a plurality of screens in the cockpit system. The system application on one screen may perform global management and control on another application on the screen. Third-party applications on different screens may not be exactly the same.

For example, the plurality of screens such as a central control screen, a front-passenger screen, and a rear screen may all include the audio center, the cockpit voice assistant, the Bluetooth, and the desktop service.

The desktop service may be used to display a home screen. The home screen may include an application icon of an application on the screen, a control used to adjust volume, a control used to adjust screen brightness, and the like. It may be understood that the screens such as the central control screen, the front-passenger screen, and the rear screen may all display home screens via the desktop service, to facilitate interaction between a user and the screens.

The Bluetooth may be used to connect a Bluetooth device, for example, a Bluetooth headset. The Bluetooth may provide a user interface used to perform a Bluetooth connection, to facilitate selection of the Bluetooth device by the user, and complete the connection and removal of the Bluetooth device. It may be understood that, if a screen receives a user operation of connecting the Bluetooth headset by the user, the Bluetooth headset may be bound to the screen after being connected to the cockpit system. The screens such as the central control screen, the front-passenger screen, and the rear screen may all provide a Bluetooth connection service via the Bluetooth. In this way, the screens such as the central control screen, the front-passenger screen, and the rear screen may all be bound to the Bluetooth headset.

The cockpit voice assistant may be used to perform voice interaction with the user, and identify and execute a voice instruction of the user. For example, the user may use the cockpit voice assistant to start a music APP to play music, or start a navigation APP to perform navigation. In some embodiments, the cockpit voice assistant may display, on the screen, text content of voice interaction between the cockpit voice assistant and the user.

The audio center may be used to display a multimedia playlist on the screen. The multimedia playlist may include information about multimedia content that is being played on the screen, and/or information about multimedia content that has been played. In some embodiments, the multimedia playlist may further include a control used to control playing of the multimedia content. In this way, the user can control (for example, pause playing, or switch playing content) multimedia content on a screen via an audio center on the screen. The screens such as the central control screen, the front-passenger screen, and the rear screen may display multimedia playlists on the screens via the audio centers.

In some embodiments, an audio center on a screen may obtain a media session of an application on the screen, and then determine content in a multimedia playlist based on the media session. The audio center may also be referred to as a media center or the like.

In some embodiments, an audio center on a screen may further obtain a media session in a media session stack associated with an occupant zone in which the screen is located, and then determine content in a multimedia playlist based on the media session.

The cockpit system may further include more or fewer applications. This is not limited in embodiments of this application.

### 2. Occupant zone management layer

The occupant zone management layer may include a media session management API (Media Session Manager API), a media session service (Media Session Service), an audio management API (Audio Manager API), an audio service (Audio Service), a cockpit audio management API (Car Audio Manager API), and a cockpit audio service (Car Audio Service). The media session management API, the media session service, the audio management API, and the audio service may be native modules in an existing cockpit system (for example, a cockpit system based on an AOSP). The cockpit audio management API and the cockpit audio service may be modules that are added to the cockpit system in this application and that are used to perform unified management on an audio focus, volume, an audio route, and a media session. Both the media session service and the audio service may communicate with the cockpit audio service.

In the cockpit system of this application, the multimedia playing application may not need to be adapted or modified, may still invoke the media session service via the media session management API based on original invocation logic, to manage a media session, and may invoke the audio service via the audio management API to manage one or more of an audio focus, volume, and an audio route. When the media session service receives information about media session management performed by the multimedia playing application, the media session service may indicate, based on the information, the cockpit audio service to manage the media session of the multimedia playing application. For example, the information about media session management may include but is not limited to information about creating the media session, information about deleting the media session, and information about multimedia content that is being played. When the audio service receives information about audio management performed by the multimedia playing application, the audio service may indicate, based on the information, the cockpit audio service to manage the audio focus, and/or the volume, and/or the audio route in the multimedia playing application. The information about audio management may include but is not limited to information about applying for the audio focus, information about abandoning the audio focus, information about adjusting the volume, information about adjusting the audio route, and the like.

A system application (for example, the audio center, the cockpit voice assistant, the Bluetooth, or the desktop service) on each screen may invoke the cockpit audio service via the cockpit audio management API, to implement unified management on the audio focus, the volume, and the audio route.

The cockpit audio service may include an in-vehicle audio feature part, an APP and screen association module, a screen and occupant zone association module, an occupant zone audio management module, and a cockpit media session management module.

The in-vehicle audio feature part may include audio-related logic of a screen sharing feature and audio-related logic of a screen migration feature. The screen sharing feature may mean sharing multimedia content played on one screen to one or more other screens. For example, the front-passenger screen is playing a video A of the video APP. In response to an operation of sharing the video A to the central control screen and the rear screen, the cockpit system may also play the video A on the central control screen and the rear screen. In this way, the front-passenger screen, the central control screen, and the rear screen all play the video A. The audio-related logic of the screen sharing feature may indicate logic of transferring an audio between sound generation devices in a screen sharing scenario. For example, the audio-related logic of the screen sharing feature may include but is not limited to: When multimedia content played on one screen is shared to screens bound to all occupant zones, an audio in the multimedia content is migrated to an in-vehicle speaker, and is played by the in-vehicle speaker. The audio-related logic of the screen sharing feature is merely an example for description in this application, and should not constitute a limitation on this application.

The screen migration feature may mean migrating multimedia content played on one screen to another screen. For example, the central control screen is playing a video A of the video APP. In response to an operation of migrating the video A to the front-passenger screen, the cockpit system may close the video A on the central control screen, and play the video A on the front-passenger screen. In this way, a playing window of the video A is migrated from the central control screen to the front-passenger screen. The audio-related logic of the screen migration feature may indicate logic of transferring an audio between sound generation devices in a screen migration scenario. For example, the audio-related logic of the screen migration feature may include but is not limited to: When multimedia content played on one screen is migrated to another screen, an audio in the multimedia content is migrated, to a sound generation device corresponding to an audio associated with an occupant zone bound to the another screen, from a sound generation device corresponding to an audio associated with an occupant zone bound to the screen. The audio-related logic of the screen migration feature is merely an example for description in this application, and should not constitute a limitation on this application.

The APP and screen association module includes a screen APP list. The screen APP list may record information about an APP configured on each screen in the cockpit system. The APP configured on each screen in the cockpit system may be independent. The APP can be independently installed on each screen. In response to an operation that is performed on a screen and that is used to install an APP, the cockpit system may configure the APP on the screen after downloading and installing the APP. An application icon of the APP may be displayed on a home screen on the screen, so that the user uses the APP. The APP may be referred to as an APP installed on the screen. However, a home screen on another screen on which the APP is not installed may not include the application icon of the APP. The APP and screen association module may manage the screen APP list based on a change of the APP on the screen. The cockpit audio service may determine, based on the screen APP list, APPs included in each screen.

The screen and occupant zone association module may include a configuration file of the occupant zone. The configuration file of the occupant zone may record a binding relationship between the screen and the occupant zone. The cockpit audio service may read the configuration file, create the occupant zone based on the configuration file, and bind the screen to the occupant zone.

The occupant zone audio management module may be configured to manage an audio of an application corresponding to the occupant zone. The occupant zone audio management module may obtain the configuration file of the occupant zone from the screen and occupant zone association module, to determine a quantity of occupant zones in the cockpit system and the binding relationship between the occupant zone and the screen. The occupant zone audio management module may create the occupant zone and bind the screen to the occupant zone.

In some embodiments, the occupant zone audio management module may include an occupant zone audio management module corresponding to each occupant zone. An occupant zone audio management module corresponding to an occupant zone may be configured to manage an audio of an application corresponding to the occupant zone.

For example, the occupant zone audio management module may include an occupant zone 0 audio management module and an occupant zone 1 audio management module. The occupant zone 0 audio management module may be configured to manage an audio of an application corresponding to an occupant zone 0. The occupant zone 1 audio management module may be configured to manage an audio of an application corresponding to an occupant zone 1. For example, the occupant zone 0 may be an occupant zone bound to the central control screen, an instrument cluster, and a HUD. The occupant zone 1 may be an occupant zone bound to the front-passenger screen. Without being limited to the occupant zone audio management modules corresponding to the occupant zone 0 and the occupant zone 1, and the occupant zone audio management module may further include more or fewer occupant zone audio management modules corresponding to the occupant zones.

The occupant zone 0 audio management module includes a historical connected device list (historical Device List), an application list (application List), active audio zone (active Zone) information, and active device (active Device) information. The historical connected device list in the occupant zone 0 audio management module may include information about a sound generation device that has been bound to a screen in the occupant zone 0. The occupant zone 0 audio management module may update the historical connected device list in the occupant zone 0 audio management module based on a change of the sound generation device bound to the screen in the occupant zone 0. The information about the sound generation device in the historical connected device list may include but is not limited to identification information of the sound generation device, volume configuration information of the sound generation device, and the like. The volume configuration information of the sound generation device may indicate a volume value set on the sound generation device. The application list in the occupant zone 0 audio management module may include information about an application that is running in a foreground or a background on the screen bound to the occupant zone 0. Applications in the application list in the occupant zone 0 audio management module may include an application that is installed on the screen in the occupant zone 0 and that is running on the screen in the occupant zone 0, and an application that is installed on a screen in another occupant zone and that is transferred to the screen in the occupant zone 0 for running. The application in the application list in the occupant zone 0 audio management module may be the application corresponding to the occupant zone 0. The occupant zone 0 audio management module may update the application list in the occupant zone 0 audio management module based on a change of an application running on the screen in the occupant zone 0. In some embodiments, the occupant zone 0 audio management module may obtain activity (activity) information of the application from an activity manager (activity manager service, AMS), to determine the application running on the screen in the occupant zone 0. An activity is an application component, and may provide an interactive window for the user to perform an operation, for example, playing an audio, taking a photo, or making a call. The active audio zone information in the occupant zone 0 audio management module may indicate an audio zone currently associated with the occupant zone 0. The occupant zone 0 audio management module may update the active audio zone information in the occupant zone 0 audio management module based on a change of the audio zone associated with the occupant zone 0. The active device information in the occupant zone 0 may indicate a sound generation device currently bound to the screen in the occupant zone 0. The occupant zone 0 may update the active audio zone information in the occupant zone 0 based on a change of the sound generation device bound to the screen in the occupant zone 0.

The occupant zone 1 audio management module also includes a historical connected device list, an application list, active audio zone information, and active device information. For details, refer to the foregoing descriptions of the occupant zone 0 audio management module. Details are not described herein again.

The cockpit media session management module may be configured to manage a media session of an application corresponding to each occupant zone. The cockpit media session management module may synchronize information about the application corresponding to the occupant zone from the occupant zone audio management module, to determine media sessions included in each occupant zone. In some embodiments, the cockpit media session management module may include a media session management module corresponding to each occupant zone. A media session management module corresponding to an occupant zone may be configured to manage a media session in the occupant zone (namely, a media session of an application corresponding to the occupant zone).

For example, the cockpit media session management module may include an occupant zone 0 media session management module and an occupant zone 1 media session management module. The occupant zone 0 media session management module may be configured to manage a media session in the occupant zone 0. The occupant zone 1 media session management module may be configured to manage a media session in the occupant zone 1. Without being limited to the media session management modules corresponding to the occupant zone 0 and the occupant zone 1, the cockpit media session management module may include more or fewer media session management modules corresponding to occupant zones.

The occupant zone 0 media session management module may include an active media session stack. The active media session stack in the occupant zone 0 media session management module may indicate a media session stack in which a media session of the application corresponding to the occupant zone 0 is currently located. The media session stack in which the media session of the application corresponding to the occupant zone 0 is located may change with a change of the audio zone associated with the occupant zone 0.

The occupant zone 1 media session management module may also include an active media session stack. For details, refer to the foregoing descriptions of the occupant zone 0 media session management module. Details are not described herein again.

For example, if audio zones associated with the occupant zone 1 and the occupant zone 0 are the same, a media session of the application corresponding to the occupant zone 1 may be in a same media session stack as the media session of the application corresponding to the occupant zone 0.

A media session stack in which a media session of an application corresponding to an occupant zone is located may be referred to as a media session stack associated with the occupant zone. In some embodiments, in addition to the media session of the application corresponding to the occupant zone, the media session stack associated with the occupant zone may further include a media session of an application corresponding to another occupant zone. For example, when the audio zones associated with the occupant zone 1 and the occupant zone 0 are the same, the media session stack 0 includes both the media session of the application corresponding to the occupant zone 0 and the media session of the application corresponding to the occupant zone 1.

In some embodiments, the occupant zone management layer may further include an occupant zone video management module. The occupant zone video management module may be configured to manage video playing content of the application corresponding to the occupant zone. Similar to the foregoing occupant zone audio management module, the occupant zone video management module may include a video management module corresponding to each occupant zone, for example, an occupant zone 0 video management module and an occupant zone 1 video management module. The occupant zone 0 video management module may be configured to manage video playing content corresponding to the occupant zone 0. The occupant zone 1 video management module may be configured to manage video playing content corresponding to the occupant zone 1. In a screen migration or screen sharing scenario, the occupant zone video management module may be responsible for transferring a video playing interface of an application from one screen to another screen.

### 3. Audio framework layer

The audio framework layer may include a media session management instantiation API (Media Session Manager Ex API), a media session service instantiation (Media Session Service Ex), an audio zone management API, an audio zone management module (Audio Zone Service), an audio policy management module (Audio Policy Manager), and an audio channel management module (Audio Flinger).

The audio zone management API may be used by each module and service at an occupant zone audio management module layer to invoke the audio zone management module to manage the audio zone.

The audio zone management module may be configured to manage the audio zone, for example, create a new audio zone and an audio zone management module corresponding to the new audio zone, delete an audio zone and an audio zone management module corresponding to the audio zone, and manage and control an audio focus, an audio route, and volume in the audio zone. In some embodiments, the audio zone management module may include an audio zone management module corresponding to each audio zone. An audio zone management module corresponding to an audio zone may be configured to manage the audio zone. The audio zone management module includes at least one audio zone management module corresponding to an audio zone: an audio zone management module corresponding to an audio zone associated with the in-vehicle speaker.

For example, the audio zone management module may include an audio zone 0 management module and an audio zone 1 management module. The audio zone 0 management module may be configured to manage an audio focus, an audio route, and volume in the audio zone 0. The audio zone 1 management module may be configured to manage an audio focus, an audio route, and volume in the audio zone 1. For example, the audio zone 0 may be associated with the occupant zone 0, and an associated sound generation device may be the in-vehicle speaker. The audio zone 1 may be associated with the occupant zone 1, and an associated sound generation device may be an externally connected headset 1. Without being limited to the audio zone management modules corresponding to the audio zone 0 and the audio zone 1, the audio zone management module may further include more or fewer audio zone management modules corresponding to audio zones.

The audio zone 0 management module may include an audio routing module, a focus management module, and a volume management module. The audio routing module in the audio zone 0 management module may be configured to manage the audio route in the audio zone 0. The audio routing module may determine an audio routing policy of an audio of an application corresponding to an occupant zone associated with the audio zone 0. The audio of the application corresponding to the occupant zone associated with the audio zone 0 may be routed to an audio channel corresponding to the audio zone 0. The focus management module in the audio zone 0 management module may be configured to manage the audio focus in the audio zone 0. The application corresponding to the occupant zone associated with the audio zone 0 may compete for the audio focus in the audio zone 0. The audio zone 0 management module may include an audio focus stack, and update the audio focus stack based on information about the audio focus applied for by the application corresponding to the occupant zone associated with the audio zone 0. The volume management module in the audio zone 0 management module may be configured to manage the volume in the audio zone 0. The audio zone 0 management module may adjust, according to a volume adjustment instruction, volume of the sound generation device associated with the audio zone 0.

The audio zone 1 management module may also include an audio routing module, a focus management module, and a volume management module. For details, refer to the foregoing descriptions of the audio zone 0 management module. Details are not described herein again.

The media session management instantiation API may be used by each module and service at the occupant zone audio management module layer to invoke the media session service instantiation. For example, the cockpit media session management module may invoke, via the media session management instantiation API, the media session service instantiation to create a media session stack, delete the media session stack, and update the media session stack.

The media session service instantiation may include one or more media session stacks. A quantity of media session stacks may be consistent with a quantity of audio zones.

For example, the occupant zone 0 media session management module may invoke the media session service instantiation to create a media session stack 0. The media session stack 0 may include the media session of the application corresponding to the occupant zone 0. When the audio zones associated with the occupant zone 1 and the occupant zone 0 are different, the occupant zone 1 media session management module may invoke the media session service instantiation to create a media session stack 1. The media session stack 1 may include the media session of the application corresponding to the occupant zone 1. In some embodiments, when the audio zone associated with the occupant zone 1 changes to the audio zone associated with the occupant zone 0, the occupant zone 1 media session management module may invoke the media session service instantiation to migrate a media session in the media session stack 1 to the media session stack 0, and delete the media session stack 0.

Without being limited to the media session stack 0 and the media session stack 1, the media session service instantiation may further include more or fewer media session stacks.

The audio policy management module may be configured to manage an audio routing policy. The audio routing policy management module may create an audio routing table, delete the routing table, and update the audio routing table. Each audio zone may be associated with one audio routing table. An audio routing table associated with an audio zone may record an audio routing policy of an audio of an application corresponding to an occupant zone associated with the audio zone. The audio routing table may be referred to as an audio policy mix.

For example, the audio zone 0 management module may indicate the audio policy management module to create an audio routing table 0. The audio zone 1 management module may indicate the audio policy management module to create an audio routing table 1. The audio routing table 0 may include information about the application corresponding to the occupant zone associated with the audio zone 0. All audios of applications in the audio routing table 0 may be routed to an audio channel corresponding to the audio zone 0, that is, played by the sound generation device associated with the audio zone 0. Similarly, the audio routing table 1 may include information about an application corresponding to an occupant zone associated with the audio zone 1. All audios of applications in the audio routing table 1 may be routed to an audio channel corresponding to the audio zone 1, that is, played by a sound generation device associated with the audio zone 1.

When an occupant zone associated with an audio zone changes, an audio zone management module corresponding to the audio zone may indicate the audio policy management module to update an audio routing table associated with the audio zone.

In some embodiments, the audio policy management module may further include a Bluetooth protocol module. The Bluetooth protocol module may be configured to indicate a parameter and a procedure that are required by a Bluetooth-based audio channel to transmit an audio channel. For example, the Bluetooth protocol module may include a Bluetooth audio transmission model agreement (advanced audio distribution profile, A2DP). The A2DP specifies protocol stack software for transmitting high-quality audio file data in a manner of a Bluetooth asynchronous transmission channel and a usage method. Based on the A2DP, a high-quality audio can be transmitted through Bluetooth sound generation, so that an audio in the cockpit system can be listened to by using a Bluetooth headset.

The audio channel management module may be configured to manage an audio channel in the cockpit system. The audio channel management module may include an audio channel of the in-vehicle speaker. There may be a plurality of audio channels of the in-vehicle speaker, for example, an audio channel 0 (Mix 0), an audio channel 1 (Mix 1), and an audio channel 2 (Mix 2). There may be a plurality of in-vehicle speakers of a cockpit, to perform different processing on different types of audios to generate different playing sound effect. For example, audio types may include a media sound, a call sound, and an alarm sound. Different types of audios may be transmitted and played via different audio channels of the in-vehicle speaker.

In some embodiments, when the cockpit system is externally connected to a sound generation device, the audio channel management module may create an audio channel of the sound generation device. When the externally connected sound generation device is removed, the audio channel management module may delete the audio channel of the sound generation device. For example, when the cockpit system is externally connected to a Bluetooth headset 1, the audio channel management module may create a Bluetooth audio channel 1 (Bluetooth Mix 1) of the Bluetooth headset 1. When the Bluetooth headset 1 is disconnected from the cockpit system, the audio channel management module may delete the Bluetooth audio channel 1.

In some embodiments, the occupant zone audio management module may allocate the audio channel of the in-vehicle speaker to the audio zone 0. In this way, the audio zone 0 management module may determine that the audio channel corresponding to the audio zone 0 is the audio channel of the in-vehicle speaker. When the Bluetooth headset 1 is connected to the cockpit system via the screen bound to the occupant zone 1, the occupant zone audio management module may allocate the Bluetooth audio channel 1 to the audio zone 1. In this way, the audio zone 1 management module may determine that the audio channel corresponding to the audio zone 1 is the Bluetooth audio channel 1.

Without being limited to the audio channel of the in-vehicle speaker and the Bluetooth audio channel 1, the audio channel management module may further include more or fewer audio channels.

### 4. Hardware abstraction layer and sound generation device

The hardware abstraction layer may be an interface layer located between a kernel of the cockpit system and a hardware circuit, and may be configured to abstract hardware. The hardware abstraction layer may include an in-vehicle speaker hardware abstraction module and a Bluetooth hardware abstraction module. The in-vehicle speaker abstraction module may be an interface between the cockpit system and the in-vehicle speaker. The cockpit system may control, via the in-vehicle speaker hardware abstraction module, the in-vehicle speaker to play an audio. The Bluetooth hardware abstraction module may be an interface between the cockpit system and the Bluetooth headset. The cockpit system may control, via the Bluetooth hardware abstraction module, the Bluetooth headset connected to the cockpit system to play an audio.

The sound generation device of the cockpit may include the in-vehicle speaker and the Bluetooth headset connected to the cockpit system. The sound generation device of the cockpit is not limited in this application. For example, the sound generation device of the cockpit may further include an out-of-vehicle speaker disposed outside the vehicle 100 and a wired headset connected to the cockpit system.

The cockpit system shown in FIG. 4A and FIG. 4B is merely an example for description in this application. Without being limited to the cockpit system shown in FIG. 4A and FIG. 4B, the cockpit system of the vehicle 100 may further include more or fewer modules than those shown in FIG. 4A and FIG. 4B, or a combination of a part of the software modules, or splits from a part of the software modules, or an arrangement of software modules at different locations.

In some embodiments, the vehicle 100 may include a plurality of processor chips and a plurality of cockpit systems. Different audio zones may be in different processor chips and cockpit systems. For example, the central control screen and the front-passenger screen are controlled by one processor chip and cockpit system. The rear screen is controlled by another processor chip and cockpit system. Both an occupant zone in which the central control screen and the front-passenger screen are located and an audio zone associated with the occupant zone may be in the cockpit system that controls the central control screen. Both an occupant zone in which the rear screen is located and an audio zone associated with the occupant zone may be in the cockpit system that controls the rear screen. Cockpit audio services in different cockpit systems may communicate with each other. In scenarios in which audio transfer is related, for example, screen migration and screen sharing, cockpit audio services in different cockpit systems may communicate with each other to migrate audio focus information, an audio route, and a media session, thereby implementing seamless switching of an audio between sound generation devices connected to the different cockpit systems.

For ease of understanding of the multi-audio-zone management solution in this application, in subsequent embodiments of this application, an example in which the vehicle 100 is configured with one cockpit system is specifically used for description.

### Dynamically create an audio zone when a sound generation device is externally connected.

In some embodiments, when the cockpit system is externally connected to no sound generation device, the cockpit system may include the audio zone associated with the in-vehicle speaker. All the occupant zones in the cockpit system may be associated with the audio zone associated with the in-vehicle speaker. When the cockpit system is externally connected to the sound generation device, the cockpit system may create a new audio zone, and associate an occupant zone in which a screen bound to the externally connected sound generation device is located with the newly created audio zone. In this way, the audio zone of the application corresponding to the occupant zone can be dynamically adjusted, so that audios of applications on different screens are separated and played via different sound generation devices.

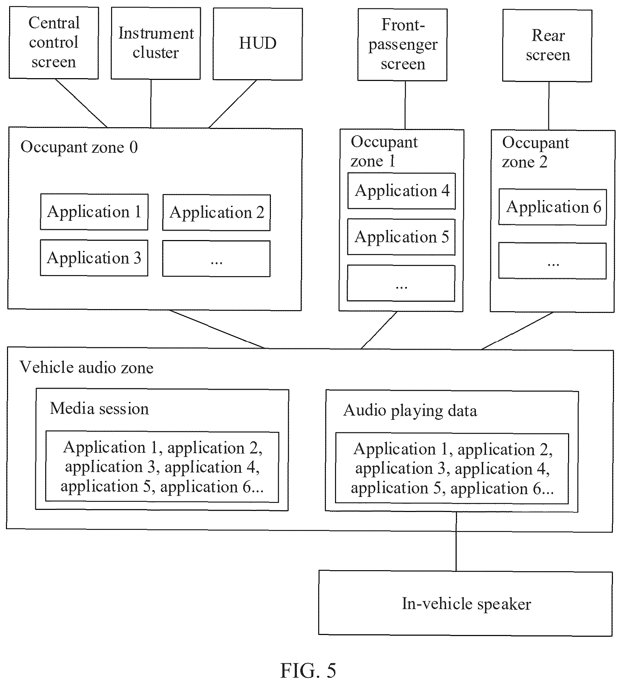

**FIG. 5** **is a diagram of an example of a cockpit audio zoning architecture when no sound generation device is externally connected according to this application.**

As shown in FIG. 5, a cockpit system includes an occupant zone 0, an occupant zone 1, and an occupant zone 2. A screen in the occupant zone 0 includes a central control screen, an instrument cluster, and a HUD. A screen in the occupant zone 1 includes a front-passenger screen, and a screen in the occupant zone 2 includes a rear screen. An application corresponding to the occupant zone 0 may be determined based on applications that are running in foregrounds or backgrounds on the central control screen, the instrument cluster, and the HUD. For example, the application corresponding to the occupant zone 0 may include an application 1, an application 2, and an application 3. An application corresponding to the occupant zone 1 may be determined based on an application that is running in a foreground or a background on the front-passenger screen. For example, the application corresponding to the occupant zone 1 may include an application 4 and an application 5. An application corresponding to the occupant zone 2 may be determined based on an application that is running in a foreground or a background on the rear screen. For example, the application corresponding to the occupant zone 2 may include an application 6.

When the cockpit system is externally connected to no sound generation device, the central control screen, the instrument cluster, the HUD, the front-passenger screen, and the rear screen may be all bound to an in-vehicle speaker. Therefore, the occupant zone 0 to the occupant zone 2 may be all associated with a vehicle audio zone. The vehicle audio zone is an audio zone associated with the in-vehicle speaker.

It can be learned from FIG. 5 that all the applications corresponding to the occupant zone 0 to the occupant zone 2 are set in the vehicle audio zone, and are played via the in-vehicle speaker. The applications corresponding to the occupant zone 0 to the occupant zone 2 compete for an audio focus in the vehicle audio zone. An application that obtains the audio focus through competition in the vehicle audio zone may play an audio by using the in-vehicle speaker. For example, when the application 1 on the central control screen holds the audio focus, the in-vehicle speaker may obtain audio playing data of the application 1, and play an audio of the application 1 based on the audio playing data of the application 1. When the application 4 on the front-passenger screen preempts the audio focus, the in-vehicle speaker may pause playing of the audio of the application 1, obtain audio playing data of the application 4, and play an audio of the application 4. Further, when the application 6 on the rear screen preempts the audio focus of the application 4, the in-vehicle speaker may pause playing of the audio of the application 4, obtain audio playing data of the application 6, and play an audio of the application 6.

In addition, media sessions of the applications corresponding to the occupant zone 0 to the occupant zone 2 may be all placed in one media session stack. Audio centers on the screens in the occupant zone 0 to the occupant zone 2 may all obtain information about the media sessions in the media session stack. The audio centers on these screens may display multimedia playlists based on the information about the media sessions. In this way, any screen in the occupant zone 1 and the occupant zone 2 may obtain the information about the media sessions of the applications corresponding to all the occupant zones. The multimedia playlists displayed on the screens with the audio centers in the occupant zone 1 and the occupant zone 2 may be the same.

In some embodiments, the multimedia playlist may include a control used to control playing of multimedia content. Multimedia playlists displayed in the audio centers on all the screens are the same. Therefore, a user may view and control, on the central control screen, multimedia content played on another screen (for example, the front-passenger screen or the rear screen), or may view and control, on the front-passenger screen, multimedia content played on another screen (for example, the central control screen or the rear screen), or may view and control, on the rear screen, multimedia content played on another screen (for example, the central control screen or the front-passenger screen).

It can be learned from the foregoing embodiment that, when the cockpit system is externally connected to no sound generation device, all the screens in a cockpit share an audio resource. Only one of the applications on all the screens can obtain the audio focus in a same time period, so that an audio is played by using the in-vehicle speaker. Screens such as the front-passenger screen and the rear screen may be equivalent to extended screens of the central control screen.

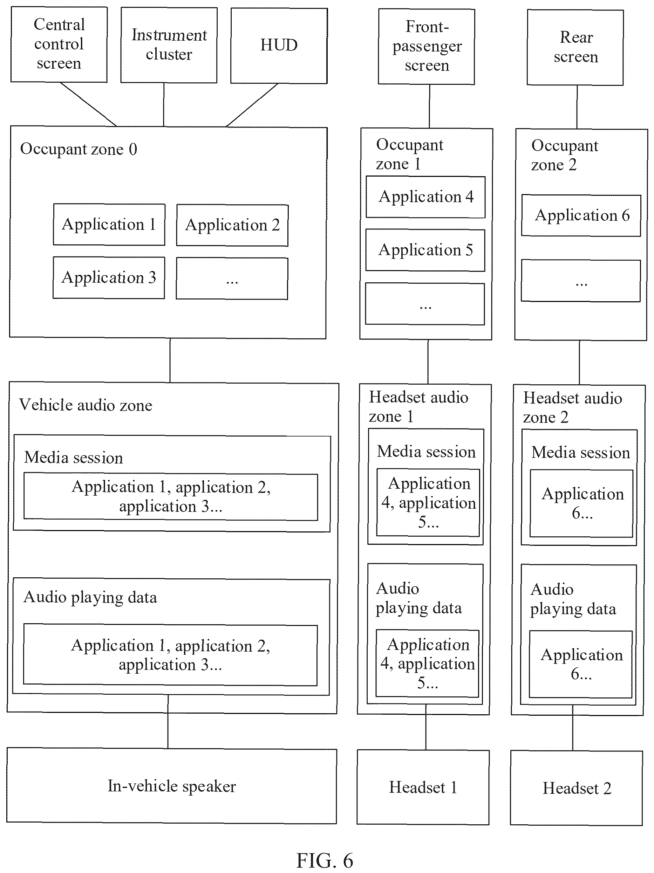

**FIG. 6** **is a diagram of an example of a cockpit audio zoning architecture when a headset 1 and a headset 2 are externally connected according to this application.**

As shown in FIG. 6, a cockpit system includes an occupant zone 0, an occupant zone 1, and an occupant zone 2. For screens and corresponding applications in the occupant zone 0 to the occupant zone 2, refer to the descriptions of the embodiment in FIG. 5.

In some embodiments, the headset 1 is connected to the cockpit system via the front-passenger screen. The front-passenger screen receives a user operation used to connect the headset 1. After the headset 1 is connected to the cockpit system, the cockpit system may bind the front-passenger screen to the headset 1. The front-passenger screen is a screen in the occupant zone 1. Therefore, the cockpit system may create a headset audio zone 1, associate the headset audio zone 1 with the occupant zone 1, and allocate an audio channel of the headset 1 to the headset audio zone 1. To be specific, a sound generation device associated with the audio zone 1 is the headset 1.

The headset 2 is connected to the cockpit system via the rear screen. The rear screen receives a user operation used to connect the headset 2. After the headset 2 is connected to the cockpit system, the cockpit system may bind the rear screen to the headset 2. The rear screen is a screen in the occupant zone 2. Therefore, the cockpit system may create a headset audio zone 2, associate the headset audio zone 2 with the occupant zone 2, and allocate an audio channel of the headset 2 to the headset audio zone 2. To be specific, a sound generation device associated with the audio zone 2 is the headset 2.

An audio zone associated with the occupant zone 0 is still a vehicle audio zone. The vehicle audio zone is an audio zone associated with an in-vehicle speaker.

It can be learned from FIG. 6 that the application (for example, the application 1, the application 2, or the application 3) corresponding to the occupant zone 0 is set in the vehicle audio zone, and an audio may be played via the in-vehicle speaker. The application (for example, the application 4 or the application 5) corresponding to the occupant zone 1 is set in the headset audio zone 1, and the headset plays an audio via the headset 1. The application (for example, the application 6) corresponding to the occupant zone 2 is set in the headset audio zone 2, and an audio may be played via the headset 2. The applications respectively corresponding to the occupant zone 0 to the occupant zone 2 may compete for audio focuses in the audio zones associated with the occupant zones, and after obtaining the audio focuses through competition in the audio zones, play audios by using the sound generation devices associated with the audio zones. For example, when the application 1 on the central control screen holds the audio focus in the vehicle audio zone, the in-vehicle speaker may obtain audio playing data of the application 1, and play an audio of the application 1. When the application 4 on the front-passenger screen holds the audio focus in the headset audio zone 1, the headset 1 may obtain audio playing data of the application 4, and play an audio of the application 4. Playing the audio of the application 1 by the in-vehicle speaker and playing the audio of the application 4 by the headset 1 may be independent of each other and do not interfere with each other. In this way, a driver listening to the audio of the application 1 via the in-vehicle speaker and a user seated on a front passenger seat and listening to the audio of the application 4 via the headset 1 may not affect each other. Further, when the application 2 on the central control screen preempts the audio focus of the application 1 in the vehicle audio zone, the in-vehicle speaker may pause playing of the audio of the application 1, obtain audio playing data of the application 2, and play an audio of the application 2. A change of the audio played by the in-vehicle speaker does not affect the audio played by the headset 1. The headset 1 may still play the audio of the application 4.

Volume of the in-vehicle speaker, the headset 1, and the headset 2 may also be independently controlled. For example, in response to a volume adjustment operation performed on the central control screen, the cockpit system may adjust the volume of the in-vehicle speaker. In response to a volume adjustment operation performed on the front-passenger screen, the cockpit system may adjust the volume of the headset 1. In response to a volume adjustment operation performed on the rear screen, the cockpit system may adjust the volume of the headset 2.

In addition, media sessions of the applications corresponding to the occupant zone 0 to the occupant zone 2 may be respectively placed in different media session stacks. A media session stack associated with the occupant zone 0 may include only a media session of the application corresponding to the occupant zone 0. A media session stack associated with the occupant zone 1 may include only a media session of the application corresponding to the occupant zone 1. A media session stack associated with the occupant zone 2 may include only a media session of the application corresponding to the occupant zone 2. Multimedia playlists displayed in audio centers on screens in different occupant zones based on media session stacks associated with the corresponding occupant zones may be different. For example, a multimedia playlist displayed in an audio center on the central control screen includes multimedia content information of the application corresponding to the occupant zone 0, but does not include multimedia content information of the applications corresponding to the occupant zone 1 and the occupant zone 2. A multimedia playlist displayed in an audio center on the front-passenger screen includes the multimedia content information of the application corresponding to the occupant zone 1, but does not include the multimedia content information of the applications corresponding to the occupant zone 0 and the occupant zone 2. A user may separately view and control, on a screen in each occupant zone, multimedia content of an application corresponding to the occupant zone.

It can be learned from the foregoing embodiment that an audio zone in the cockpit system may change with a dynamic change of a sound generation device externally connected to the cockpit system. As the audio zone associated with an occupant zone changes, an application corresponding to the occupant zone may also be dynamically set to an audio zone associated with the occupant zone after the audio zone changes. The user may externally connect the sound generation device in the cockpit system to separate audios played by different applications. In this way, different users can externally connect different sound generation devices to screens in different occupant zones, and then listen to audios that the users want to listen to by using the different sound generation devices without affecting each other.

The following describes a method for creating an audio zone when a sound generation device is externally connected provided in embodiments of this application.

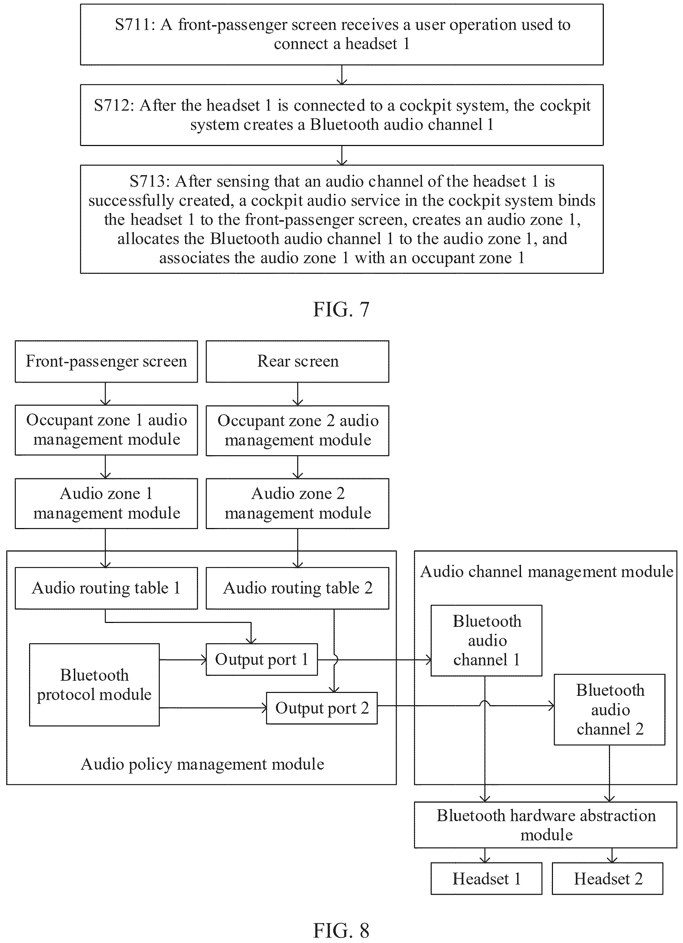

**FIG. 7** **is a flowchart of an example of an audio zone creation method according to this application.**

Herein, an example in which a cockpit system is connected to a headset 1 via a front-passenger screen is used for description. The headset 1 may be a Bluetooth headset.

As shown in FIG. 7, the method may include steps S711 to S713.

S711: The front-passenger screen receives a user operation used to connect the headset 1.

The user operation of connecting the headset 1 may include an operation of selecting the headset 1 on the front-passenger screen to establish a Bluetooth connection. The user operation of connecting the headset 1 is not limited in embodiments of this application.

S712: After the headset 1 is connected to the cockpit system, the cockpit system creates a Bluetooth audio channel 1.

That the headset 1 is connected to the cockpit system may indicate that the headset 1 and the cockpit system have completed a Bluetooth pairing connection. A manner of the Bluetooth pairing connection is not specifically limited in embodiments of this application.

The Bluetooth audio channel 1 may be used to transmit an audio stream that needs to be played to the headset 1, so that the headset 1 plays an audio. The Bluetooth audio channel 1 may be an audio channel associated with the headset 1.

S713: After sensing that an audio channel of the headset 1 is successfully created, a cockpit audio service in the cockpit system binds the headset 1 to the front-passenger screen, creates an audio zone 1, allocates the Bluetooth audio channel 1 to the audio zone 1, and associates the audio zone 1 with an occupant zone 1.

For the cockpit audio service, refer to the descriptions of the embodiment in FIG. 4A and FIG. 4B. Because the headset 1 is connected to the cockpit system via the front-passenger screen, the cockpit audio service may bind the headset 1 to the front-passenger screen. The cockpit audio service may invoke an audio zone management module to create the audio zone 1, allocate the Bluetooth audio channel 1 to the audio zone 1, and associate the audio zone 1 with the occupant zone 1 in which the front-passenger screen is located. In this way, an application corresponding to the occupant zone 1 associated with the audio zone 1 may be routed to the audio channel corresponding to the audio zone 1.

In some embodiments, when the headset 1 has been connected to the cockpit system via the front-passenger screen, the headset 1 may actively establish the Bluetooth connection to the cockpit system when being connected to the cockpit system again, and a user does not need to perform the user operation of connecting the headset 1. After the headset 1 is connected to the cockpit system again, the cockpit system may still bind the headset 1 to the front-passenger screen. In other words, when the headset 1 is connected to the cockpit system for the first time via the front-passenger screen, the headset 1 may be still actively connected to the cockpit system subsequently by default via the front-passenger screen.

**FIG. 8** **is a diagram of an example of externally connecting a sound generation device to a cockpit system.**

Herein, an example in which the cockpit system is connected to a headset 1 via a front-passenger screen and is connected to a headset 2 via a rear screen is used for description. Both the headset 1 and the headset 2 may be Bluetooth headsets.

As shown in FIG. 8, when the headset 1 is connected to the cockpit system, a Bluetooth protocol module in an audio policy management module may search for a Bluetooth audio protocol that adapts to the headset 1 and according to which audio data can be transmitted to the headset 1. The Bluetooth protocol module may enable an output port 1 according to a found Bluetooth audio protocol. The output port 1 may be used to send, to an audio channel management module, data such as a parameter and a procedure that are used to establish and transmit an audio stream. The audio policy management module may indicate the audio channel management module to create an audio channel. The audio channel management module may invoke a Bluetooth hardware abstraction module to enable a port of a Bluetooth audio channel 1, to complete creation of the Bluetooth audio channel 1. In this way, the Bluetooth audio channel 1 can be connected to the headset 1 via the Bluetooth hardware abstraction module.

Similarly, when the headset 2 is connected to the cockpit system, the Bluetooth protocol module may search for a Bluetooth audio protocol that adapts to the headset 2 and according to which audio data can be transmitted to the headset 2. The Bluetooth protocol module may enable an output port 2 according to a found Bluetooth audio protocol, and indicate, via the output port 2, the audio channel management module to create an audio channel. The audio channel management module may invoke the Bluetooth hardware abstraction module to enable a port of a Bluetooth audio channel 2, to complete creation of the Bluetooth audio channel 2. In this way, the Bluetooth audio channel 2 can be connected to the headset 2 via the Bluetooth hardware abstraction module.

After the headset 1 is bound to the front-passenger screen, and the Bluetooth audio channel 1 of the headset 1 is created, an occupant zone 1 audio management module corresponding to the front-passenger screen may indicate an audio zone management module to create an audio zone 1 management module corresponding to an audio zone 1, and allocate the Bluetooth audio channel 1 to the audio zone 1. Then, the audio zone 1 management module may indicate the audio policy management module to create an audio routing table 1, and store, in the audio routing table 1 based on an application corresponding to an occupant zone 1, information about the application corresponding to the occupant zone 1 and information about the Bluetooth audio channel 1 corresponding to the audio zone 1. Because the Bluetooth audio channel 1 is allocated to the audio zone 1, the audio routing table 1 may point to the Bluetooth audio channel 1. This may indicate that an audio of an application recorded in the audio routing table 1 may be routed to the Bluetooth application channel 1, and played by the headset 1.

Similarly, after the headset 2 is bound to the front-passenger screen, and a Bluetooth audio channel 2 of the headset 2 is created, an occupant zone 2 audio management module corresponding to the front-passenger screen may indicate the audio zone management module to create an audio zone 2 management module corresponding to an audio zone 2, and allocate the Bluetooth audio channel 2 to the audio zone 2. Then, the audio zone 2 management module may indicate the audio policy management module to create an audio routing table 2, and store, in the audio routing table 2 based on an application corresponding to an occupant zone 2, information about the application corresponding to the occupant zone 2 and information about the Bluetooth audio channel 2 corresponding to the audio zone 2. Because the Bluetooth audio channel 2 is allocated to the audio zone 2, the audio routing table 2 may point to the Bluetooth audio channel 2. This may indicate that an audio of an application recorded in the audio routing table 2 may be routed to the Bluetooth application channel 2, and played by the headset 2.

For a process of externally connecting another sound generation device to the cockpit system, refer to the foregoing process of externally connecting the headset 1 and the headset 2.

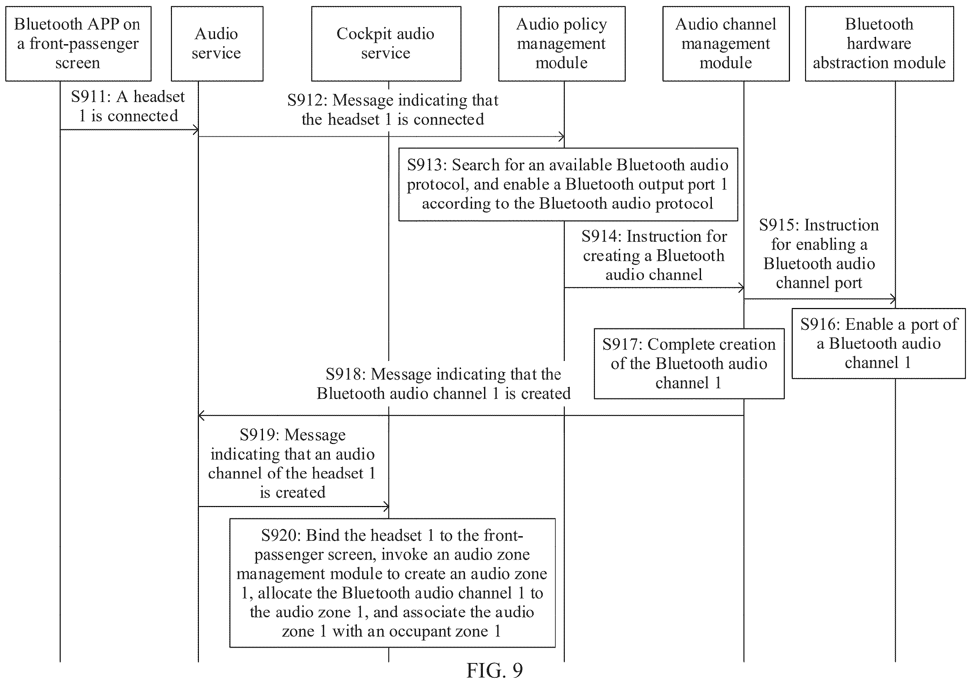

**FIG. 9** **is a flowchart of an example of an audio channel creation method.**

As shown in FIG. 9, the method may include steps S911 to S920.

S911: A Bluetooth APP on a front-passenger screen may notify an audio service that a headset 1 is connected.

In some embodiments, the headset 1 may complete a Bluetooth pairing connection via the Bluetooth APP on the front-passenger screen, to be connected to a cockpit system. When the headset 1 is connected to the cockpit system, the Bluetooth APP on the front-passenger screen may send, to the audio service, a message indicating that the headset 1 is connected.

The Bluetooth APP on the front-passenger screen may display a Bluetooth setting interface. Prompt information indicating that the headset 1 has been connected to the cockpit system may be displayed in the Bluetooth setting interface.

S912: The audio service may send, to an audio policy management module, a message indicating that the headset 1 is connected.

S913: The audio policy management module may search for an available Bluetooth audio protocol, and enable a Bluetooth output port 1 according to the Bluetooth audio protocol.

S914: The audio policy management module sends an instruction for creating a Bluetooth audio channel to an audio channel management module.

S915: The audio channel management module sends an instruction for enabling a Bluetooth audio channel port to a Bluetooth hardware abstraction module.

S916: The Bluetooth hardware abstraction module enables a port of a Bluetooth audio channel 1.

S917: The audio channel management module completes creation of the Bluetooth audio channel 1.

For steps S912 to S917, refer to the descriptions of the embodiment in FIG. 8.

S918: The audio channel management module sends, to the audio service, a message indicating that the Bluetooth audio channel 1 is created.

S919: The audio service sends, to a cockpit audio service, a message indicating that an audio channel of the headset 1 is created.

The message sent by the audio service to the cockpit audio service may include information about the audio channel of the headset 1 and information about a screen used by the headset 1 to be connected to the cockpit system. The information about the audio channel of the headset 1 may indicate that the audio channel of the headset 1 is a Bluetooth audio channel. The information about the screen used by the headset 1 to be connected to the cockpit system may indicate that the headset 1 is connected to the cockpit system via the front-passenger screen.

S920: The cockpit audio service binds the headset 1 to the front-passenger screen, invokes an audio zone management module to create an audio zone 1, allocates the Bluetooth audio channel 1 to the audio zone 1, and associates the audio zone 1 with an occupant zone 1.

The cockpit audio service may bind the headset 1 to the front-passenger screen based on the message sent by the audio service in step S919, invoke the audio zone management module to create the audio zone 1, allocate the Bluetooth audio channel 1 to the audio zone 1, and associate the audio zone 1 with the occupant zone 1.

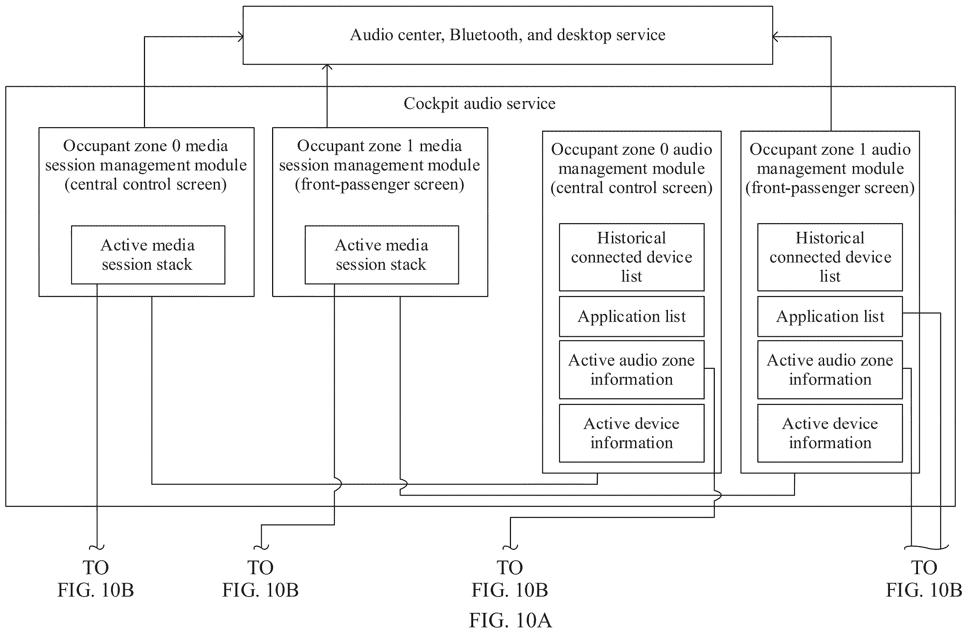

For a specific implementation of step S920, refer to subsequent descriptions in FIG. 10A to FIG. 11.

The method for creating the audio channel of the sound generation device when the cockpit system is externally connected to the sound generation device shown in FIG. 9 is merely an example for description in this application, and should not constitute a limitation on this application.

**FIG. 10A to FIG. 11** **are diagrams of an example of a specific process in which a cockpit system creates an audio zone.**

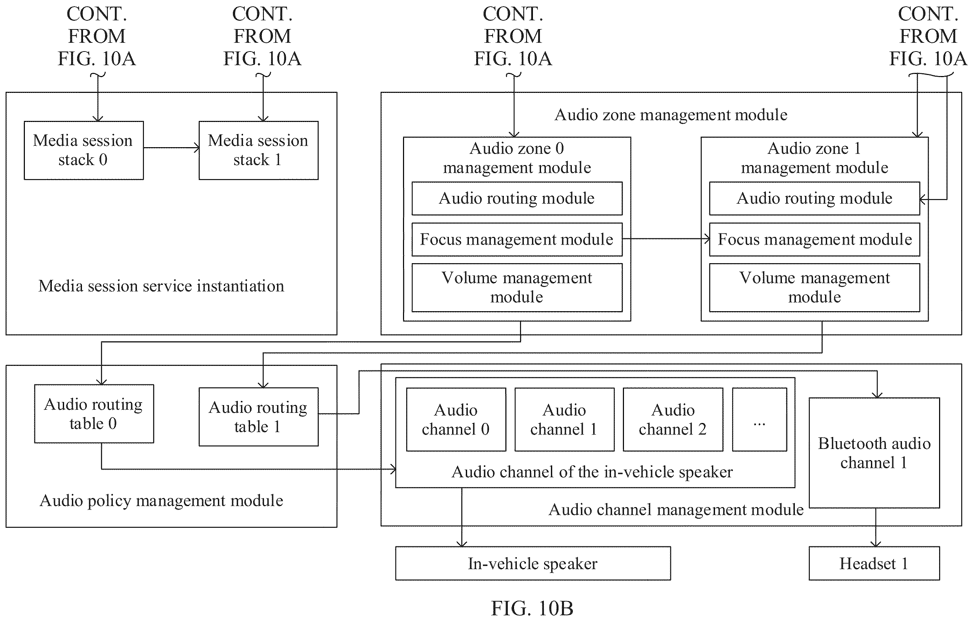

As shown in FIG. 10A and FIG. 10B, an occupant zone 0 audio management module is an occupant zone audio management module corresponding to a central control screen, and may be configured to manage an audio of an application corresponding to an occupant zone 0. The occupant zone 0 is bound to the central control screen. An occupant zone 1 audio management module is an occupant zone audio management module corresponding to a front-passenger screen, and may be configured to manage an audio of an application corresponding to an occupant zone 1. The occupant zone 1 is bound to the front-passenger screen. A sound generation device bound to the central control screen may be an in-vehicle speaker. An audio zone associated with the in-vehicle speaker may be an audio zone 0. Therefore, the occupant zone 0 is associated with the audio zone 0.

Because the sound generation device bound to the central control screen is the in-vehicle speaker, active device information in the occupant zone 0 audio management module may include information about the in-vehicle speaker. Because the occupant zone 0 is associated with the audio zone 0, active audio zone information in the occupant zone 0 audio management module may include information about the audio zone 0, and the active audio zone information may point to an audio zone 0 management module, to indicate that the occupant zone 0 is associated with the audio zone 0. The audio zone 0 management module may point to an audio routing table 0, to indicate that an audio routing policy of the application corresponding to the occupant zone 0 is stored in the audio routing table 0. The audio routing table 0 points to an audio channel of the in-vehicle speaker, to indicate that the audio of the application corresponding to the occupant zone 0 is played by the in-vehicle speaker. In addition, an active media session stack in an occupant zone 0 media session management module points to a media session stack 0, to indicate that a media session of the application corresponding to the occupant zone 0 may be stored in the media session stack 0.

It can be learned from FIG. 5 that, when the front-passenger screen is bound to no externally connected sound generation device, the front-passenger screen is bound to the in-vehicle speaker, and the occupant zone 1 is also associated with the audio zone 0. In this case, the occupant zone 1 is also associated with the audio zone 0. Therefore, active device information in the occupant zone 1 audio management module may include the information about the in-vehicle speaker. Active audio zone information in the occupant zone 1 audio management module may include the information about the audio zone 0, and the active audio zone information may point to the audio zone 0 management module, to indicate that the occupant zone 1 is associated with the audio zone 0. An active media session stack in an occupant zone 1 media session management module points to the media session stack 0, to indicate that a media session of the application corresponding to the occupant zone 1 may be stored in the media session stack 0.

The media sessions of the applications corresponding to the occupant zone 0 and the occupant zone 1 are both stored in the media session stack 0, and the active media session stacks in the occupant zone 0 media session management module and the occupant zone 1 media session management module both point to the media session stack 0. Therefore, multimedia playlists displayed in audio centers on the central control screen and the front-passenger screen may be the same, and both include multimedia content of the applications corresponding to the occupant zone 0 and the occupant zone 1.

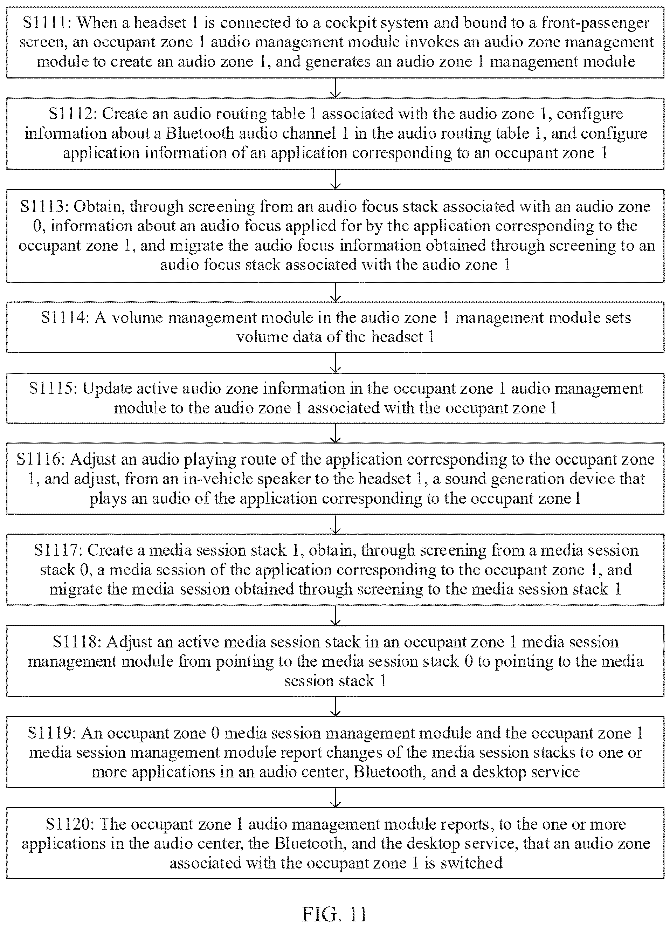

When a headset 1 is connected to the cockpit system via the front-passenger screen, the cockpit system may create an audio zone 1 according to a method shown in FIG. 11, and adjust an audio zone associated with the occupant zone 1, to associate the occupant zone 1 with the audio zone 1. Details are shown in FIG. 11.

S1111: When the headset 1 is connected to the cockpit system and bound to the front-passenger screen, the occupant zone 1 audio management module invokes an audio zone management module to create the audio zone 1, and generates an audio zone 1 management module.

After the headset 1 is connected to the cockpit system, an audio channel management module may create a Bluetooth audio channel 1 of the headset 1. Because a sound generation device bound to the front-passenger screen is switched from the in-vehicle speaker to the headset 1, the active device information in the occupant zone 1 audio management module may be updated to information about the headset 1. For example, the information about the headset 1 may include an identifier of the headset 1 and an identifier of the Bluetooth audio channel 1. Based on the active device information, the occupant zone 1 audio management module may allocate the Bluetooth audio channel 1 to the audio zone 1. In some embodiments, a method for allocating the Bluetooth audio channel 1 to the audio zone 1 may include: The occupant zone 1 audio management module sends the identifier of the Bluetooth audio channel 1 to the audio zone 1 management module.

S1112: Create an audio routing table 1 associated with the audio zone 1, configure information about the Bluetooth audio channel 1 in the audio routing table 1, and configure application information of the application corresponding to the occupant zone 1.

The occupant zone 1 audio management module may send the information about the application (namely, an application list) corresponding to the occupant zone 1 to the audio zone 1 management module. An audio routing module of the audio zone 1 management module may invoke an audio policy management module to create the audio routing table 1 associated with the audio zone 1. The audio routing module of the audio zone 1 management module may configure, in the audio routing table 1, the information about the Bluetooth audio channel 1 (for example, the identifier of the Bluetooth audio channel 1) from the occupant zone 1 audio management module and the application information of the application corresponding to the occupant zone 1. This may indicate that audios of applications included in the audio routing table 1 are routed to the Bluetooth audio channel 1, and are played via the headset 1.

S1113: Obtain, through screening from an audio focus stack associated with the audio zone 0, information about an audio focus applied for by the application corresponding to the occupant zone 1, and migrate the audio focus information obtained through screening to an audio focus stack associated with the audio zone 1.

Before the audio zone 1 is created, the audio zone associated with the occupant zone 1 is the audio zone 0. The information about the audio focus applied for by the application corresponding to the occupant zone 1 is stored in the audio focus stack associated with the audio zone 0, and is managed by a focus management module in the audio zone 0 management module. When the audio zone associated with the occupant zone 1 needs to be switched from the audio zone 0 to the audio zone 1, the focus management module in the audio zone 0 management module may obtain, through screening from the audio focus stack associated with the audio zone 0, the audio focus information of the application corresponding to the occupant zone 1, and send the focus information obtained through screening to a focus management module in the audio zone 1 management module. The focus management module in the audio zone 1 management module may store, in the audio focus stack associated with the audio zone 1, the information about the audio focus applied for by the application corresponding to the occupant zone 1. The focus management module in the audio zone 0 management module may delete, from the audio focus stack associated with the audio zone 0, the information about the audio focus applied for by the application corresponding to the occupant zone 1.

In some embodiments, in the scenario in which the information about the audio focus applied for by the application corresponding to the occupant zone 1 is migrated from the audio focus stack associated with the audio zone 0 to the audio focus stack associated with the audio zone 1, if the information about the audio focus applied for by the application corresponding to the occupant zone 1 is at a stack top of the audio focus stack associated with the audio zone 0, after the audio focus information is migrated, a state in which the application holds the audio focus is still retained. In other words, an application corresponding to the occupant zone 1 holds the audio focus in the audio zone 0, and is at the stack top of the audio focus stack associated with the audio zone 0. After audio focus information is migrated, the application corresponding to the occupant zone 1 still holds an audio focus, and the audio focus held by the application is changed from the audio focus in the audio 0 to an audio focus in the audio zone 1. The application is at a stack top of the audio focus stack associated with the audio zone 1. For example, when both the occupant zone 0 and the occupant zone 1 are associated with the audio zone 0, a music APP on the front-passenger screen applies for and obtains the audio focus in the audio zone 0, and plays music via the in-vehicle speaker associated with the audio zone 0. In a process in which the in-vehicle speaker plays the music APP, if the headset 1 is connected to the cockpit system via the front-passenger screen, the music of the music APP may be switched to be played by the headset 1. The in-vehicle speaker may stop playing of the music of the music APP. The headset 1 may continue to play the music of the music APP from a location at which the in-vehicle speaker stops playing. Seamless switching of the audio between the sound generation devices may be implemented with a dynamic change (for example, creation or deletion) of an audio zone in the cockpit system, and does not need to be sensed and adapted by a multimedia playing application.

S1114: A volume management module in the audio zone 1 management module sets volume data of the headset 1.

In some embodiments, the headset 1 is a sound generation device that has been connected to the cockpit system via the front-passenger screen. A historical connected device list in the occupant zone 1 audio management module may include the information about the headset 1. The information about the headset 1 in the historical connected device list may include but is not limited to the identifier of the headset 1, volume of the headset 1 when the headset 1 is last connected to the cockpit system, and the like. The occupant zone 1 audio management module may send the volume of the headset 1 when the headset 1 is last connected to the cockpit system to the audio zone 1 management module. The volume management module in the audio zone 1 management module may set the volume data of the headset 1 based on the volume of the headset 1 when the headset 1 is last connected to the cockpit system. In this way, volume at which the audio is played when the headset 1 is connected again is consistent with the volume at which an audio is played when the headset 1 is last connected to the cockpit system, thereby reducing an operation of readjusting, by a user, the volume to a volume that the user is personally used to, and improving audio listening experience of the user.

In some embodiments, the volume management module in the audio zone 1 management module may alternatively set the volume data of the headset 1 to default volume data. A method for setting the volume data of the headset 1 is not limited in embodiments of this application.

S1115: Update the active audio zone information in the occupant zone 1 audio management module to the audio zone 1 associated with the occupant zone 1.

The active audio zone information in the occupant zone 1 audio management module may change from pointing to the audio zone 0 management module to pointing to the audio zone 1 management module shown in FIG. 10A and FIG. 10B. This may indicate that the audio zone associated with the occupant zone 1 changes to the audio zone 1.

S1116: Adjust an audio playing route of the application corresponding to the occupant zone 1, and adjust, from the in-vehicle speaker to the headset 1 a sound generation device that plays the audio of the application corresponding to the occupant zone 1.

In some embodiments, when the audio zone associated with the occupant zone 1 is switched from the audio zone 0 to the audio zone 1, the audio zone 0 management module may indicate the audio policy management module to delete the information about the application corresponding to the occupant zone 1 from the audio routing table 0. As shown in FIG. 10A and FIG. 10B, the audio routing table 0 may still point to the audio channel of the in-vehicle speaker. The audio routing table 1 created with creation of the audio zone 1 may point to the Bluetooth audio channel 1. This may indicate that an audio of an application recorded in the audio routing table 1 (namely, the application corresponding to the occupant zone 1) may be routed to the Bluetooth application channel 1, and played by the headset 1.

S1117: Create a media session stack 1, obtain, through screening from the media session stack 0, the media session of the application corresponding to the occupant zone 1, and migrate the media session obtained through screening to the media session stack 1.

In some embodiments, the occupant zone 1 audio management module may synchronize the change of the audio zone associated with the occupant zone 1 to the occupant zone 1 media session management module. When it is determined that the audio zone associated with the occupant zone 1 changes from the audio zone 0 to the audio zone 1, the occupant zone 1 media session management module may invoke a media session service instantiation to create the media session stack 1, and migrate the media session of the application corresponding to the occupant zone 1 in the media session stack 0 to the media session stack 1. The media session service instantiation may delete the media session of the application corresponding to the occupant zone 1 from the media session stack 0.

S1118: Adjust the active media session stack in the occupant zone 1 media session management module from pointing to the media session stack 0 to pointing to the media session stack 1.

As shown in FIG. 10A and FIG. 10B, the active media session stack in the occupant zone 1 media session management module points to the media session stack 1, to indicate that the media session of the application corresponding to the occupant zone 1 may be stored in the media session stack 1.

S1119: The occupant zone 0 media session management module and the occupant zone 1 media session management module report changes of the media session stacks to one or more applications in an audio center, Bluetooth, and a desktop service.

The occupant zone 0 media session management module may report a change of the media session stack 0 to a system application like an audio center, Bluetooth, or a desktop service on a screen (for example, the central control screen) bound to the occupant zone 0.

The occupant zone 1 media session stack may report a change of a media session stack associated with the occupant zone 1 to a system application like an audio center, Bluetooth, or a desktop service on a screen (for example, the front-passenger screen) bound to the occupant zone 1.

S1120: The occupant zone 1 audio management module reports, to the one or more applications in the audio center, the Bluetooth, and the desktop service, that the audio zone associated with the occupant zone 1 is switched.

The occupant zone 1 audio management module may report, to the system application like the audio center, the Bluetooth, or the desktop service on the screen bound to the occupant zone, that the audio zone associated with the occupant zone 1 is switched.

In some embodiments, the system application like the audio center, the Bluetooth, or the desktop service may provide a corresponding feedback for the user based on the change of the media session stack and a change of an audio zone associated with an occupant zone, so that the user better uses each audio zone to listen to an audio.

For example, when the audio center on the central control screen receives a message indicating that the media session stack 0 changes, the audio center on the central control screen may update the multimedia playlist based on a changed media session stack 0. Because the changed media session stack 0 does not include the media session of the application corresponding to the occupant zone 1, the multimedia playlist displayed in the audio center on the central control screen does not include the multimedia content of the application corresponding to the occupant zone 1.

When the audio center on the front-passenger screen receives a message indicating that the media session stack associated with the occupant zone 1 changes from the media session stack 0 to the media session stack 1, the audio center on the front-passenger screen may update the multimedia playlist based on the media session stack 1. Because the media session stack 1 does not include the media session of the application corresponding to the occupant zone 0, the multimedia playlist displayed in the audio center on the front-passenger screen does not include the multimedia content of the application corresponding to the occupant zone 0.

In some embodiments, one audio zone may be associated with a plurality of sound generation devices. The plurality of sound generation devices associated with the audio zone may share a same audio channel to play a same audio. For example, the central control screen and the front-passenger screen are in one occupant zone. The central control screen may be bound to the in-vehicle speaker. The front-passenger screen may be bound to the headset 1. In this case, the in-vehicle speaker and the headset 1 are associated with a same audio zone. An audio of an application on the central control screen may be simultaneously played in the in-vehicle speaker and the headset 1. An audio of an application on the front-passenger screen may also be simultaneously played in the in-vehicle speaker and the headset 1.

A sequence of the steps in the method shown in FIG. 11 does not constitute a limitation on an execution sequence of the steps. For example, step S1112, step S1113, step S1114, and step S1117 may be simultaneously performed. To be specific, when the audio zone associated with the occupant zone 1 changes from the audio zone 0 to the audio zone 1, the cockpit system may simultaneously migrate the audio focus, the audio route, the volume, and the media session. For another example, step S1120 may be performed before step S1119, or step S1120 and step S1119 may be simultaneously performed.

In some embodiments, the vehicle 100 includes a first screen and a second screen. The first screen and the second screen may correspond to different occupant zones. For example, the first screen may be the central control screen. The second screen may be the front-passenger screen. The first screen may correspond to the occupant zone 0. The second screen may correspond to the occupant zone 1. When the cockpit system is externally connected to no sound generation device via the second screen, both the first screen and the second screen may be associated with a first audio zone corresponding to the in-vehicle speaker. The first audio zone may be the audio zone 0 in this application. That both the first screen and the second screen are associated with the first audio zone may indicate that the occupant zone 0 corresponding to the first screen is associated with the first audio zone, and the occupant zone 1 corresponding to the second screen is also associated with the first audio zone.

When both the first screen and the second screen are associated with the first audio zone, if the cockpit system detects that a first application corresponding to the second screen requests to play a first audio, the cockpit system may play the first audio via the in-vehicle speaker. Then, when detecting that a second application on the first screen requests to play a second audio, the cockpit system may play the second audio via the in-vehicle speaker, and pause playing of the first audio or reduce playing volume of the first audio. Both the first application and the second application may be multimedia playing applications. It can be learned that an application on the second screen and an application on the first screen both apply for an audio focus in the first audio zone. When the first application on the second screen holds the audio focus in the first audio zone, the second application on the first screen may preempt the audio focus of the first application.

When detecting an input operation that is performed on the second screen and that is for connecting a first sound generation device, the cockpit system may be connected to the first sound generation device, and create a second audio zone corresponding to the first sound generation device. For example, the first sound generation device may be the headset 1. The second audio zone may be the audio zone 1 in this application. The cockpit system may change an audio zone associated with the second screen from the first audio zone to the second audio zone. When the in-vehicle speaker plays the second audio, and the playing volume of the first audio is reduced to play the first audio at low volume, the in-vehicle speaker may stop playing the first audio after the audio zone associated with the second screen changes. When the cockpit system detects again that the first application requests to play the first audio, the cockpit system may play the first audio via the first sound generation device.

The first audio zone may correspond to a first audio focus stack. The first audio focus stack may include audio focus information of an application that is running in a foreground or a background on a screen associated with the first audio zone. In other words, the first audio focus stack may include audio focus information of an application corresponding to an occupant zone (for example, the occupant zone 0 or the occupant zone) associated with the first audio zone. When creating the second audio zone, the cockpit system may create a second audio focus stack corresponding to the second audio zone, and migrate audio focus information of an application that is running in a foreground or a background on the second screen from the first audio focus stack to the second audio focus stack. In addition to the audio focus information of the application that is running in the foreground or the background on the second screen, the cockpit system may further migrate audio focus information of an application that is running in a foreground or a background on another screen that is in a same occupant zone as the second screen from the first audio focus stack to the second audio focus stack. For example, the second screen corresponds to the occupant zone 1. When creating the second audio zone, the cockpit system may migrate the audio focus information of the application corresponding to the occupant zone 1 from the first audio focus stack to the second audio focus stack.

The first audio zone may correspond to a first audio routing table. The first audio routing table includes application information of the application that is running in the foreground or the background on the screen associated with the first audio zone. A first audio channel of the in-vehicle speaker is configured in the first audio routing table, and indicates that an audio of the application corresponding to the application information in the first audio routing table is routed to the first audio channel. For example, the first audio routing table may be the audio routing table 0 in this application. When creating the second audio zone, the cockpit system may create a second audio routing table corresponding to the second audio zone, and migrate application information of the application that is running in the foreground or the background on the second screen from the first audio routing table to the second audio routing table. In addition to the application information of the application that is running in the foreground or the background on the second screen, the cockpit system may further migrate application information of the application that is running in the foreground or the background on the another screen that is in the same occupant zone as the second screen from the first audio routing table to the second audio routing table. For example, the second screen corresponds to the occupant zone 1. When creating the second audio zone, the cockpit system may migrate the application information of the application corresponding to the occupant zone 1 from the first audio routing table to the second audio routing table. The second audio routing table may be the audio routing table 1 in this application. A second audio channel may be configured in the second audio routing table. The second audio channel may be the Bluetooth audio channel 1. In other words, the second audio routing table may point to the Bluetooth audio channel 1.

The first audio zone may correspond to a first media session stack. The first media session stack may be the media session stack 0 in this application. When creating the second audio zone, the cockpit system may create a second media session stack corresponding to the second audio zone. The second media session stack may be the media session stack 1 in this application. The cockpit system may migrate, from the first media session stack to the second media session stack, a media session of an application corresponding to an occupant zone (for example, the occupant zone) associated with the second audio zone. For details, refer to the descriptions of migrating the media session from the media session stack 0 to the media session stack 1 in FIG. 10A and FIG. 10B.

### Dynamically delete an audio zone when a sound generation device is removed.

In some embodiments, when a sound generation device externally connected to the cockpit system is disconnected, the cockpit system may delete an audio zone associated with the sound generation device, and re-associate an occupant zone associated with the deleted audio zone with the audio zone associated with the in-vehicle speaker. In this way, when the externally connected sound generation device is removed, the cockpit system may also dynamically adjust an audio zone of an application corresponding to an occupant zone, to implement seamless switching of an audio between sound generation devices.

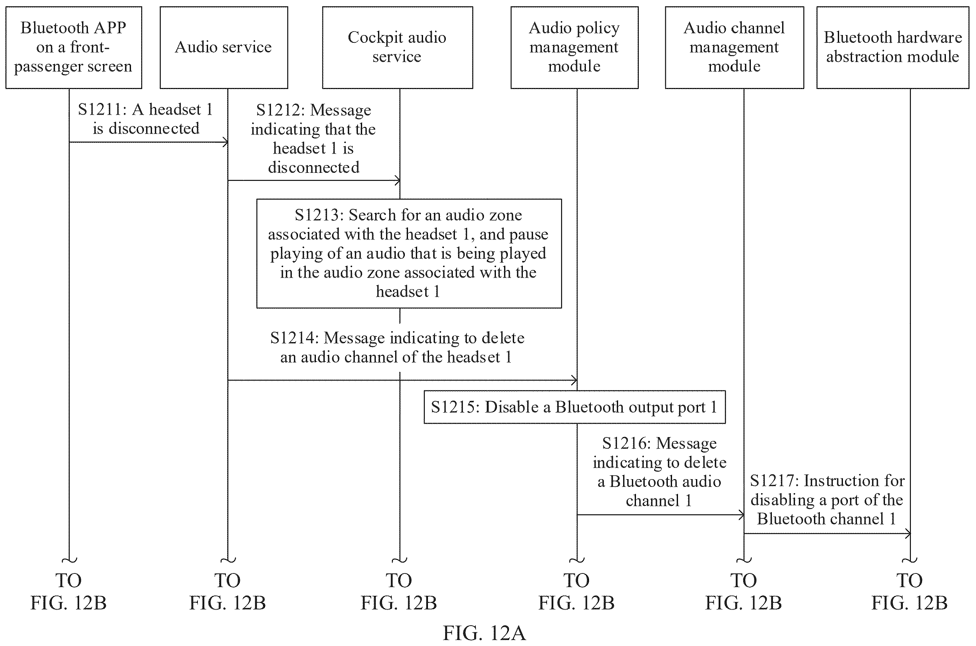

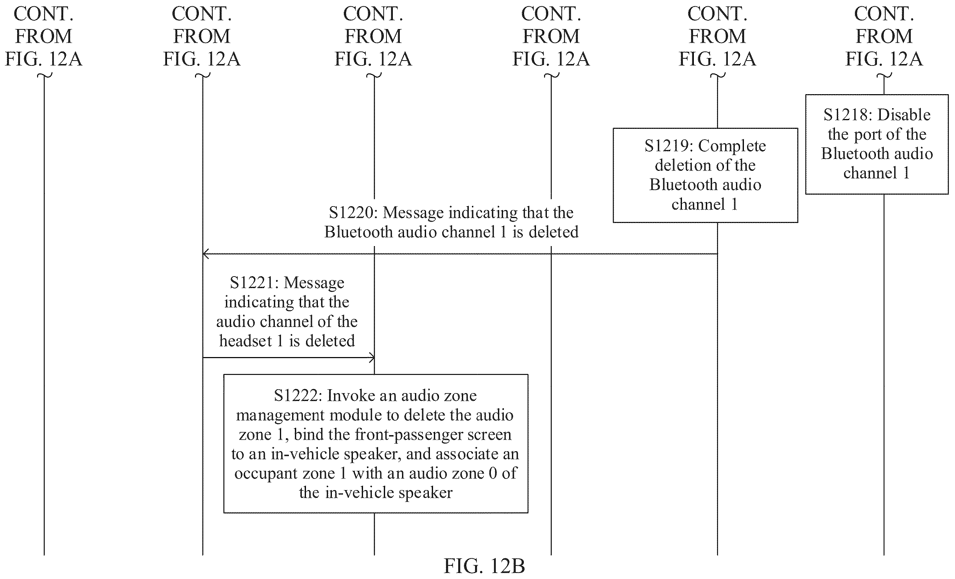

**FIG. 12**A and FIG. 12B **are a flowchart of an example of a method for deleting an audio channel when a sound generation device is removed according to this application.**

As shown in FIG. 12A and FIG. 12B, the method may include steps S1211 to S1222.

S1211: A Bluetooth APP on a front-passenger screen may notify an audio service that a headset 1 is disconnected.

In some embodiments, the Bluetooth APP on the front-passenger screen may display a Bluetooth setting interface. Prompt information indicating that the headset 1 has been disconnected from a cockpit system may be displayed in the Bluetooth setting interface.

S1212: The audio service may send, to a cockpit audio service, a message indicating that the headset 1 is disconnected.

S1213: The cockpit audio service searches for an audio zone associated with the headset 1, and pauses playing of an audio that is being played in the audio zone associated with the headset 1.

In some embodiments, when the message indicating that the headset 1 is disconnected is received, an occupant zone 1 management in the cockpit audio service may search for the audio zone associated with the headset 1. In a possible implementation, the occupant zone 1 audio management module may determine, based on active device information, that the headset 1 is bound to the front-passenger screen in an occupant zone 1, and then determine, based on active audio zone information, that the audio zone associated with the headset 1 is an audio zone 1. The occupant zone 1 audio management module may indicate an occupant zone 1 media session management module to control a media session of an application to which the audio that is being played in the audio zone 1 belongs, so that the headset 1 pauses playing of the audio.

Step S1213 is optional. It may be understood that, if the headset 1 does not play the audio before being disconnected, the cockpit audio service may not need to perform step S1213.

S1214: The audio service may send, to an audio policy management module, a message indicating to delete an audio channel of the headset 1.

S1215: The audio policy management module may disable a Bluetooth output port 1.

With reference to FIG. 8, it can be learned that a Bluetooth protocol module in the audio policy management module may disable the output port 1.

S1216: The audio policy management module may send, to an audio channel management module, a message indicating to delete a Bluetooth audio channel 1.

S1217: The audio channel management module may send, to a Bluetooth hardware abstraction module, an instruction for disabling a port of the Bluetooth channel 1.

S1218: The Bluetooth hardware abstraction module disables the port of the Bluetooth audio channel 1.

S1219: The audio channel management module completes deletion of the Bluetooth audio channel 1.

S1220: The audio channel management module may send, to the audio service, a message indicating that the Bluetooth audio channel 1 is deleted.

S1221: The audio service may send, to the cockpit audio service, a message indicating that the audio channel of the headset 1 is deleted.

S1222: The cockpit audio service may invoke an audio zone management module to delete the audio zone 1, bind the front-passenger screen to an in-vehicle speaker, and associate the occupant zone 1 with an audio zone 0 of the in-vehicle speaker.

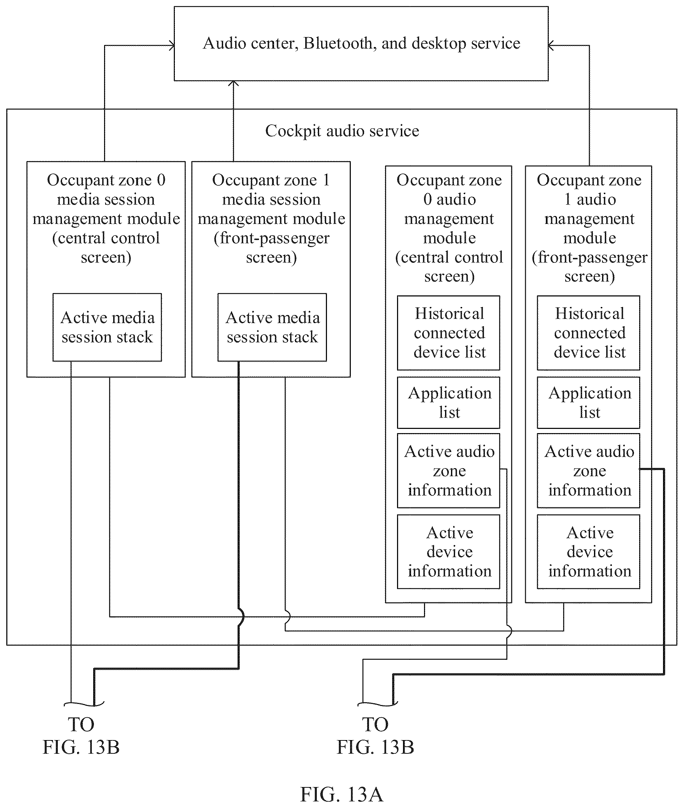

For a specific implementation of step S1222, refer to subsequent descriptions in FIG. 13A to FIG. 14.

The method for deleting the audio channel of the sound generation device when the sound generation device externally connected to the cockpit system is removed is merely an example for description in this application, and should not constitute a limitation on this application.

**FIG. 13A to FIG. 14** **are diagrams of an example of a specific process in which a cockpit system deletes an audio zone.**

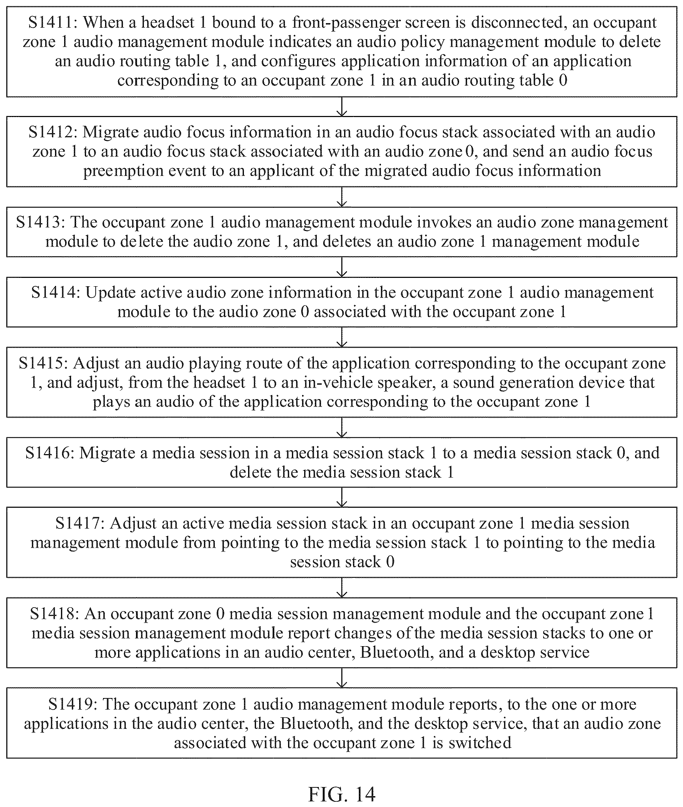

When the cockpit system is connected to a headset 1, and the headset 1 is bound to a front-passenger screen, for a relationship between an occupant zone 1 and an audio zone 1, refer to the diagram of the architecture of the cockpit system shown in FIG. 10A and FIG. 10B. When the headset 1 is disconnected from the cockpit system, the cockpit system may delete the audio zone 1 with reference to a method shown in FIG. 14, adjust an audio zone associated with the occupant zone 1, and re-associate the occupant zone 1 with an audio zone 0. Details are shown in FIG. 14.

S1411: When the headset 1 bound to the front-passenger screen is disconnected, an occupant zone 1 audio management module indicates an audio policy management module to delete an audio routing table 1, and configures application information of an application corresponding to the occupant zone 1 in an audio routing table 0.

It can be learned from step S1212 shown in FIG. 12A and FIG. 12B that, when the headset 1 is disconnected, a cockpit audio service may receive, from an audio service, a message indicating that the headset 1 is disconnected. Based on the message indicating that the headset 1 is disconnected, the cockpit audio service may determine, based on active device information in an occupant zone audio management module, that the headset 1 is bound to a screen in the occupant zone 1. Therefore, the occupant zone 1 audio management module indicates the audio policy management module to delete the audio routing table 1, and configures the application information of the application corresponding to the occupant zone 1 in the audio routing table 0. Specifically, the occupant zone 1 audio management module may indicate an audio zone 1 management module to migrate an audio routing policy of the application corresponding to the occupant zone 1. The audio zone 1 management module may invoke the audio policy management module to migrate the application information of the application recorded in the audio routing table 1 to the audio routing table 0, and delete the audio routing table 1. In this application, migrating an audio routing policy of an application from one audio routing table to another audio routing table may include migrating application information (for example, an application identifier) of the application in the audio routing table to the another audio routing table.

The headset 1 is disconnected, and the screen in the occupant zone 1 needs to be rebound to an in-vehicle speaker. Therefore, the active device information in the occupant zone 1 audio management module may be updated to information about the in-vehicle speaker. For example, the information about the in-vehicle speaker may include an identifier of the in-vehicle speaker and an identifier of an audio channel of the in-vehicle speaker.

S1412: Migrate audio focus information in an audio focus stack associated with the audio zone 1 to an audio focus stack associated with the audio zone 0, and send an audio focus preemption event to an applicant of the migrated audio focus information.

A sound generation device bound to a screen in the occupant zone 0 changes to the in-vehicle speaker, and an audio zone associated with the occupant zone 0 also needs to accordingly change to the audio zone 0 associated with the in-vehicle speaker. The occupant zone 1 audio management module may indicate the audio zone 1 management module to migrate the audio focus information in the audio focus stack associated with the audio zone 1 to the audio focus stack associated with the audio zone 0. The audio focus information in the audio focus stack associated with the audio zone 1 is information about an audio focus applied for by the application corresponding to the occupant zone 1. A focus management module in the audio zone 1 management module may send the audio focus information in the audio focus stack associated with the audio zone 1 to an audio zone 0 management module. The audio zone 0 management module may store, in the audio focus stack associated with the audio zone 0, the audio focus information in the audio focus stack associated with the audio zone 1.

In some embodiments, in a scenario in which the information about the audio focus applied for by the application corresponding to the occupant zone 1 is migrated from the audio focus stack associated with the audio zone 1 to the audio focus stack associated with the audio zone 0, if an application that holds the audio focus in the audio zone 1 is playing an audio, and an application that holds an audio focus in the audio zone 0 is also playing an audio, after the audio focus information is migrated, a focus management module in the audio zone 0 management module may send an audio focus preemption event to the application that holds the audio focus in the audio zone 1. Therefore, after the information about the audio focus applied for by the application corresponding to the occupant zone 1 is migrated to the audio focus stack associated with the audio zone 0, the application that originally holds the audio focus in the audio zone 0 may continue to play the audio, and the application that originally holds the audio focus in the audio zone 1 loses the audio focus and pauses playing of the audio.

S1413: The occupant zone 1 audio management module invokes an audio zone management module to delete the audio zone 1, and deletes the audio zone 1 management module.

S1414: Update active audio zone information in the occupant zone 1 audio management module to the audio zone 0 associated with the occupant zone 1.

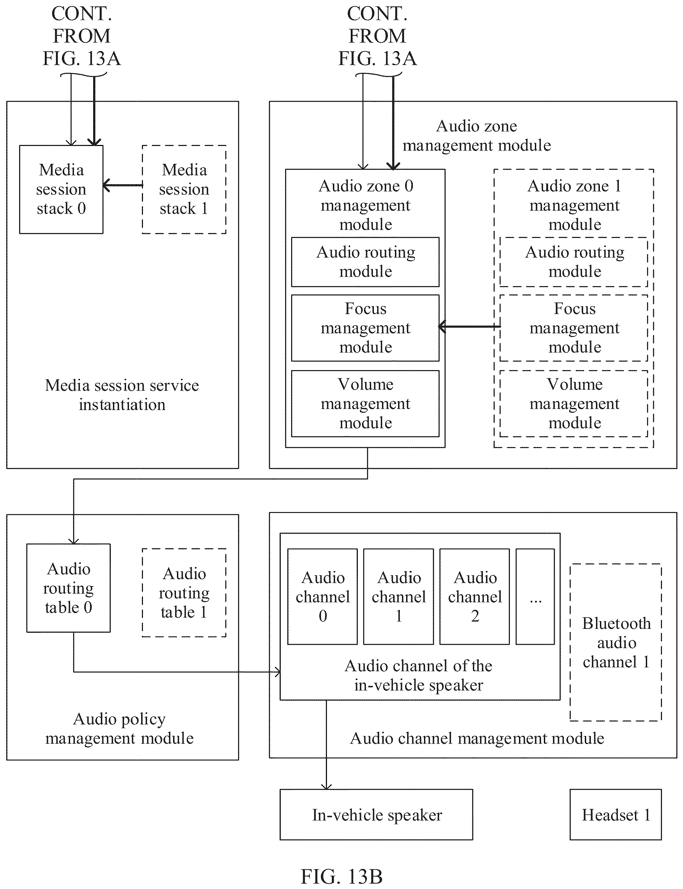

The active audio zone information in the occupant zone 1 audio management module may change from pointing to the audio zone 1 management module shown in FIG. 10A and FIG. 10B to pointing to the audio zone 0 management module shown in FIG. 13A and FIG. 13B. This may indicate that the audio zone associated with the occupant zone 1 changes to the audio zone 0.

S1415: Adjust an audio playing route of the application corresponding to the occupant zone 1, and adjust, from the headset 1 to the in-vehicle speaker, a sound generation device that plays an audio of the application corresponding to the occupant zone 1.

S1416: Migrate a media session in the media session stack 1 to a media session stack 0, and delete the media session stack 1.

In some embodiments, the occupant zone 1 audio management module may synchronize the change of the audio zone associated with the occupant zone 1 to an occupant zone 1 media session management module. When it is determined that the audio zone associated with the occupant zone 1 changes from the audio zone 1 to the audio zone 0, the occupant zone 1 media session management module may invoke a media session service instantiation to migrate the media session in the media session stack 1 to the media session stack 0, and delete the media session stack 1.

S1417: Adjust an active media session stack in the occupant zone 1 media session management module from pointing to the media session stack 1 to pointing to the media session stack 0.

As shown in FIG. 13A and FIG. 13B, the active media session stack in the occupant zone 1 media session management module points to the media session stack 0, to indicate that a media session of the application corresponding to the occupant zone 1 may be stored in the media session stack 0.

S1418: An occupant zone 0 media session management module and the occupant zone 1 media session management module report changes of the media session stacks to one or more applications in an audio center, Bluetooth, and a desktop service.

S1419: The occupant zone 1 audio management module reports, to the one or more applications in the audio center, the Bluetooth, and the desktop service, that the audio zone associated with the occupant zone 1 is switched.

For step S1418 and step S1419, refer to steps S1119 and S1120 shown in FIG. 11.

An execution sequence of the steps in the method shown in FIG. 14 is not limited in embodiments of this application.

As shown in FIG. 13A and FIG. 13B, that the media session stack 1 executes the media session stack 0 may indicate that the media session in the media session stack 1 is migrated to the media session stack 0. That the focus management module in the audio zone 1 management module points to the focus management module in the audio zone 0 management module may indicate that the audio focus information in the audio focus stack associated with the audio zone 0 is migrated to the audio focus stack associated with the audio zone 1. The media session stack 1, the audio zone 1 management module, the audio routing table 1, and a Bluetooth audio channel 1 are represented by dashed lines, to indicate that these modules are deleted from the cockpit system when the headset 1 is disconnected.

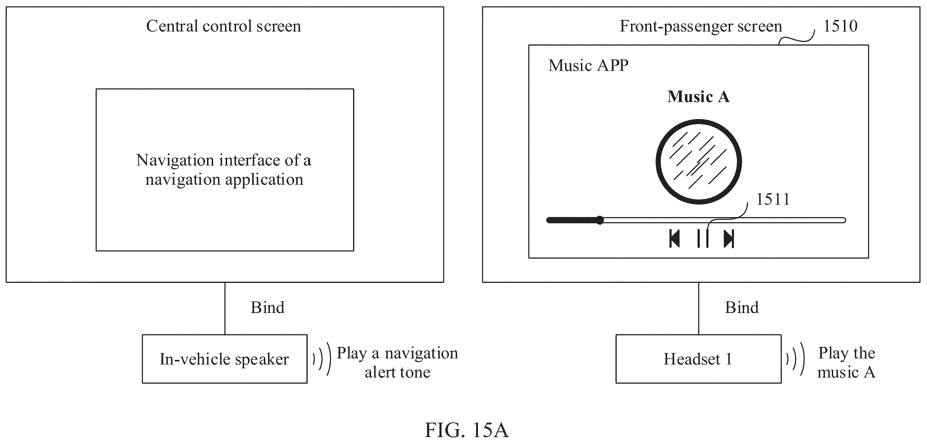

**FIG. 15A to FIG. 15D** **are some diagrams of an example of an audio playing scenario in which a sound generation device is removed.**

As shown in FIG. 15A, a central control screen is bound to an in-vehicle speaker. The central control screen may display a navigation interface of a navigation application. The in-vehicle speaker may play a navigation alert tone of the navigation application. A front-passenger screen is bound to a headset 1, and the front-passenger screen may display an audio playing interface 1510 of a music APP. The audio playing interface 1510 may include a pause control 1511. The pause control 1511 may be used to pause playing of music, for example, music A. The headset 1 may play the music A of the music APP. It can be learned that, when different screens are respectively bound to sound generation devices, applications on the different screens may play audios via the sound generation devices respectively bound to the screens. In this way, users using different screens can listen to audios that the users want to listen to without interfering with each other.

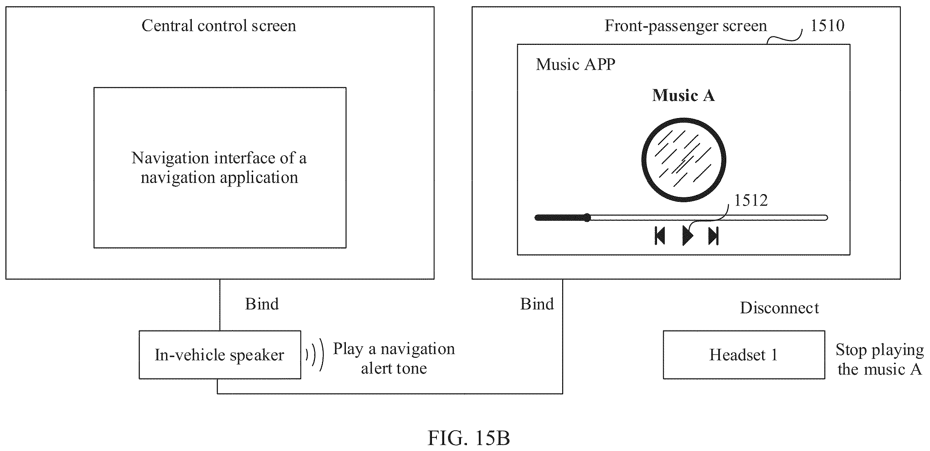

As shown in FIG. 15B, when the headset 1 is disconnected, a cockpit system may bind the front-passenger screen to the central control screen. The headset 1 may stop playing the music A. The central control screen still displays the navigation interface of the navigation application. The navigation application on the central control screen still holds an audio focus in an audio zone associated with the in-vehicle speaker, and plays the navigation alert tone by using the in-vehicle speaker. Because a sound generation device bound to the front-passenger screen changes, an audio zone associated with an occupant zone in which the front-passenger screen is located also changes accordingly. The music APP on the front-passenger screen receives a message indicating that an audio focus is preempted. Therefore, the music APP pauses playing of the music. As shown in FIG. 15B, the front-passenger screen displays an audio playing interface 1510 of the music APP. The audio playing interface 1510 may include a play control 1512. The play control 1512 may indicate that playing of the music A is currently paused, and may be used to trigger the music APP to continue to play the music A.

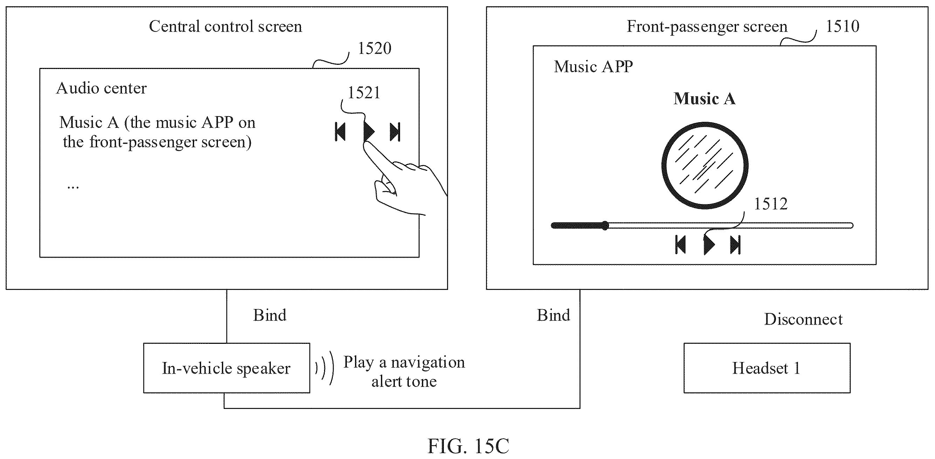

As shown in FIG. 15C, the central control screen may display a user interface 1520 in an audio center in response to a user operation of starting the audio center. It can be learned from the foregoing embodiment that, when sound generation devices bound to the central control screen and the front-passenger screen are the same, audio zones associated with occupant zones in which the central control screen and the front-passenger screen are located are the same, and the occupant zones in which the central control screen and the front-passenger screen are located share one media session stack. Therefore, the audio center on the central control screen may obtain a media session of an application on the front-passenger screen, and therefore can display multimedia content on the front-passenger screen. It can be learned from FIG. 15C that the user interface 1520 may include multimedia content, for example, a play control 1521, of the music APP on the front-passenger screen. The play control 1521 may be used to trigger the music APP on the front-passenger screen to play the music A.

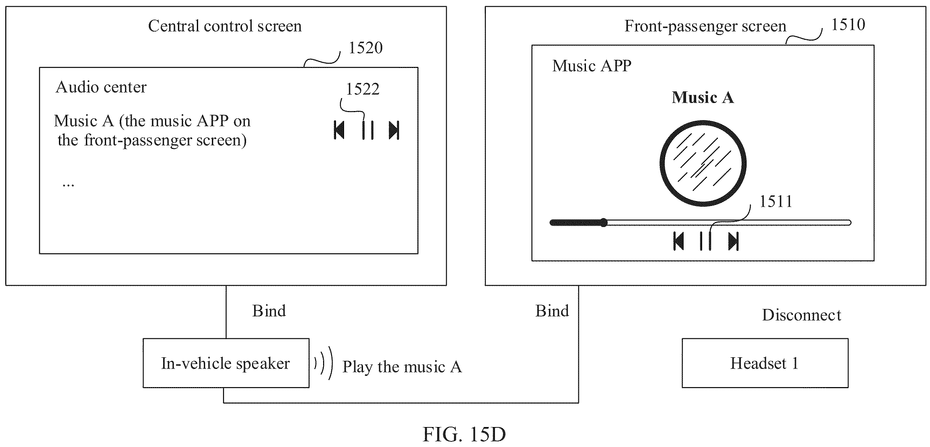

In response to an operation on the play control 1521 shown in FIG. 15C, the in-vehicle speaker may start to play the music A of the music APP on the front-passenger screen. The play control 1521 that is in the user interface 1520 in the audio center and that is shown in FIG. 15C may be switched to and displayed as a pause control 1522 shown in FIG. 15D. The pause control 1522 may be used to trigger the music A to pause playing of the music. In addition, the play control 1521 that is in the audio playing interface 1510 on the front-passenger screen and that is shown in FIG. 15C is also switched to and displayed as the pause control 1511 shown in FIG. 15D. The in-vehicle speaker may continue to play the music A.

In some embodiments, in response to the operation on the play control 1521 shown in FIG. 15C, the audio center may send, to a cockpit audio service, an instruction for playing an audio of the music APP. The cockpit audio service may find a media session of the music APP from a media session stack in a media session service instantiation, and then control the media session of the music APP, to play the audio of the music APP. In addition, the cockpit audio service may invoke an audio zone management module to manage the audio focus in the audio zone associated with the in-vehicle speaker, so that the music APP obtains the audio focus.

In some embodiments, the audio focus obtained by the navigation application on the central control screen is a ducking focus. After the music APP obtains the audio focus, the in-vehicle speaker may still play the navigation alter tone. When the in-vehicle speaker plays the navigation alert tone, the in-vehicle speaker may reduce volume at which the music of the music APP is played. After the navigation alert tone is played, the in-vehicle speaker may resume the volume at which the music of the music APP is played.

In some embodiments, when the music APP on the front-passenger screen holds the audio focus and plays the music A by using the headset 1, if the headset 1 is disconnected, the cockpit system may bind the front-passenger screen to the in-vehicle speaker, and allocate the audio focus in the audio zone associated with the in-vehicle speaker to the music APP on the front-passenger screen. In this way, playing of the audio of the music APP may not be paused, the in-vehicle speaker may continue to play the music A, and the user does not need to perform the audio playing operation shown in FIG. 15C. In other words, when an application on a screen holds an audio focus in an audio zone associated with an occupant zone in which the screen is located, if a sound generation device bound to the screen is disconnected, the application on the screen may be switched to continue to hold the focus in the audio zone in which the in-vehicle speaker is located. The application may be seamlessly switched to play an audio by using the in-vehicle speaker.

When both a first screen (for example, the central control screen) and a second screen (for example, the front-passenger screen) are associated with a first audio zone of the in-vehicle speaker, the cockpit system detects an input operation that is performed on the first screen and that is used to view audio playing information, and may display a first list on the first screen based on a first media session stack. The first list includes audio playing information indicated by the first media session stack. The input operation used to view the audio playing information may be a user operation of starting an audio center on the first screen. For the first list, refer to the user interface 1520 shown in FIG. 15C. When the in-vehicle speaker plays a second audio, when detecting an input operation that is performed on the first screen and that is for playing information of a first audio in the first list, the cockpit system may play the first audio via the in-vehicle speaker, and pause playing of the second audio. For the input operation for the playing information of the first audio in the first list, refer to the operation on the play control 1521 shown in FIG. 15C. For example, the second audio may be the navigation alert tone of the navigation application on the central control screen shown in FIG. 15B. The first audio may be the music A of the music APP on the front-passenger screen shown in FIG. 15D.

When the first screen (for example, the central control screen) is associated with the first audio zone of the in-vehicle speaker, and the second screen (for example, the front-passenger screen) is associated with a first sound generation device (for example, the headset 1), the cockpit system detects an input operation that is performed on the first screen and that is used to view audio playing information, and may display a second list on the first screen based on the first media session stack. The second list includes the audio playing information indicated by the first media session stack. Because a media session of an application corresponding to an occupant zone associated with a second audio zone in the first media session stack has been migrated to a second media session stack, the second list does not include audio playing information (for example, audio playing information of the music A of the music APP on the front-passenger screen shown in FIG. 15C) of the application corresponding to the occupant zone associated with the second audio zone. The cockpit system detects an input operation that is performed on the second screen and that is used to view audio playing information, and may display a third list on the second screen based on the second media session stack. The third list includes audio playing information indicated by the second media session stack. The third list may be a user interface of an audio center on the second screen. Because the first media session stack is different from the second media session stack, the second list is different from the third list.

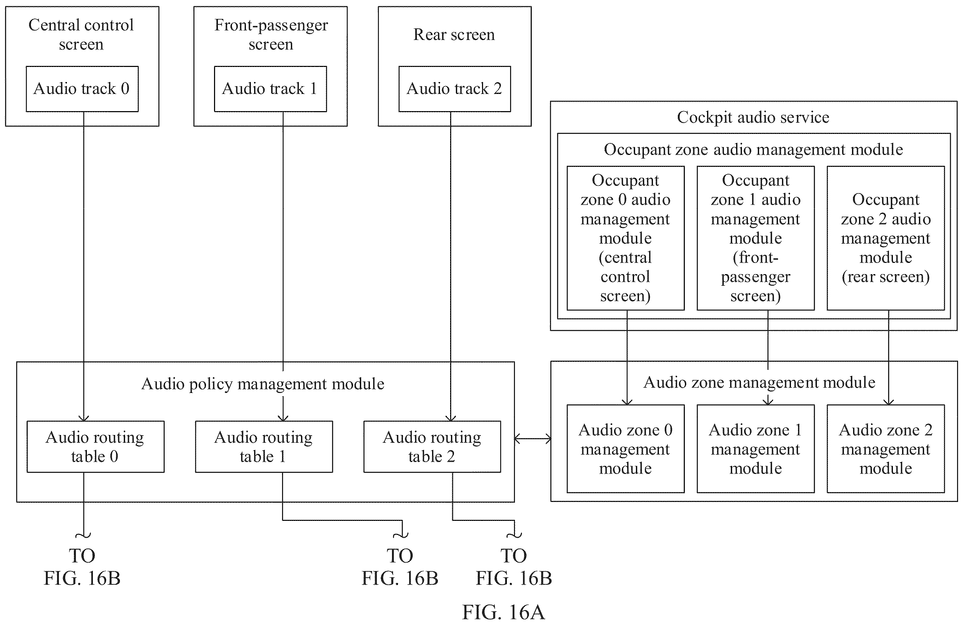

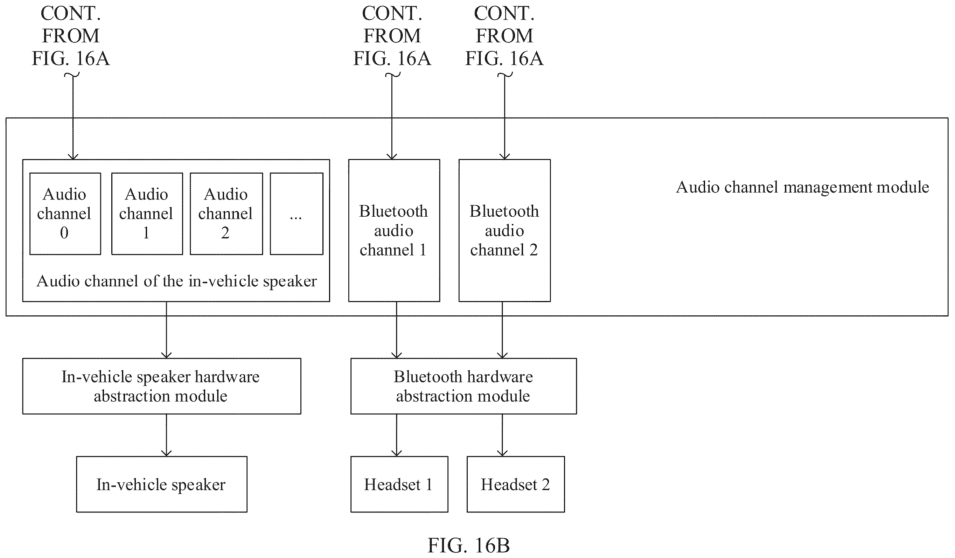

**FIG. 16A** and FIG. 16B **are a diagram of an example of audio stream transmission in different audio zones according to this application.**

When there are a plurality of audio zones in a cockpit system, audio streams of applications corresponding to occupant zones associated with different audio zones may be transmitted to different sound generation devices via different channels, and played by the different sound generation devices.

As shown in FIG. 16A and FIG. 16B, an occupant zone audio management module includes an occupant zone 0 audio management module corresponding to a central control screen, an occupant zone 1 audio management module corresponding to a front-passenger screen, and an occupant zone 2 audio management module corresponding to a rear screen. The occupant zone 0 audio management module pointing to an audio zone 0 management module may indicate that an occupant zone 0 is associated with an audio zone 0. Similarly, an occupant zone 1 is associated with an audio zone 1. An occupant zone 2 is associated with an audio zone 2. The audio zone 0 may be an audio zone associated with an in-vehicle speaker. The audio zone 1 may be an audio zone associated with a headset 1. The audio zone 2 may be an audio zone associated with a headset 2.

It can be learned from the foregoing embodiment that the occupant zone 0 audio management module may indicate the audio zone 0 management module to manage an audio routing policy of an application corresponding to the occupant zone 0. The audio zone 0 management module may store the audio routing policy of the application corresponding to the occupant zone 0 in an audio routing table 0. The audio routing table 0 points to an audio channel of the in-vehicle speaker, to indicate that an audio of the application recorded in the audio routing table 0 may be routed to the audio channel of the in-vehicle speaker. Similarly, the occupant zone 1 audio management module may indicate an audio zone 1 management module to manage an audio routing policy of an application corresponding to the occupant zone 1. An audio routing table 1 points to the audio channel of the in-vehicle speaker, to indicate that an audio of an application recorded in the audio routing table 1 may be routed to a Bluetooth audio channel 1. The occupant zone 2 audio management module may indicate an audio zone 2 management module to manage an audio routing policy of an application corresponding to the occupant zone 2. An audio routing table 2 points to the audio channel of the in-vehicle speaker, to indicate that an audio of an application recorded in the audio routing table 2 may be routed to a Bluetooth audio channel 2.

When an application needs to play an audio, a corresponding audio track (Audio Track) may be created. The audio track may be a class used for audio playing, and may transmit audio data to an audio channel of a sound generation device.

For example, an audio track 0 may exist on the central control screen. The audio track 0 may query, in an audio policy management module, that an application to which the audio track 0 belongs is in the audio routing table 0, and then transmit, based on the audio routing table 0, an audio stream of the application to which the audio track 0 belongs to the audio channel (for example, an audio channel 0, an audio channel 1, or an audio channel 2) of the in-vehicle speaker. An audio channel management module may transmit the audio stream in the audio channel of the in-vehicle speaker to the in-vehicle speaker via an in-vehicle speaker hardware abstraction module. Then, the in-vehicle speaker may play the audio stream from the audio track 0.

An audio track 1 may exist on the front-passenger screen. The audio track 1 may query, in the audio policy management module, that an application to which the audio track 1 belongs is in the audio routing table 1, and then transmit, based on the audio routing table 1, an audio stream of the application to which the audio track 1 belongs to the Bluetooth audio channel 1. The audio channel management module may transmit the audio stream in the Bluetooth audio channel 1 to the headset 1 via a Bluetooth hardware abstraction module. Then, the headset 1 may play the audio stream from the audio track 1.

An audio track 2 may exist on the rear screen. The audio track 2 may query, in the audio policy management module, that an application to which the audio track 2 belongs is in the audio routing table 2, and then transmit, based on the audio routing table 2, an audio stream of the application to which the audio track 2 belongs to the Bluetooth audio channel 2. The audio channel management module may transmit the audio stream in the Bluetooth audio channel 2 to the headset 2 via the Bluetooth hardware abstraction module. Then, the headset 2 may play the audio stream from the audio track 2.

In some embodiments, when detecting that a first sound generation device is disconnected, the cockpit system may change an audio zone associated with a second screen from a second audio zone to a first audio zone, and adjust audio focus stacks, audio routing tables, and media session stacks that correspond to the first audio zone and the second audio zone. For details, refer to the descriptions of adjusting, by the cockpit system after detecting that the headset 1 is disconnected, the audio routing table 0, the audio routing table 1, the media session stack 0, the media session stack 1, and the audio focus stacks corresponding to the audio zone 0 and the audio zone 1 in FIG. 12A to FIG. 14 in this application.

### Audio focus management

A cockpit system provided in this application may separately manage audio focuses in a plurality of audio zones. Audio focuses in different audio zones may be independent of each other and do not affect each other.

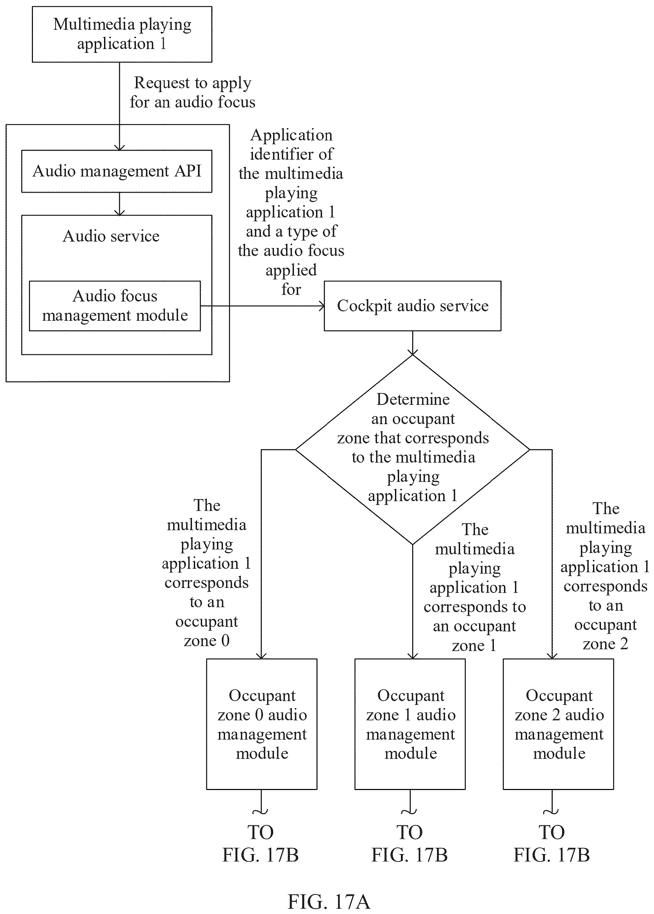

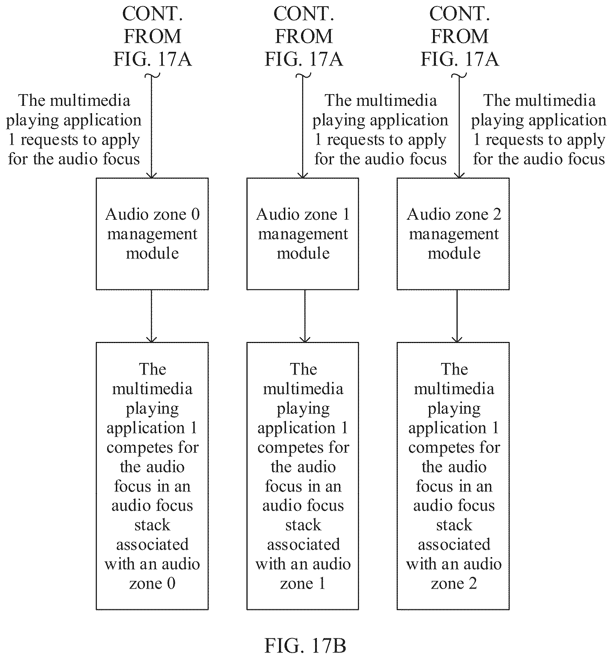

**FIG. 17A** and FIG. 17B **are a diagram of an example of applying for an audio focus according to this application.**

As shown in FIG. 17A and FIG. 17B, when needing to play an audio, a multimedia playing application 1 may request, via an audio management API, to apply to an audio service for an audio focus. The multimedia playing application 1 may be an application that has an audio playing requirement, for example, a music APP, a navigation APP, a video APP, or a phone APP. A type of the multimedia playing application 1 is not limited in embodiments of this application. A scenario in which the multimedia playing application 1 needs to play the audio may include but is not limited to: The multimedia playing application 1 detects a user operation used to trigger audio playing, the multimedia playing application 1 receives an incoming call and needs to play an incoming call alert tone, the multimedia playing application 1 plays a navigation alert tone in a navigation process, and the like.

The request of the multimedia playing application 1 for applying for the audio focus may include but is not limited to an application identifier of the multimedia playing application 1 and a type of the audio focus that is applied for.

An audio focus management module in the audio service may send the request of the multimedia playing application 1 for applying for the audio focus to a cockpit audio service. The cockpit audio service may determine an occupant zone that corresponds to the multimedia playing application. The cockpit audio service may determine, based on the application identifier of the multimedia playing application 1, an occupant zone audio management module whose application list includes the multimedia playing application 1. For example, if an application list in an occupant zone 0 audio management module includes the multimedia playing application 1, the multimedia playing application 1 is an application corresponding to an occupant zone 0.

When the multimedia playing application 1 corresponds to the occupant zone 0, the occupant zone 0 audio management module may determine, based on active audio zone information in the occupant zone 0 audio management module, that the occupant zone 0 is associated with an audio zone 0, and then transmit, to an audio zone 0 management module corresponding to the audio zone 0, a message indicating that the multimedia playing application 1 requests to apply for the audio focus. In this way, the multimedia playing application 1 can apply for the audio focus in the audio zone 0. A focus management module in the audio zone 0 management module may determine, based on the type of the audio focus applied for by the multimedia playing application 1 and an audio focus stack associated with the audio zone 0, whether the multimedia playing application 1 can obtain the focus.

For example, if the audio focus stack associated with the audio zone 0 indicates that an application that holds the audio focus in the audio zone 0 holds an exclusive focus, the audio zone 0 management module may reject the request of the multimedia playing application 1 for applying for the audio focus. The rejection of the request for applying for the audio focus may be transmitted to the multimedia playing application 1 via the cockpit audio service, the audio service, and the audio management API in sequence. In some embodiments, when receiving the rejection of the request for applying for the audio focus, the multimedia playing application 1 may provide a prompt for a user that audio playing fails or audio playing cannot be performed temporarily.

If the audio focus stack associated with the audio zone 0 indicates that the application that holds the audio focus in the audio zone 0 holds a permanent focus, the audio zone 0 management module may agree to the request of the multimedia playing application 1 for applying for the audio focus. The audio zone 0 management module may delete or move back, by one location, audio focus information placed at a stack top of the audio focus stack associated with the audio zone 0, and place audio focus information of the multimedia playing application 1 in the audio focus stack associated with the audio zone 0. The audio focus information of the multimedia playing application 1 may include information such as the application identifier of the multimedia playing application 1 and the type of the audio focus that is applied for. In this way, the multimedia playing application 1 can hold the audio focus in the audio zone 0, and play the audio by using a sound generation device associated with the audio zone 0.

Similarly, when the multimedia playing application 1 corresponds to an occupant zone 1, an occupant zone 1 audio management module may transmit, to an audio zone 1 management module, a message indicating that the multimedia playing application 1 requests to apply for the audio focus. In this way, the multimedia playing application 1 can apply for the audio focus in an audio zone 1. A focus management module in the audio zone 1 management module may determine, based on the type of the audio focus applied for by the multimedia playing application 1 and an audio focus stack associated with the audio zone 1, whether the multimedia playing application 1 can obtain the focus.

When the multimedia playing application 1 corresponds to an occupant zone 2, an occupant zone 1 audio management module may transmit, to an audio zone 2 management module, a message indicating that the multimedia playing application 1 requests to apply for the audio focus. In this way, the multimedia playing application 1 can apply for the audio focus in an audio zone 2. A focus management module in the audio zone 2 management module may determine, based on the type of the audio focus applied for by the multimedia playing application 1 and an audio focus stack associated with the audio zone 2, whether the multimedia playing application 1 can obtain the focus.

In some embodiments, when an audio zone associated with an occupant zone changes, an occupant zone audio management module may indicate an audio zone management module to update an audio focus stack associated with a corresponding audio zone. For example, the occupant zone 1 changes from being associated with the audio zone 1 to being associated with the audio zone 0. The occupant zone 1 audio management module may indicate the audio zone 1 management module to migrate the audio focus information in the audio focus stack associated with the audio zone 1 to the audio focus stack associated with the audio zone 0. If the multimedia playing application 1 corresponds to the occupant zone 1, the audio focus information of the multimedia playing application 1 is migrated to the audio focus stack associated with the audio zone 0. An audio zone in which the multimedia playing application 1 competes for the audio focus changes from the audio zone 1 to the audio zone 0. In the foregoing process of migrating the audio focus information, the multimedia playing application 1 may not sense a change of the audio zone in which the multimedia playing application 1 competes for the audio focus. The multimedia playing application 1 needs only to apply to the audio service for the audio focus or abandon the audio focus via the audio management API.

It can be learned from the foregoing embodiment that different audio zones can independently support an application in applying for an audio focus. An application that holds an audio focus in different audio zones may play an audio by using different sound generation devices. The cockpit system can manage an audio focus in an audio zone, to ensure that an appropriate application can hold an audio focus when a plurality of applications compete for the audio focus in a same audio zone, and play an audio by using a sound generation device associated with the audio zone.

### Volume management

A cockpit system provided in this application may separately manage volume in a plurality of audio zones. Volume in different audio zones can be independently adjusted without affecting each other. In other words, adjusting volume of an audio zone does not affect volume of another audio zone.

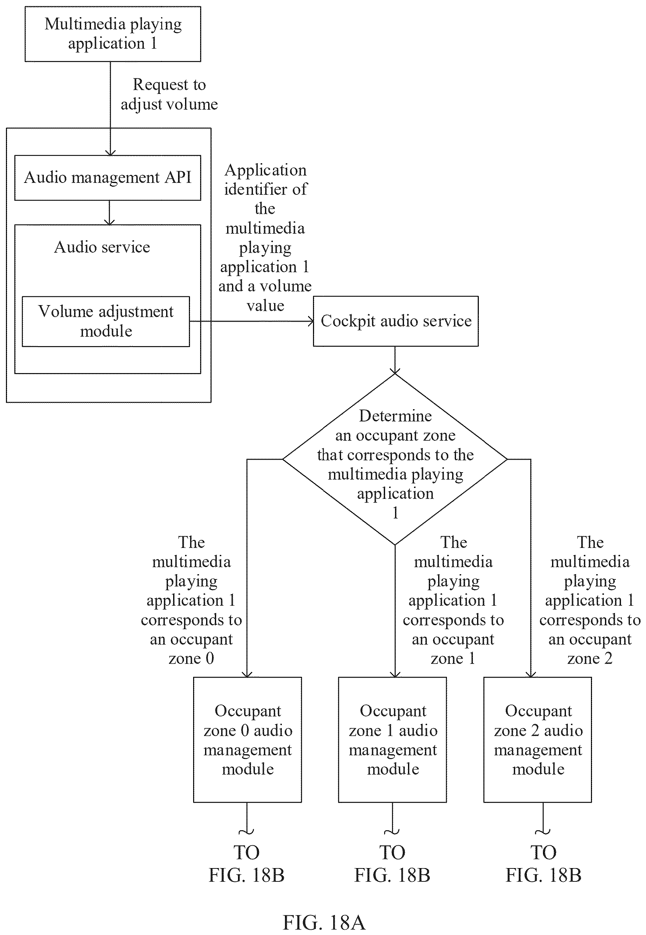

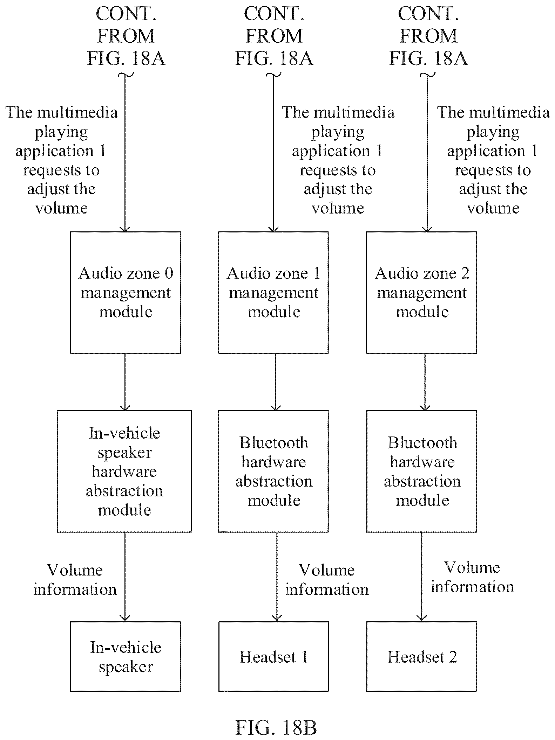

**FIG. 18**A and FIG. 18B **are a diagram of adjusting volume by a multimedia playing application according to an embodiment of this application.**

As shown in FIG. 18A and FIG. 18B, a multimedia playing application 1 may request, via an audio management API, an audio service to adjust volume. In some embodiments, after detecting a user operation of adjusting the volume, the multimedia playing application 1 may request to adjust the volume. For example, the user operation that is of adjusting the volume and that is detected by the multimedia playing application 1 may include an operation that is of sliding upward or downward in a preset zone and that is performed on a video playing interface displayed by the multimedia playing application 1. The user operation used to trigger the multimedia playing application 1 to adjust the volume is not limited in embodiments of this application.

The request of the multimedia playing application 1 for adjusting the volume may include but is not limited to an application identifier of the multimedia playing application 1 and a volume value.

A volume management module in the audio service may send the request of the multimedia playing application 1 for adjusting the volume to a cockpit audio service. The cockpit audio service may determine an occupant zone that corresponds to the multimedia playing application.

If the multimedia playing application 1 corresponds to an occupant zone 0, an occupant zone 0 audio management module may transmit, to an audio zone 0 management module, a message indicating that the multimedia playing application 1 requests to adjust the volume. Then, the audio zone 0 management module may adjust, via an in-vehicle speaker hardware abstraction module, the volume at which an in-vehicle speaker plays an audio.

If the multimedia playing application 1 corresponds to an occupant zone 1, an occupant zone 1 audio management module may transmit, to an audio zone 1 management module, a message indicating that the multimedia playing application 1 requests to adjust the volume. Then, the audio zone 1 management module may adjust, via a Bluetooth hardware abstraction module, the volume at which a headset 1 plays an audio. In some embodiments, when adjusting the volume of the headset 1, the Bluetooth hardware abstraction module may select a corresponding volume adjustment manner based on whether the headset 1 supports absolute volume, to adjust the volume. If the headset 1 supports the absolute volume, the Bluetooth hardware abstraction module may adjust the volume of the headset 1 according to a method for adjusting the absolute volume. If the headset 1 does not support the absolute audio, the Bluetooth hardware abstraction module may adjust the volume of the headset 1 according to a method for adjusting non-absolute volume. The absolute volume may mean that a volume value that needs to be adjusted is sent to the headset, and the headset performs volume processing on an audio stream, to implement volume adjustment. The non-absolute volume may mean that the Bluetooth hardware abstraction module performs volume processing on an audio stream based on a volume value that needs to be adjusted, and delivers the audio stream on which volume processing is performed to the headset for playing. In other words, the headset does not need to perform volume processing according to the method for adjusting the non-absolute volume. The non-absolute volume may also be referred to as relative volume. A method for adjusting the volume is not limited in embodiments of this application.

Similarly, if the multimedia playing application 1 corresponds to an occupant zone 2, an occupant zone 2 audio management module may transmit, to an audio zone 2 management module, a message indicating that the multimedia playing application 1 requests to adjust the volume. Then, the audio zone 2 management module may adjust, via the Bluetooth hardware abstraction module, the volume at which a headset 2 plays an audio. When adjusting the volume of the headset 2, the Bluetooth hardware abstraction module may select a corresponding volume adjustment manner based on whether the headset 2 supports the absolute volume, to adjust the volume. For details, refer to the foregoing method for adjusting the volume of the headset 1. Details are not described herein again.

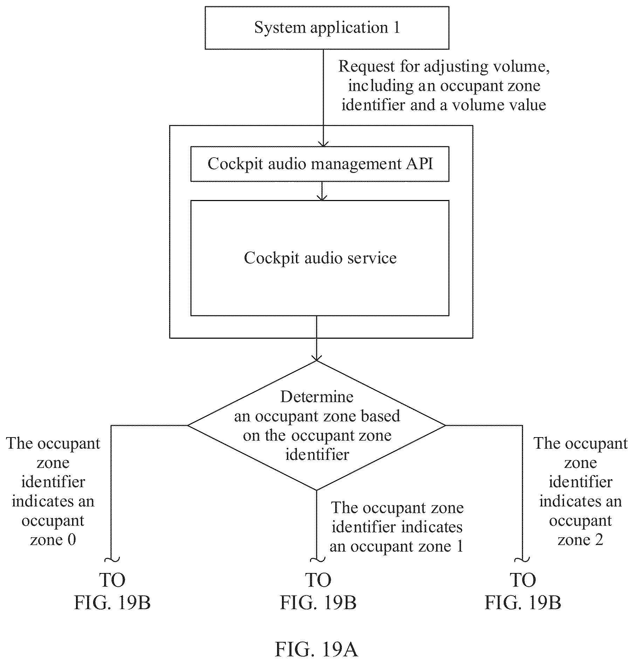

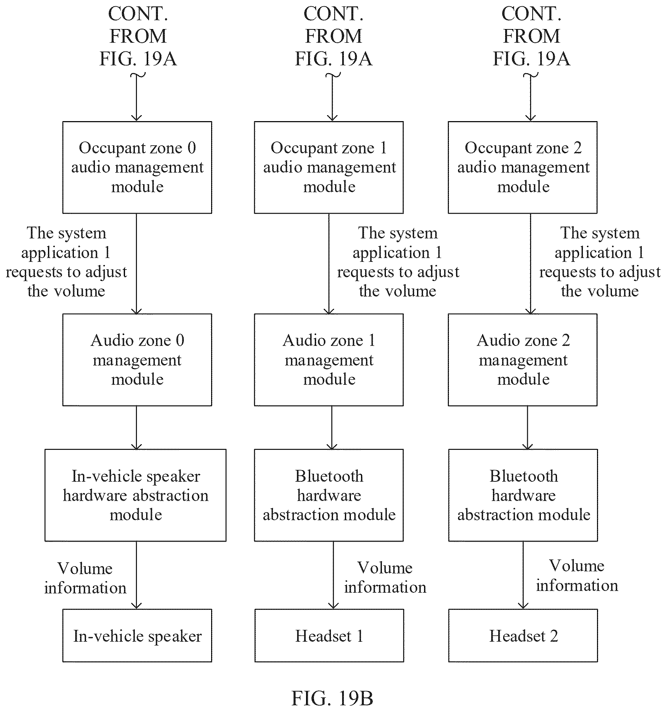

**FIG. 19**A and FIG. 19B **are a diagram of adjusting volume by a system application according to an embodiment of this application.**

As shown in FIG. 19A and FIG. 19B, a system application 1 may request, via a cockpit audio management API, a cockpit audio service to adjust volume. The system application 1 may be a system application like a cockpit voice assistant, an audio center, or a desktop service. After detecting a user operation of adjusting the volume, the system application 1 may request to adjust the volume. For example, if the system application 1 is the cockpit voice assistant, the user operation that is of adjusting the volume and that is detected by the system application 1 may include a voice instruction for adjusting the volume. If the system application 1 is the audio center, the user operation that is of adjusting the volume and that is detected by the system application 1 may include a user operation on a volume control (for example, a volume bar) in a multimedia playlist displayed in the audio center. If the system application is the desktop service, the user operation that is of adjusting the volume and that is detected by the system application 1 may include a user operation on a volume control (for example, a volume bar) displayed on a home screen, and a user operation on a physical button used to adjust volume on a screen. The user operation used to trigger the system application 1 to adjust the volume is not limited in embodiments of this application.

In some embodiments, the system application 1 may determine a screen to which the system application 1 belongs and an occupant zone bound to the screen to which the system application 1 belongs. The request of the system application 1 for adjusting the volume may include but is not limited to an occupant zone identifier of the occupant zone bound to the screen to which the system application 1 belongs, and a volume value.

The cockpit audio service may determine the occupant zone based on the occupant zone identifier in the request, and adjust the volume by using an occupant zone audio management module corresponding to the occupant zone.

If the occupant zone identifier indicates an occupant zone 0, an occupant zone 0 audio management module may transmit, to an audio zone 0 management module, a message indicating that the system application 1 requests to adjust the volume. In this way, volume in an audio zone 0, namely, volume of an in-vehicle speaker, can be adjusted.

If the occupant zone identifier indicates an occupant zone 1, an occupant zone 1 audio management module may transmit, to an audio zone 1 management module, a message indicating that the system application 1 requests to adjust the volume. In this way, volume in an audio zone 1, namely, volume of a headset 1, can be adjusted.

If the occupant zone identifier indicates an occupant zone 2, an occupant zone 2 audio management module may transmit, to an audio zone 2 management module, a message indicating that the system application 1 requests to adjust the volume. In this way, volume in an audio zone 2, namely, volume of a headset 2, can be adjusted.

For a specific method for adjusting the volume in the corresponding audio zone by the occupant zone audio management module corresponding to the occupant zone 0, the occupant zone 1, or the occupant zone 2, refer to the descriptions of the embodiment in FIG. 18A and FIG. 18B. Details are not described herein again.

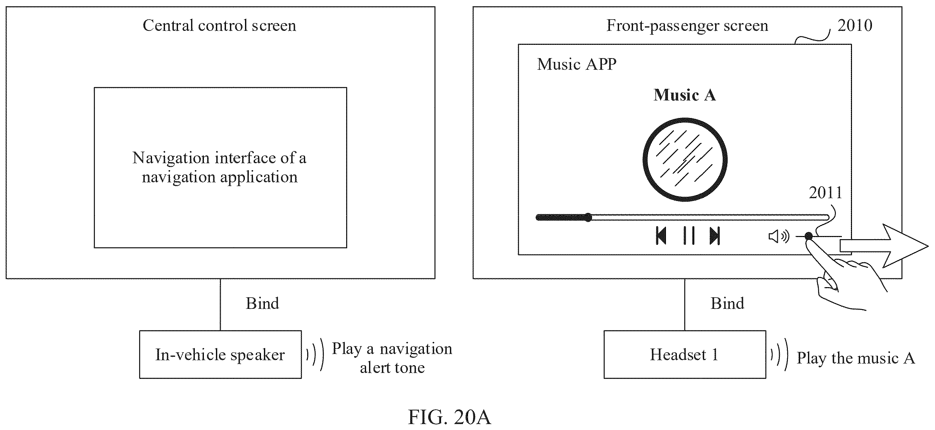

**FIG. 20A to FIG. 20D** **are some diagrams of a volume adjustment scenario according to this application.**

As shown in FIG. 20A, a central control screen is bound to an in-vehicle speaker. The central control screen may display a navigation interface of a navigation application. The in-vehicle speaker may play a navigation alert tone of the navigation application. A front-passenger screen is bound to a headset 1, and the front-passenger screen may display an audio playing interface 2010 of a music APP. The audio playing interface 2010 may include a volume bar 2011. The volume bar 2011 may be used to trigger the music APP to adjust volume. The headset 1 may play music A of the music APP.

In response to an operation that is of sliding rightward to increase the volume and that is performed on the volume bar 2011 shown in FIG. 20A, the music APP may request to increase the volume.

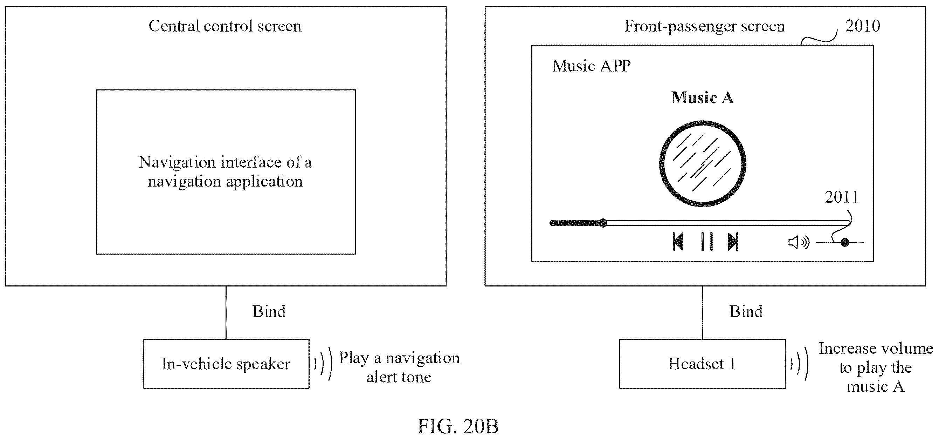

As shown in FIG. 20B, a cockpit system may adjust, based on the request of the music APP for increasing the volume, volume at which the headset 1 plays an audio, so that the headset 1 increases the volume to play the music A. For a specific method for adjusting, by the cockpit system, the volume at which the headset 1 plays the audio, refer to the method described in the embodiment in FIG. 18A and FIG. 18B.

It can be learned from FIG. 20A and FIG. 20B that, when an application on the front-passenger screen requests to adjust volume, the cockpit system may adjust the volume of the headset 1 bound to the front-passenger screen, and keep volume of the in-vehicle speaker unchanged. In this way, a user who listens to an audio via the in-vehicle speaker by using the central control screen and a user who listens to an audio via the headset 1 by using the front-passenger screen can independently listen to the audios and adjust volume without interfering with each other.

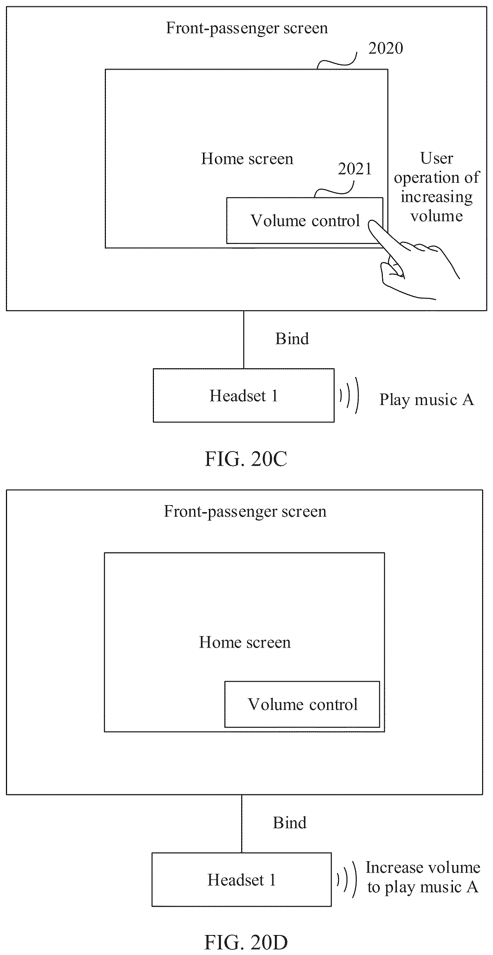

As shown in FIG. 20C, in a process in which the headset 1 plays music (for example, the music A) of the music APP, the front-passenger screen may display a home screen 2020 in response to an operation of invoking a home screen by the user. In some embodiments, the home screen 2020 may include a volume control. In response to a user operation that is of increasing volume and that is performed on the volume control 2021, a desktop service on the front-passenger screen may request to increase the volume.

As shown in FIG. 20D, the cockpit system may adjust, based on the request of the desktop service on the front-passenger screen for increasing the volume, the volume at which the headset 1 plays the audio, so that the headset 1 increases the volume to play the music A. For a specific method for adjusting, by the desktop service, the volume at which the headset 1 plays the audio, refer to the method described in the embodiment in FIG. 19A and FIG. 19B.

In some embodiments, when a first screen (for example, the central control screen) is associated with a first audio zone (for example, an audio zone 0) of the in-vehicle speaker, and a second screen (for example, the front-passenger screen) is associated with a second audio zone (for example, an audio zone 1) of a first sound generation device (for example, the headset 1), the user may adjust the volume of the in-vehicle speaker via the first screen, and adjust volume of the first sound generation device via the second screen. For example, when detecting an input operation that is performed on the second screen and that is used to adjust the volume to first volume, the cockpit system may adjust the playing volume of the first sound generation device to the first volume. For a process of adjusting the volume of the first sound generation device, refer to the embodiments in FIG. 20A to FIG. 20D.

### Media session management

A cockpit system provided in this application may manage media sessions of applications corresponding to occupant zones. When audio zones associated with a plurality of occupant zones are the same, the cockpit system may perform unified management on media sessions of applications corresponding to the plurality of occupant zones. The media sessions of the applications corresponding to the plurality of occupant zones may be placed in a same media session stack. When audio zones associated with two occupant zones are different, the cockpit system may separately manage media sessions of applications corresponding to the two occupant zones. The media sessions of the applications corresponding to the two occupant zones may be respectively placed in two different media session stacks. In other words, a media session stack in the cockpit system may be in a one-to-one correspondence with an audio zone. A media session stack corresponding to one audio zone may include an application corresponding to an occupant zone associated with the audio zone. Media session stacks corresponding to different audio zones may be independent of each other and do not affect each other.

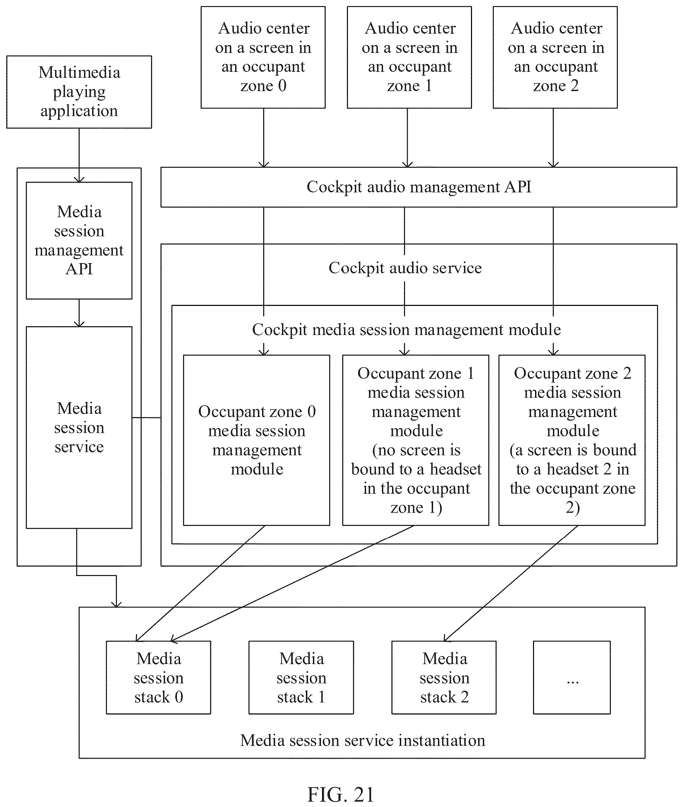

**FIG. 21** **is a diagram of media session management according to this application.**

Herein, an example in which a cockpit system includes an occupant zone 0, an occupant zone 1, and an occupant zone 2, the occupant zone 0 and the occupant zone are associated with a same audio zone, and an audio zone associated with the occupant zone 2 is different from the audio zone associated with the occupant zone 0 and the occupant zone 1 is used for description.

As shown in FIG. 21, a cockpit media session management module includes an occupant zone 0 media session management module, an occupant zone 1 media session management module, and an occupant zone 2 media session management module. A screen in the occupant zone 0 is bound to an in-vehicle speaker. The occupant zone 0 is associated with an audio zone of the in-vehicle speaker. The occupant zone 0 media session management module may indicate a media session service instantiation to create a media session stack 0, and store a media session of an application corresponding to the occupant zone 0 in the media session stack 0.

A screen in the occupant zone 1 is bound to no headset. To be specific, no external sound generation device is connected to the cockpit system via the screen in the occupant zone 1. Therefore, the screen in the occupant zone 1 is bound to the in-vehicle speaker. The occupant zone 1 and the occupant zone 0 are associated with the same audio zone. The occupant zone 1 media session management module may store a media session of an application corresponding to the occupant zone 1 in the media session stack 0.

A screen in the occupant zone 2 is bound to a headset 2. Therefore, the occupant zone 2 may be associated with an audio zone of the headset 2. The occupant zone 2 media session management module may indicate the media session service instantiation to create a media session stack 2, and store a media session of an application corresponding to the occupant zone 2 in the media session stack 2.

An audio center on the screen in the occupant zone 0 may invoke the occupant zone 0 media session management module via a cockpit audio management API, to obtain a media session. The audio center on the screen in the occupant zone 0 may obtain the media session in the media session stack 0.

An audio center on the screen in the occupant zone 1 may invoke the occupant zone 1 media session management module via the cockpit audio management API, to obtain a media session. The audio center on the screen in the occupant zone 1 may obtain the media session in the media session stack 0.

An audio center on the screen in the occupant zone 2 may invoke the occupant zone 2 media session management module via the cockpit audio management API, to obtain a media session. The audio center on the screen in the occupant zone 2 may obtain the media session in the media session stack 2.

The media session stack 0 includes the media sessions of the applications corresponding to the occupant zone 0 and the occupant zone 1. Therefore, multimedia playlists displayed in the audio centers on the screens in the occupant zone 0 and the occupant zone 1 are the same, and both include multimedia content information of the applications corresponding to the occupant zone 0 and the occupant zone 1. The media session stack 0 includes the media session of the application corresponding to the occupant zone 2. A multimedia playlist displayed in the audio center on the screen in the occupant zone 2 includes multimedia content information of the application corresponding to the occupant zone 2, and is different from the multimedia playlists displayed in the audio centers on the screens in the occupant zone 0 and the occupant zone 1.

When an external sound generation device is connected to the cockpit system via the screen in the occupant zone 1, a sound generation device bound to the screen in the occupant zone 1 may be switched from the in-vehicle speaker to the externally connected sound generation device. The occupant zone 2 media session management module may indicate the media session service instantiation to create a new media session stack, for example, a media session stack 1, and migrate the media session of the application corresponding to the occupant zone 1 from the media session stack 0 to the media session stack 1.

It can be learned that a media session stack and a media session in the media session stack may dynamically change with a connection and removal of an external sound generation device.

In some embodiments, a multimedia playing application may request, via a media session management API, a media session service to create a media session corresponding to the multimedia playing application. The media session service may send, to the cockpit media session management module, a message indicating that the multimedia application requests to create the media session. Then, the cockpit media session management module may determine an occupant zone that corresponds to the multimedia playing application, and create the media session by using an occupant zone media session management module corresponding to the corresponding occupant zone. For example, if a multimedia playing application corresponding to the occupant zone 0 requests to create a media session, the occupant zone 0 media session management module may create the media session corresponding to the multimedia playing application, and store the media session in the media session stack 0.

The multimedia playing application may request, via the media session management API, the media session service to access the media session of the multimedia playing application. When receiving the request of the multimedia playing application for accessing the media session, the media session service may obtain information about the media session of the multimedia playing application from the media session service instantiation, and then send the information about the media session to the multimedia playing application.

It can be learned that the multimedia playing application accesses the media session based on the media session service, and may not need to sense a change of the media session stack in the cockpit system.

### Screen migration

A cockpit system provided in this application may support screen migration. Screen migration may mean migrating multimedia content played on one screen to another screen. An original screen on which screen migration is performed may cancel displaying of a playing interface of the migrated multimedia content, and a sound generation device bound to the original screen may stop playing audio in the migrated multimedia content. After screen migration, a screen that accepts screen migration may display the playing interface of the migrated multimedia content, and a sound generation device bound to the screen may continue to play the audio from a location at which the multimedia content is played when screen migration is performed. This can ensure audio playing continuity in a screen migration scenario.

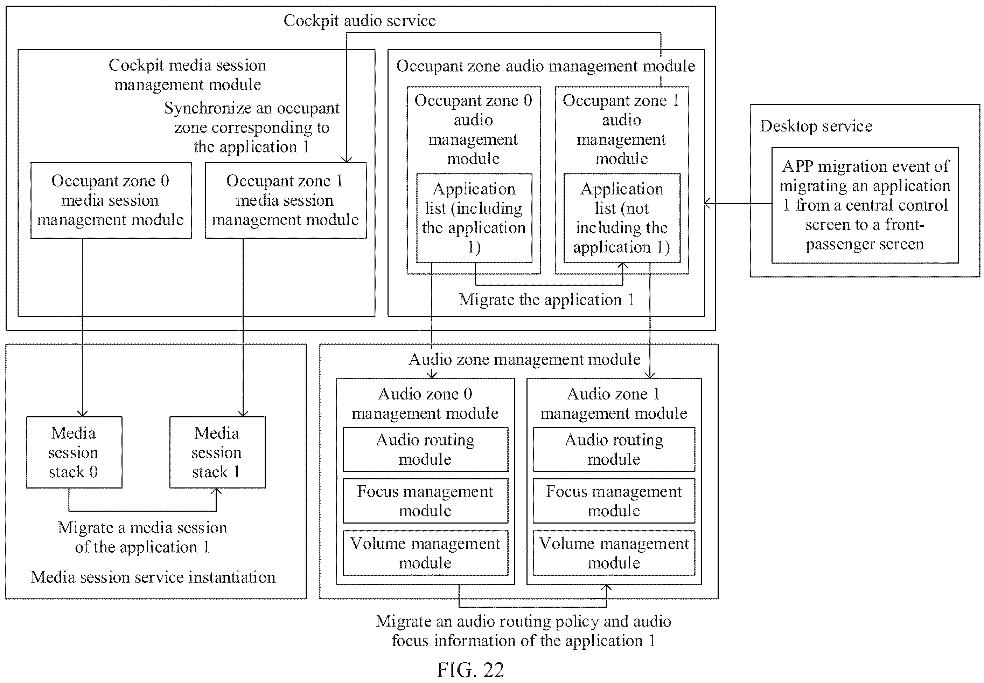

**FIG. 22** **is a diagram of a screen migration method according to this application.**

Herein, an example in which multimedia content that is being played on a central control screen is migrated to a front-passenger screen, and sound generation devices bound to the central control screen and the front-passenger screen are different is used for description.

As shown in FIG. 22, a desktop service may generate an APP migration event of migrating an application 1 from the central control screen to the front-passenger screen. The application 1 may be a multimedia playing application corresponding to the central control screen. The central control screen may display a multimedia playing interface of the application 1. A sound generation device, for example, an in-vehicle speaker, bound to the central control screen is playing an audio of the application 1. In response to a user operation of migrating the multimedia playing interface of the application 1 from the central control screen to the front-passenger screen, the desktop service on the central control screen may generate the APP migration event of the application 1. To be specific, the APP migration event may indicate that a display screen of the multimedia playing interface of the application 1 changes. The APP migration event may also be referred to as a screen migration event.

In some embodiments, the APP migration event may include but is not limited to an application identifier of a migrated application (namely, the application 1), a screen identifier of an original screen (namely, the central control screen), and a screen identifier of a screen (namely, the front-passenger screen) that accepts screen migration. The desktop service may send the APP migration event to an occupant zone audio management module. An occupant zone 0 is bound to the central control screen. The occupant zone 1 is bound to the front-passenger screen. Before screen migration, an application list in an occupant zone 0 audio management module may include the application 1, and an application list in an occupant zone 1 audio management module may not include the application 1.

Based on the APP migration event, the occupant zone 0 audio management module may migrate the application 1 in the application list to the occupant zone 1 audio management module. Therefore, after screen migration, the application list in the occupant zone 0 audio management module may not include the application 1, and the application list in the occupant zone 1 audio management module may include the application 1. In other words, the application 1 changes from an application corresponding to the occupant zone 0 to an application corresponding to the occupant zone 1.

The occupant zone 0 is associated with an audio zone 0. The occupant zone 1 is associated with an audio zone 1. Based on the APP migration event, the occupant zone 0 audio management module may further indicate an audio zone 0 management module to migrate an audio routing policy and the audio focus information of the application 1 to an audio zone 1 management module. The audio zone 1 management module may store the audio routing policy of the application 1 in an audio routing table associated with the audio zone 1, and store the audio focus information of the application 1 in an audio focus stack associated with the audio zone 1. Based on migration of the audio routing policy and the audio focus information, a sound generation device that plays the audio of the application 1 may change from the in-vehicle speaker to the sound generation device, for example, a headset 1, bound to the front-passenger screen.

In some embodiments, the audio zone 1 management module may place the audio focus information of the application 1 at a stack top of the audio focus stack associated with the audio zone 1. In this case, after screen migration, the application 1 may continue to hold an audio focus, but the audio focus held by the application 1 changes from an audio focus of the audio zone 0 to an audio focus of the audio zone 1.

When an occupant zone corresponding to the application 1 changes, the occupant zone 1 audio management module may synchronize the occupant zone corresponding to the application 1 to an occupant zone 1 media session management module. Then, the occupant zone 1 media session management module may indicate a media session service instantiation to migrate a media session of the application 1 from a media session stack 0 to a media session stack 1.

In some embodiments, when the multimedia playing interface of the application 1 is migrated to the front-passenger screen, a desktop service on the front-passenger screen may display the multimedia playing interface of the application 1 based on a size of the front-passenger screen, so that the multimedia playing interface of the application 1 adapts to the front-passenger screen.

It should be noted that, in the foregoing screen migration scenario, although the application 1 changes from the application corresponding to the occupant zone 0 to the application corresponding to the occupant zone 1, a storage location of an application installation package of the application 1 may remain unchanged. The central control screen may still display an application icon of the application 1. In response to an operation of starting the application 1, a cockpit system may still display a user interface of the application 1 on the central control screen.

It can be learned from FIG. 22 that, in a screen migration process, a migrated application may not need to be adapted to a multimedia display interface and an audio stream based on a screen after screen migration. Migration of a display screen of the multimedia playing interface and migration of an audio sound generation device may be both completed by an occupant zone management layer and an audio framework layer in the cockpit system. With reference to the foregoing embodiment of audio stream transmission in FIG. 16A and FIG. 16B, it can be learned that, because the audio routing policy of the application 1 is migrated to the audio routing table associated with the audio zone 1, an audio track of the application 1 may find the application 1 in the audio routing table associated with the audio zone 1, and then transmit the audio of the application 1 to an audio channel of the headset 1 based on the audio routing table associated with the audio zone 1. In this way, the audio of the application 1 can be seamlessly switched from the in-vehicle speaker to the headset 1, thereby maintaining audio playing continuity. That the audio of the application 1 is seamlessly switched from the in-vehicle speaker to the headset 1 may indicate that, when the audio of the application 1 is switched to the headset 1, the headset 1 may continue to play the audio from a location at which the in-vehicle speaker stops playing the audio.

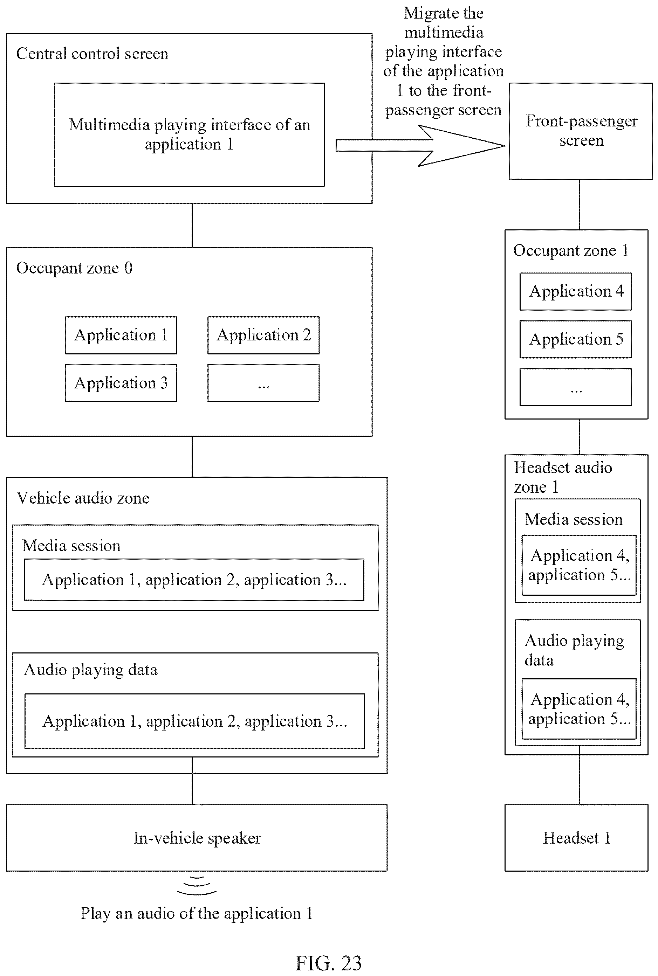

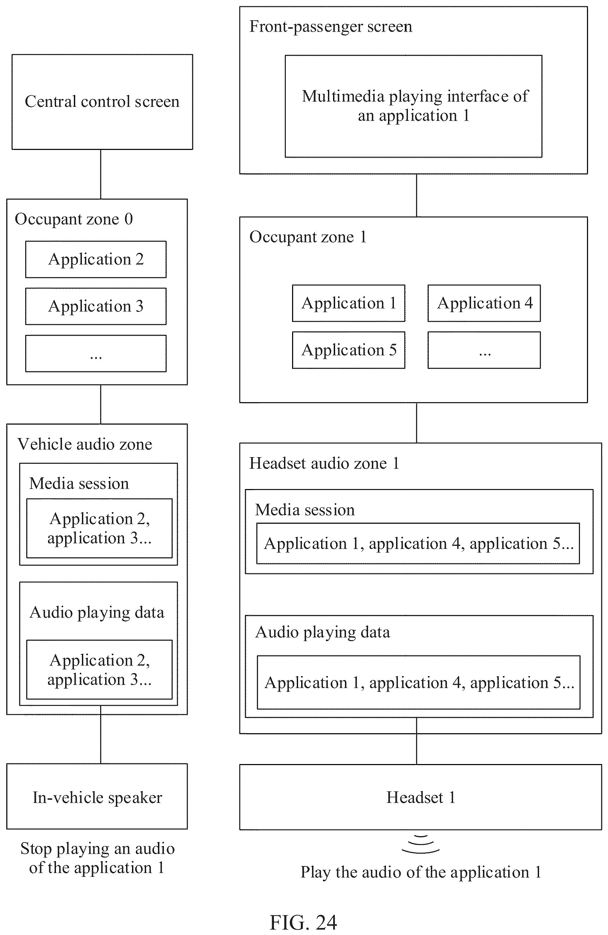

**FIG. 23** **and** **FIG. 24** **are diagrams of a screen migration scenario according to this application.**

As shown in FIG. 23, a central control screen displays a multimedia playing interface of an application 1. An occupant zone 0 bound to the central control screen includes the application 1. In other words, the application 1 is currently an application corresponding to the occupant zone 0. The occupant zone 0 is associated with a vehicle audio zone. A media session stack corresponding to the vehicle audio zone includes a media session of the application 1. The application 1 may determine, based on an audio routing table associated with the vehicle audio zone, that an audio of the application 1 needs to be routed to an audio channel of an in-vehicle speaker. Therefore, the application 1 may transmit audio playing data to the audio channel of the in-vehicle speaker. The in-vehicle speaker may play the audio of the application 1. In response to an operation of migrating the multimedia playing interface of the application 1 to a front-passenger screen, a cockpit system may migrate the media session, an audio routing policy, and an audio focus of the application 1. For a specific process, refer to the descriptions of the embodiment in FIG. 22. The operation of migrating the multimedia playing interface of the application 1 to the front-passenger screen is not limited in embodiments of this application. For example, the operation may be an operation that is of sliding three fingers in a specified direction and that is performed on the multimedia playing interface of the application 1.

As shown in FIG. 24, after the multimedia playing interface of the application 1 is migrated from the central control screen to the front-passenger screen, the front-passenger screen may display the multimedia playing interface of the application 1. The central control screen may cancel displaying of the multimedia playing interface of the application 1. The application 1 is migrated from the occupant zone 0 to an occupant zone 1. In other words, the application 1 changes to an application corresponding to the occupant zone 1. The media session of the application 1 is migrated to a media session stack corresponding to a headset audio zone 1. The media session stack corresponding to the vehicle audio zone no longer includes the media session of the application 1. In addition, the audio routing policy of the application 1 is migrated from the audio routing table associated with the vehicle audio zone to an audio routing table associated with the headset audio zone 1, and the application 1 may determine, based on the audio routing table associated with the headset audio zone 1, that the audio of the application 1 needs to be routed to an audio channel of a headset 1. Therefore, the application 1 may transmit the audio playing data to the audio channel of the headset 1. The headset 1 may play the audio of the application 1. After receiving no audio playing data of the application 1, the in-vehicle speaker may stop playing the audio of the application 1.

After screen migration of the application 1 is completed, the central control screen may start another multimedia playing application and play a corresponding audio via the in-vehicle speaker. In this case, the in-vehicle speaker and the headset 1 may respectively play the audios, without interfering with each other.

It can be learned from the foregoing screen migration scenario that, even if the application 1 is not installed on the front-passenger screen, the multimedia playing interface of the application 1 may also be displayed according to the foregoing screen migration method, and the audio of the application 1 may be played via the headset 1 bound to the front-passenger screen.

In some embodiments, in response to an operation of closing the application 1 on the front-passenger screen, the cockpit system may delete the application 1 from an application list corresponding to the occupant zone 1, and delete audio focus information and the audio routing policy of the application 1 from the audio zone 1.

In some embodiments, the multimedia playing interface of the application 1 may be further migrated back from the front-passenger screen to the central control screen. For details, refer to the descriptions of migrating the multimedia playing interface of the application 1 from the central control screen to the front-passenger screen in the foregoing embodiment.

In some embodiments, when a first screen (for example, the central control screen) is associated with a first audio zone (for example, the audio zone 0) of the in-vehicle speaker, and a second screen (for example, the front-passenger screen) is associated with a second audio zone (for example, the audio zone 1) of a first sound generation device (for example, the headset 1), an audio played by the in-vehicle speaker may be migrated from the first screen to the second screen with a multimedia playing interface corresponding to the audio, and migrated to the first sound generation device for playing. For example, the first screen displays a first interface of a second application. The first interface may be the multimedia playing interface of the application 1 shown in FIG. 23. The first interface is a playing interface of a second audio. The second audio may be the audio of the application 1. When detecting an input operation of migrating the first interface from the first screen to the second screen, the cockpit system may display the first interface on the second screen, cancel displaying of the first interface on the first screen, and switch the second audio from the in-vehicle speaker to the first sound generation device to continue playing. The in-vehicle speaker may pause playing of the second audio. For details, refer to the embodiments in which the multimedia playing interface of the application 1 is migrated from the central control screen to the front-passenger screen shown in FIG. 23 and FIG. 24.

In the scenario in which the first interface of the second application is migrated from the first screen to the second screen, the cockpit system may migrate an audio focus of the second application in an audio focus stack, migrate application information of the second application in an audio routing table, and migrate a media session of the second application in a media session stack. For details, refer to the descriptions of the embodiment in which the application 1 is migrated shown in FIG. 22.

### Screen sharing

A cockpit system provided in this application may support screen sharing. Screen sharing may mean sharing multimedia content played on one screen to one or more other screens. An original screen on which screen sharing is performed may continue to display a playing interface of the shared multimedia content.

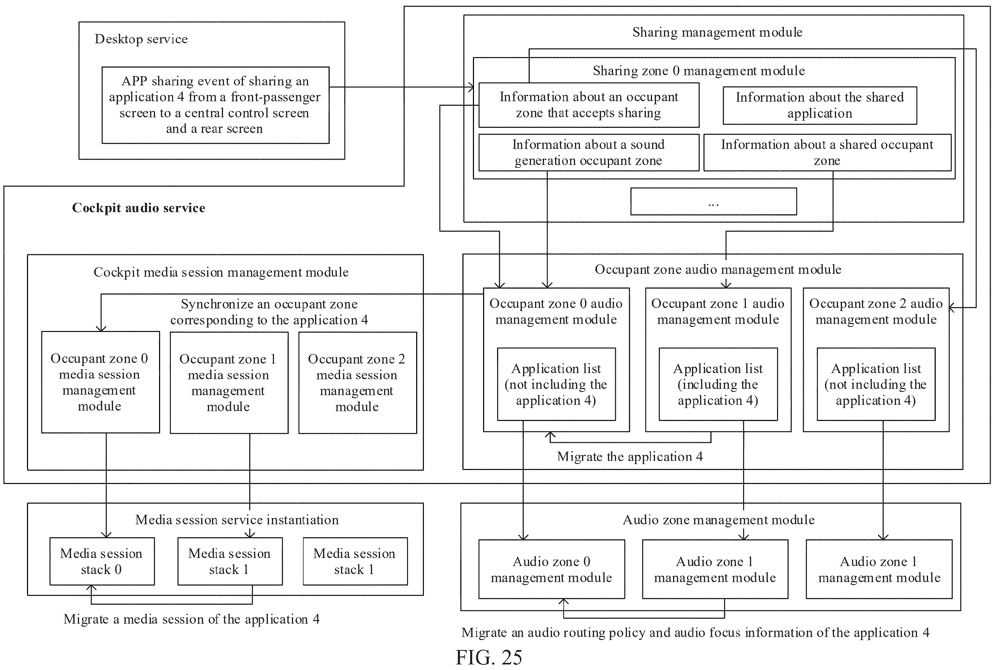

**FIG. 25** **is a diagram of a screen sharing method according to this application.**

Herein, an example in which multimedia content that is being played on a front-passenger screen is shared to a central control screen and a rear screen, and sound generation devices bound to the central control screen, the front-passenger screen, and the rear screen are different from each other is used for description.

As shown in FIG. 25, in a cockpit system, a cockpit audio service may further include a sharing management module. The sharing management module may be configured to manage screen sharing. Content managed by the sharing management module may include information about an occupant zone that accepts sharing, information about a shared application, information about a sound generation occupant zone, and information about a shared occupant zone. The information about the occupant zone that accepts sharing may indicate an occupant zone to which a screen that accepts multimedia content sharing belongs. The information about the shared application may indicate an application to which the shared multimedia content belongs. The information about the sound generation occupant zone may indicate an occupant zone in which a sound generation device bound to a screen plays an audio in the shared multimedia content after screen sharing. The information about the shared occupant zone may indicate an occupant zone to which a screen that initiates screen sharing belongs, namely, an occupant zone to which an original screen that plays the shared content before screen sharing belongs.

As shown in FIG. 25, a desktop service may generate an APP sharing event of sharing an application 4 from the front-passenger screen to the central control screen and the rear screen. The application 4 may be a multimedia playing application corresponding to the front-passenger screen. The front-passenger screen may display a multimedia playing interface of the application 4, and the sound generation device, for example, a headset 1, bound to the front-passenger screen is playing an audio of the application 4. In response to a user operation of sharing the multimedia playing interface of the application 4 from the front-passenger screen to the central control screen and the rear screen, the desktop service of the front-passenger screen may generate the APP sharing event of the application 4. In other words, the APP sharing event may mean that the multimedia playing interface of the application 4 is to be displayed on more screens. The APP sharing event may also be referred to as a screen sharing event.

In some embodiments, the APP sharing event may include but is not limited to an application identifier of a shared application (namely, the application 4), a screen identifier of an original screen (namely, the front-passenger screen), and screen identifiers of screens (namely, the central control screen and the rear screen) that accept sharing. The desktop service may send the APP sharing event to the sharing management module. The sharing management module may create a sharing zone 0 management module based on the APP sharing event. The sharing zone 0 management module may be configured to manage the APP sharing event of the application 4. The sharing management module may include one or more sharing zone management modules. One sharing zone management module may be configured to manage one APP sharing event. When receiving another APP sharing event, the sharing management module may create a new sharing zone management module.

Based on the APP sharing event of the application 4, the sharing zone management module may determine the following information in the APP sharing event: information about an occupant zone that accepts sharing, information about the shared application, information about a sound generation occupant zone, and information about a shared occupant zone. In the APP sharing event of the application 4, the information about the occupant zone that accepts sharing may indicate an occupant zone 0 in which the central control screen is located and an occupant zone 2 in which the rear screen is located. The information about the shared application may indicate the application 4. The information about the sound generation occupant zone may indicate the occupant zone 0 in which the central control screen bound to an in-vehicle speaker is located. The information about the shared occupant zone may indicate an occupant zone in which the front-passenger screen is located. In other words, in a scenario in which the front-passenger screen shares multimedia content of the application 4 with the central control screen and the rear screen, the front-passenger screen, the central control screen, and the rear screen may all display the multimedia playing interface of the application 4, and the audio of the application 4 is switched from the headset 1 to the in-vehicle speaker. In this way, a driver can watch the multimedia playing interface of the application 4 via the central control screen, and a user seated on a front passenger seat can watch the multimedia playing interface of the application 4 via the front-passenger screen. A user seated at a rear location can watch the multimedia playing interface of the application 4 via the rear screen. All users in a vehicle can listen to the audio of the application 4 via the in-vehicle speaker.

A manner of selecting a sound generation device after screen sharing is not limited in embodiments of this application. In some embodiments, if the screen that accepts sharing includes the central control screen or an original screen on which screen sharing is performed is the central control screen, the sound generation device after screen sharing may be the in-vehicle speaker bound to the central control screen. Another externally connected sound generation device in the cockpit system does not need to play the audio of the shared application. If the screen that accepts sharing does not include the central control screen, and the original screen on which screen sharing is performed is not the central control screen, the sound generation device after screen sharing may include a sound generation device bound to the screen that accepts screen sharing and a sound generation device bound to the original screen on which screen sharing is performed. In some embodiments, in any APP sharing event, the sound generation device after screen sharing may be switched to the in-vehicle speaker. Another externally connected sound generation device in the cockpit system does not need to play the audio of the shared application.

The sharing zone 0 management module may indicate, to an occupant zone 1 audio management module based on the information about the shared occupant zone and the information about the shared application, that an occupant zone 1 is the shared occupant zone and the shared application is the application 4. The sharing zone 0 management module may indicate, based on the information about the occupant zone that accepts sharing, an occupant zone 0 audio management module and an occupant zone 2 audio management module to accept screen sharing. The sharing zone 0 management module may indicate, based on the information about the sound generation occupant zone, that the occupant zone 0 is an occupant zone in which the sound generation device after screen sharing is located. Then, the occupant zone 1 audio management module may migrate the application 4 in an application list to the occupant zone 0 audio management module. Therefore, after screen sharing, the application list in the occupant zone 1 audio management module may not include the application 4, and an application list in the occupant zone 0 audio management module may include the application 4. In other words, the application 4 changes from an application corresponding to the occupant zone 1 to an application corresponding to the occupant zone 0.

The occupant zone 0 is associated with an audio zone 0. The occupant zone 1 is associated with an audio zone 1. Based on the indication of the sharing zone 0 management module, the occupant zone 1 audio management module may indicate an audio zone 1 management module to migrate an audio routing policy and audio focus information of the application 4 to an audio zone 0 management module. The audio zone 0 management module may store the audio routing policy of the application 4 in an audio routing table associated with the audio zone 0, and store the audio focus information of the application 4 in an audio focus stack associated with the audio zone 0. Based on migration of the audio routing policy and the audio focus information, a sound generation device that plays the audio of the application 4 may change from the headset 1 to the in-vehicle speaker bound to the central control screen.

In some embodiments, the audio zone 0 management module may place the audio focus information of the application 4 at a stack top of the audio focus stack associated with the audio zone 0. In this case, after screen migration, the application 4 may continue to hold an audio focus, but the audio focus held by the application 4 changes from an audio focus of the audio zone 1 to an audio focus of the audio zone 0.

In some embodiments, when an occupant zone corresponding to the application 4 changes, the occupant zone 0 audio management module may synchronize the occupant zone corresponding to the application 4 to an occupant zone 0 media session management module. Then, the occupant zone 0 media session management module may indicate a media session service instantiation to migrate a media session of the application 4 from a media session stack 1 to a media session stack 0. Optionally, the media session of the application 4 may not be migrated, and is still stored in the media session stack 1.

In some embodiments, when the multimedia playing interface of the application 4 is shared to the central control screen and the rear screen, a desktop service of the central control screen may display the multimedia playing interface of the application 4 based on a size of the central control screen, so that the multimedia playing interface of the application 4 adapts to the central control screen; and a desktop service of the rear screen may display the multimedia playing interface of the application 4 based on a size of the rear screen, so that the multimedia playing interface of the application 4 adapts to the rear screen.

It should be noted that, in the foregoing screen sharing scenario, although the application 4 changes from the application corresponding to the occupant zone 1 to the application corresponding to the occupant zone 0, a storage location of an application installation package of the application 4 may remain unchanged. The front-passenger screen may still display an application icon of the application 4.

It can be learned from FIG. 25 that, in a screen sharing process, a shared application may not need to be adapted to a multimedia display interface and an audio stream based on a screen that accepts screen sharing. Migration of a display screen of the multimedia playing interface and migration of an audio sound generation device may be both completed by an occupant zone management layer and an audio framework layer in the cockpit system. With reference to the foregoing embodiment of audio stream transmission in FIG. 16A and FIG. 16B, it can be learned that, because the audio routing policy of the application 4 is migrated to the audio routing table associated with the audio zone 0, an audio track of the application 4 may find the application 4 in the audio routing table associated with the audio zone 0, and then transmit the audio of the application 4 to an audio channel of the in-vehicle speaker based on the audio routing table associated with the audio zone 0. In this way, the audio of the application 4 can be seamlessly switched from the headset 1 to the in-vehicle speaker, thereby maintaining audio playing continuity.

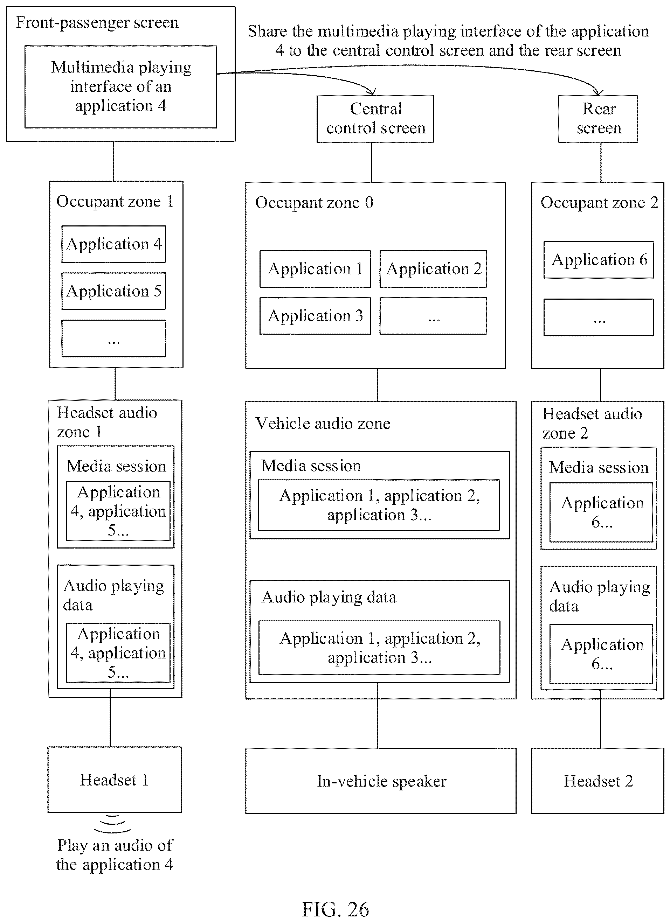

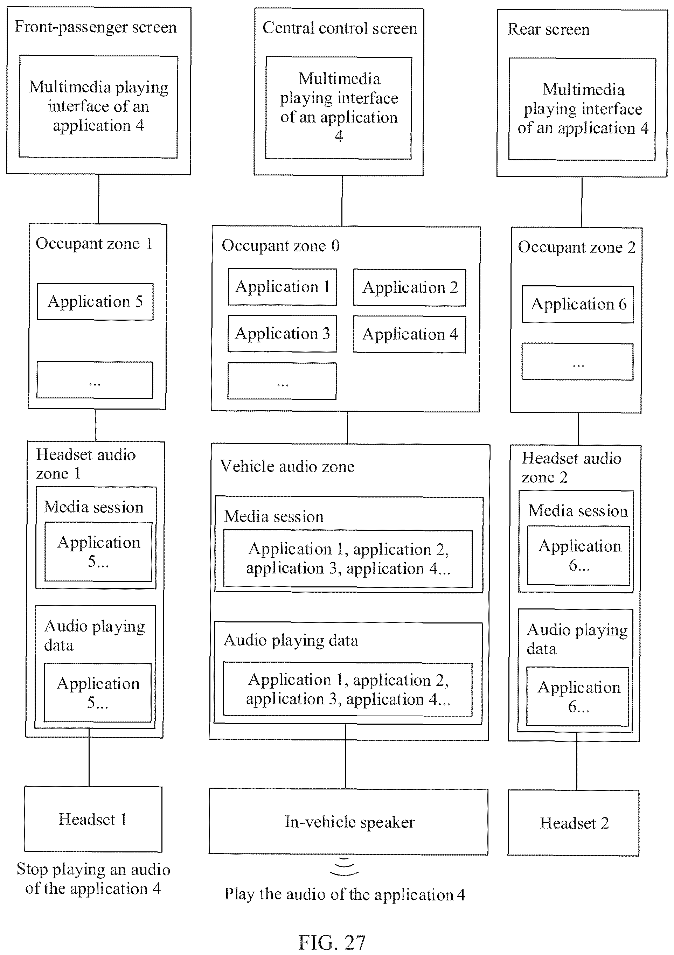

**FIG. 26** **and** **FIG. 27** **are diagrams of a screen sharing scenario according to this application.**

As shown in FIG. 26, a front-passenger screen displays a multimedia playing interface of an application 4. An occupant zone 1 bound to the front-passenger screen includes the application 4. In other words, the application 4 is currently an application corresponding to the occupant zone 1. The occupant zone 1 is associated with a headset audio zone 1. A media session stack corresponding to the headset audio zone 1 includes a media session of the application 4. The application 4 may determine, based on an audio routing table associated with the headset audio zone 1, that an audio of the application 4 needs to be routed to an audio channel of a headset 1. Therefore, the application 4 may transmit audio playing data to the audio channel of the headset 1. The headset 1 may play the audio of the application 4. In response to an operation of sharing the multimedia playing interface of the application 4 to a central control screen and a rear screen, a cockpit system may migrate the media session, an audio routing policy, and an audio focus of the application 4. For a specific process, refer to the descriptions of the embodiment in FIG. 25. The operation of migrating the multimedia playing interface of the application 1 to the front-passenger screen is not limited in embodiments of this application.

As shown in FIG. 27, when the multimedia playing interface of the application 4 is shared from the front-passenger screen to the central control screen and the rear screen, the front-passenger screen, the central control screen, and the rear screen may all display the multimedia playing interface of the application 4. The application 4 is migrated from the occupant zone 1 to an occupant zone 0. In other words, the application 4 changes to an application corresponding to the occupant zone 0. The media session of the application 4 is migrated to a media session stack corresponding to a vehicle audio zone. The media session stack corresponding to the headset audio zone 1 no longer includes the media session of the application 4. In addition, the audio routing policy of the application 4 is migrated from the audio routing table associated with the headset audio zone 1 to an audio routing table associated with the vehicle audio zone, and the application 4 may determine, based on the audio routing table associated with the vehicle audio zone, that the audio of the application 4 needs to be routed to an audio channel of an in-vehicle speaker. Therefore, the application 4 may transmit the audio playing data to the audio channel of the in-vehicle speaker. The in-vehicle speaker may play the audio of the application 4. After receiving no audio playing data of the application 4, the headset 1 may stop playing the audio of the application 4. A headset 2 also receives no audio playing data of the application 4, and does not need to play the audio of the application 4.

In some embodiments, after screen sharing of the application 4 is completed, in response to an operation of closing the application 4 on the front-passenger screen, the front-passenger screen may cancel displaying of the multimedia playing interface of the application 4. The central control screen and the rear screen may still continue to display the multimedia playing interface of the application 4, and the in-vehicle speaker may continuously play the audio of the application 4. After closing the application 4, the front-passenger screen may start another multimedia playing application, and play a corresponding audio via the headset 1. Similarly, after screen sharing of the application 4 is completed, in response to an operation of closing the application 4 on the rear screen, the rear screen may cancel displaying of the multimedia playing interface of the application 4. The central control screen and the front-passenger screen may still continue to display the multimedia playing interface of the application 4, and the in-vehicle speaker may continuously play the audio of the application 4. After closing the application 4, the rear screen may start another multimedia playing application, and play a corresponding audio via the headset 2.

In some embodiments, after screen sharing of the application 4 is completed, in response to an operation of closing the application 4 on the central control screen, the front-passenger screen may cancel displaying of the multimedia playing interface of the application 4. The front-passenger screen and the rear screen may still continue to display the multimedia playing interface of the application 4, and the in-vehicle speaker may continuously play the audio of the application 4. The application 4 still holds an audio focus of the vehicle audio zone. If another application on the central control screen applies for the audio focus and preempts the audio focus held by the application 4, the in-vehicle speaker may pause playing of the audio of the application 4, and instead, play an audio of the application that preempts the audio focus of the application 4.

In some embodiments, in a screen sharing scenario, if a part of screens in an occupant zone are screens that accept sharing, and a part of screens are screens that do not accept sharing, the screens that accept sharing in the occupant zone may display shared multimedia content, and the screens that do not accept sharing do not display the shared multimedia content. In addition, when the occupant zone is a sound generation occupant zone after screen sharing, and an application on the screen that does not accept sharing in the occupant zone preempts the audio focus, playing of the shared multimedia content may be paused, and a sound generation device in an audio zone associated with the occupant zone may play an audio of the application that preempts the audio focus. When the occupant zone is not the sound generation occupant zone after screen sharing, and the application on the screen that does not accept sharing in the occupant zone applies for the audio focus, the sound generation device in the audio zone associated with the occupant zone may play the audio of the application that applies for the audio focus, and an audio in the shared multimedia content may continue to be played in another occupant zone.

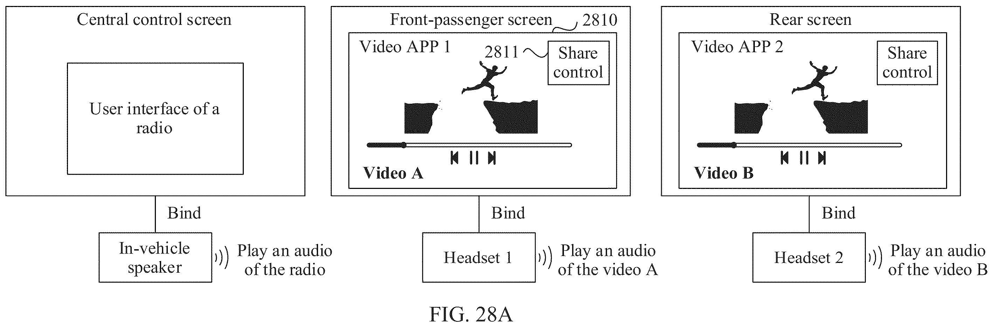

**FIG. 28A to FIG. 28F** **are some other diagrams of a screen sharing scenario according to this application.**

As shown in FIG. 28A, a central control screen is bound to an in-vehicle speaker. The central control screen may display a user interface of a radio. The in-vehicle speaker may play an audio of the radio. A front-passenger screen is bound to a headset 1. The front-passenger screen may display a video playing interface 2810 and a share control 2811 of a video APP 1. The share control 2811 may be used to trigger screen sharing. The headset 1 may play an audio of a video A of the video APP 1. A rear screen is bound to a headset 2. The rear screen may display a video playing interface of a video APP 2. The headset 2 may play an audio of a video B of the video APP 2.

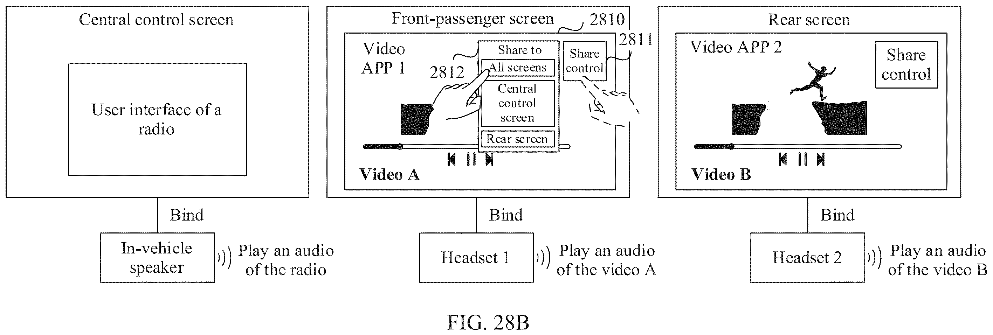

As shown in FIG. 28B, in response to an operation on the share control 2811, the front-passenger screen may display a device option box 2812. The device option box 2812 may include one or more device options for screen sharing, for example, an all-screens option, a central control screen option, and a front-passenger screen option. The all-screens option may be used to share multimedia content to all screens in a cockpit. The central control screen option may be used to share the multimedia content to the central control screen. The rear screen option may be used to share the multimedia content to the rear screen. In response to an operation of selecting all the screens shown in FIG. 28B, the front-passenger screen may share multimedia content of the video APP 1 to all the screens in the cockpit, for example, the central control screen and the rear screen.

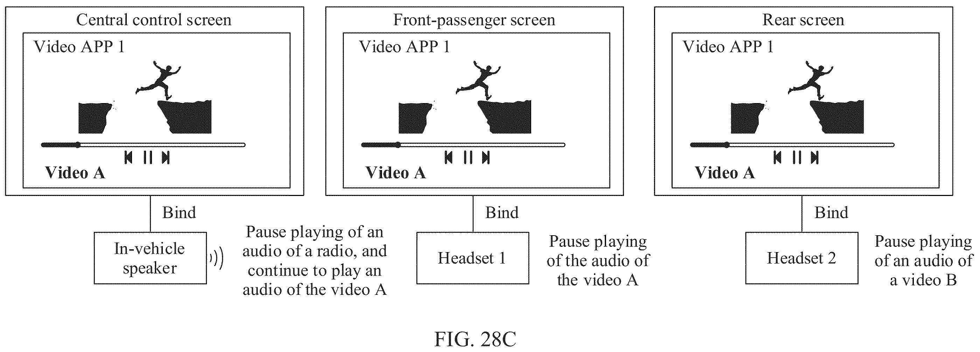

As shown in FIG. 28C, the central control screen may accept screen sharing of the front-passenger screen, and display the video playing interface of the video APP 1. The rear screen may also accept screen sharing of the front-passenger screen, and display the video playing interface of the video APP 1. The front-passenger screen may still display the video playing interface of the video APP 1. After screen sharing is performed on the front-passenger screen, a sound generation device that plays an audio in the shared multimedia content may be switched from the headset 1 to the in-vehicle speaker. The in-vehicle speaker may pause playing of the audio of the radio, and continue to play the audio of the video A. The headset 1 may pause playing of the audio of the video A. The headset 2 may pause playing of the audio of the video B.

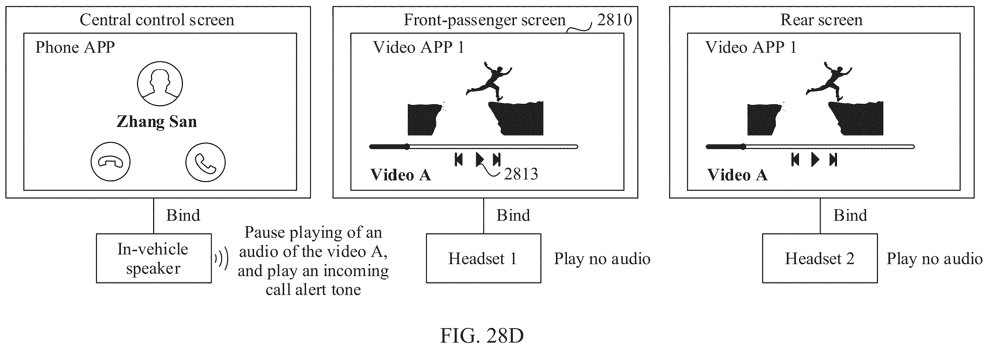

As shown in FIG. 28D, after screen sharing is performed on the front-passenger screen, a phone APP on the central control screen receives an incoming call. The central control screen may cancel displaying of the video playing interface of the video APP 1, and instead, display an incoming call prompt interface of the phone APP. The phone APP may preempt an audio focus of the video APP 1. The in-vehicle speaker may pause playing of the audio of the video A, and instead, play an incoming call alert tone of the phone APP. Because the audio focus of the video APP 1 is preempted, playing of the multimedia content of the video APP 1 may be paused. As shown in FIG. 28D, the front-passenger screen may display the video playing interface 2810 of the video APP 1. The video playing interface 2810 may include a play control 2813. The play control 2813 may indicate that the video A in the video playing interface 2810 is currently in a playing pause state, and may be used to trigger playing of the video A. Similarly, the video playing interface of the video APP 1 displayed on the rear screen may also indicate that playing of the video A is paused. Both the headset 1 and the headset 2 play no audio.

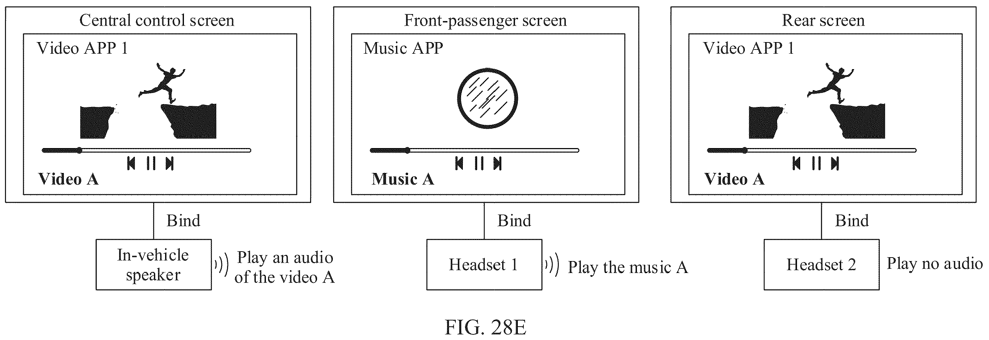

As shown in FIG. 28E, after screen sharing is performed on the front-passenger screen, the front-passenger screen may close the video APP 1, and start a music APP. The front-passenger screen may display the music APP, and play music A of the audio APP via the headset 1 bound to the front-passenger screen. The central control screen and the rear screen may still continue to display the shared multimedia content, namely, the video playing interface of the video APP 1. The in-vehicle speaker may continue to play the audio of the video A of the video APP 1. The headset 2 plays no audio.

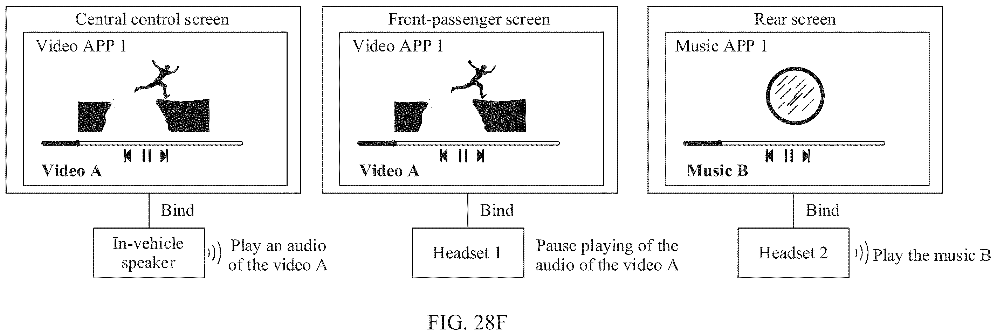

As shown in FIG. 28F, after screen sharing is performed on the front-passenger screen, the rear screen may close the video APP 1, and start a music APP 1. The rear screen may display the music APP 1, and play music B of the music APP 1 via the headset 2 bound to the rear screen. The central control screen and the front-passenger screen may still continue to display the shared multimedia content, namely, the video playing interface of the video APP 1. The in-vehicle speaker may continue to play the audio of the video A of the video APP 1. The headset 1 plays no audio.

In some embodiments, when a first screen (for example, the central control screen) is associated with a first audio zone (for example, an audio zone 0) of the in-vehicle speaker, and a second screen (for example, the front-passenger screen) is associated with a second audio zone (for example, an audio zone 1) of a first sound generation device (for example, the headset 1), an audio played by a first sound generation device may be shared from the second screen to the first screen with a multimedia interface corresponding to the audio, and is migrated to the in-vehicle speaker for playing. For example, the second screen displays a second interface of a first application. The second interface may be a playing interface of a first audio. For the second interface, refer to the multimedia playing interface of the application 4 shown in FIG. 26 of this application. The first audio may be, for example, an audio of the application 4. When detecting an input operation of sharing the second interface from the second screen to the first screen, a cockpit system may display the second interface on the first screen, and switch the first audio from the first sound generation device to the in-vehicle speaker to continue playing. For details, refer to the descriptions of the embodiment in which the multimedia playing interface of the application 4 is shared from the front-passenger screen to the central control screen shown in FIG. 26 and FIG. 27.

In the scenario in which the second interface of the first application is migrated from the second screen to the first screen, the cockpit system may migrate an audio focus of the first application in an audio focus stack, migrate application information of the first application in an audio routing table, and migrate a media session of the first application in a media session stack. For details, refer to the descriptions of the embodiment in which the application 4 is migrated shown in FIG. 25.

In some embodiments, a vehicle further includes a third screen. For example, the third screen may be the rear screen. An audio zone associated with the third screen is different from an audio zone associated with the first screen, and is also different from an audio zone associated with the second screen. For example, the third screen is associated with a third audio zone of a second sound generation device. The second sound generation device may be the headset 2. The third audio zone may be the audio zone 2. When detecting an input operation of sharing the second interface from the second screen to the third screen, the cockpit system may display the second interface on the third screen. For details, refer to that the rear screen displays the multimedia playing interface of the application 4 after the multimedia playing interface of the application 4 is shared from the front-passenger screen to the rear screen shown in FIG. 26 and FIG. 27.

The input operation of sharing the second interface from the second screen to the first screen and the input operation of sharing the second interface from the second screen to the third screen may be a same input operation. For the input operation, refer to the operation on the all-screens options shown in FIG. 28B. Optionally, the input operation of sharing the second interface from the second screen to the first screen and the input operation of sharing the second interface from the second screen to the third screen may alternatively be two separate operations.

In some embodiments, after the second interface is shared from the second screen to the first screen and/or the third screen, when detecting that a fourth application on the second screen requests to play a fourth audio, the cockpit system may play the fourth audio via the first sound generation device. For example, the fourth application may be the music APP shown in FIG. 28E of this application. The fourth audio may be the music A of the music APP. When detecting that a fifth application on the third screen requests to play a fifth audio, the cockpit system may play the fifth audio via the second sound generation device. For example, the fifth application may be the music APP 1 shown in FIG. 28F of this application. The fifth audio may be the music B of the audio zone APP 1. When detecting that a sixth application on the first screen requests to play a sixth audio, the cockpit system may play the sixth audio via the in-vehicle speaker, and pause playing of the first audio. For example, the sixth application may be the phone APP shown in FIG. 28D of this application. The sixth audio may be the incoming call alert tone of the phone APP.

It may be understood that each user interface described in embodiments of this application is merely an example interface, and does not constitute a limitation on the solutions of this application. In another embodiment, the user interface may use a different interface layout, may include more or fewer controls, may add or reduce another function option, and should fall within the protection scope of this application provided that the user interface is based on a same inventive idea provided in this application.

It should be noted that, if no contradiction or conflict occurs, any feature or any part of any feature in any embodiment of this application may be combined, and a combined technical solution also falls within the scope of embodiments of this application.

In conclusion, the foregoing embodiments are intended merely to describe the technical solutions in this application, but not to limit the technical solutions. Although this application is described in detail with reference to the foregoing embodiments, persons of ordinary skill in the art should understand that they may still make modifications to the technical solutions described in the foregoing embodiments or make equivalent replacements to a part of technical features thereof, without departing from the scope of the technical solutions in embodiments of this application.

## Claims

1. A cockpit multi-audio-zone management method, wherein the method is applied to a vehicle, the vehicle comprises an in-vehicle speaker and a plurality of screens, the plurality of screens comprise a first screen and a second screen, both the first screen and the second screen are associated with a first audio zone corresponding to the in-vehicle speaker, and the method comprises:
detecting that a first application on the second screen requests to play a first audio, and playing the first audio via the in-vehicle speaker;
detecting that a second application on the first screen requests to play a second audio, playing the second audio via the in-vehicle speaker, and pausing playing of the first audio or reducing playing volume of the first audio;
detecting an input operation that is performed on the second screen and that is for connecting a first sound generation device, connecting the vehicle to the first sound generation device, and creating a second audio zone corresponding to the first sound generation device, wherein an audio zone associated with the second screen changes from the first audio zone to the second audio zone; and
detecting again that the first application requests to play the first audio, and playing the first audio via the first sound generation device.

2. The method according to claim 1, wherein the vehicle stores a first configuration file, the first configuration file indicates a correspondence between the plurality of screens and an occupant zone, any one of the plurality of screens corresponds to one occupant zone, audio zones associated with screens corresponding to a same occupant zone are consistent, and audio zones associated with screens corresponding to different occupant zones are the same or different.

3. The method according to claim 1 or 2, wherein the vehicle comprises a first audio focus stack corresponding to the first audio zone, and the first audio focus stack comprises audio focus information of an application that is running in a foreground or a background on a screen associated with the first audio zone; and after detecting the input operation that is performed on the second screen and that is for connecting the first sound generation device, the method further comprises:
creating a second audio focus stack corresponding to the second audio zone, and migrating audio focus information of an application that is running in a foreground or a background on the second screen from the first audio focus stack to the second audio focus stack.

4. The method according to any one of claims 1 to 3, wherein the vehicle comprises a first audio routing table corresponding to the first audio zone, the first audio routing table comprises application information of the application that is running in the foreground or the background on the screen associated with the first audio zone, and a first audio channel of the in-vehicle speaker is configured in the first audio routing table, and indicates that an audio of the application corresponding to the application information in the first audio routing table is routed to the first audio channel; and after detecting the input operation that is performed on the second screen and that is for connecting the first sound generation device, the method further comprises:
creating a second audio routing table corresponding to the second audio zone, and migrating application information of the application that is running in the foreground or the background on the second screen from the first audio routing table to the second audio routing table; and
creating a second audio channel of the first sound generation device, and configuring the second audio channel in the second audio routing table, wherein the second audio channel configured in the second audio routing table indicates that an audio of the application corresponding to the application information in the second audio routing table is routed to the second audio channel.

5. The method according to any one of claims 1 to 4, wherein the vehicle comprises a first media session stack corresponding to the first audio zone, and the first media session stack comprises a media session of the application that is running in the foreground or the background on the screen associated with the first audio zone; and after detecting the input operation that is performed on the second screen and that is for connecting the first sound generation device, the method further comprises:
creating a second media session stack corresponding to the second audio zone, and migrating a media session of the application that is running in the foreground or the background on the second screen from the first media session stack to the second media session stack.

6. The method according to claim 5, wherein before detecting the input operation that is performed on the second screen and that is for connecting the first sound generation device, the method further comprises:
detecting an input operation that is performed on the first screen and that is used to view audio playing information, and displaying a first list on the first screen based on the first media session stack, wherein the first list comprises audio playing information indicated by the first media session stack; and
detecting an input operation that is performed on the second screen and that is used to view audio playing information, and displaying the first list on the second screen based on the first media session stack.

7. The method according to claim 6, wherein the first list comprises audio playing information of the first audio, and the method further comprises:
when the in-vehicle speaker plays the second audio, and playing of the first audio is paused, detecting an input operation that is performed on the first screen and that is for the audio playing information of the first audio in the first list, wherein the input operation for the audio playing information of the first audio in the first list is used to play the first audio; and
playing the first audio via the in-vehicle speaker, and pausing playing of the second audio.

8. The method according to any one of claims 5 to 7, wherein after detecting the input operation that is performed on the second screen and that is for connecting the first sound generation device, the method further comprises:
detecting an input operation that is performed on the first screen and that is used to view audio playing information, and displaying a second list on the first screen based on the first media session stack, wherein the second list comprises the audio playing information indicated by the first media session stack, and the second list does not comprise the audio playing information of the first audio; and
detecting an input operation that is performed on the second screen and that is used to view audio playing information, and displaying a third list on the second screen based on the second media session stack, wherein the third list comprises audio playing information indicated by the second media session stack, and the second list comprises the audio playing information of the first audio.

9. The method according to any one of claims 1 to 8, wherein after connecting the vehicle to the first sound generation device, the method further comprises:
detecting an input operation that is performed on the second screen and that is used to adjust volume to first volume, and adjusting, to the first volume, volume at which the first sound generation device plays an audio.

10. The method according to any one of claims 1 to 9, wherein after connecting the vehicle to the first sound generation device, the method further comprises:
detecting an input operation that is performed on the first screen and that is used to adjust volume to second volume, and adjusting, to the second volume, volume at which the in-vehicle speaker plays an audio.

11. The method according to any one of claims 1 to 10, wherein the first screen displays a first interface of the second application, and the first interface is a playing interface of the second audio; and after connecting the vehicle to the first sound generation device, the method further comprises:
detecting an input operation of migrating the first interface from the first screen to the second screen, displaying the first interface on the second screen, canceling displaying of the first interface on the first screen, and switching the second audio from the in-vehicle speaker to the first sound generation device to continue playing.

12. The method according to claim 11, wherein after switching the second audio from the in-vehicle speaker to the first sound generation device to continue playing, the method further comprises:
detecting that a third application on the first screen requests to play a third audio, and playing the third audio via the in-vehicle speaker.

13. The method according to claim 11 or 12, wherein after switching the second audio from the in-vehicle speaker to the first sound generation device to continue playing, the method further comprises:
detecting that the first application on the second screen requests to play the first audio, playing the first audio via the first sound generation device, and pausing playing of the second audio or reducing playing volume of the second audio.

14. The method according to any one of claims 11 to 13, wherein the vehicle comprises the first audio focus stack, the first audio routing table, and the first media session stack that correspond to the first audio zone, and the second audio focus stack, the second audio routing table, and the second media session stack that correspond to the second audio zone, the first audio focus stack comprises audio focus information of the second application, the first audio routing table comprises application information of the second application, and the first media session stack comprises a media session stack of the first application; and
after detecting the input operation of migrating the first interface from the first screen to the second screen, the method further comprises:
migrating the audio focus information of the second application from the first audio focus stack to the second audio focus stack, migrating the application information of the second application from the first audio routing table to the second audio routing table, and migrating a media session of the second application from the first media session stack to the second media session stack.

15. The method according to any one of claims 1 to 14, wherein the second screen displays a second interface of the first application, and the second interface is a playing interface of the first audio; and
after detecting again that the first application requests to play the first audio, and playing the first audio via the first sound generation device, the method further comprises:
detecting an input operation of sharing the second interface from the second screen to the first screen, displaying the second interface on the first screen, and switching the first audio from the first sound generation device to the in-vehicle speaker to continue playing.

16. The method according to claim 15, wherein the vehicle further comprises a third screen, the third screen is associated with a third audio zone of a second sound generation device, the second sound generation device is connected to the vehicle, and the method further comprises:
detecting an input operation of sharing the second interface from the second screen to the third screen, and displaying the second interface on the third screen.

17. The method according to claim 15 or 16, wherein after switching the first audio from the first sound generation device to the in-vehicle speaker to continue playing, the method further comprises:
detecting that a fourth application on the second screen requests to play a fourth audio, and playing the fourth audio via the first sound generation device.

18. The method according to claim 16, wherein the method further comprises:
detecting that a fifth application on the third screen requests to play a fifth audio, and playing the fifth audio via the second sound generation device.

19. The method according to any one of claims 15 to 18, wherein after switching the first audio from the first sound generation device to the in-vehicle speaker to continue playing, the method further comprises:
detecting that a sixth application on the first screen requests to play a sixth audio, playing the sixth audio via the in-vehicle speaker, and pausing playing of the first audio.

20. The method according to any one of claims 15 to 19, wherein the vehicle comprises the first audio focus stack and the first audio routing table that correspond to the first audio zone, and the second audio focus stack and the second audio routing table that correspond to the second audio zone, the second audio focus stack comprises audio focus information of the first application, and the second audio routing table comprises application information of the first application; and
after detecting the input operation of sharing the second interface from the second screen to the first screen, the method further comprises:
migrating the audio focus information of the first application from the second audio focus stack to the first audio focus stack, and migrating the application information of the first application from the second audio routing table to the first audio routing table.

21. The method according to any one of claims 1 to 20, wherein after connecting the vehicle to the first sound generation device, the method further comprises:
detecting that the first sound generation device is disconnected, and changing the audio zone associated with the second screen from the second audio zone to the first audio zone; and
when the in-vehicle speaker plays the second audio, detecting that the first application on the second screen requests to play the first audio, playing the first audio via the in-vehicle speaker, and pausing playing of the second audio or reducing the volume of the second audio.

22. The method according to claim 21, wherein the vehicle comprises the first audio focus stack corresponding to the first audio zone and the second audio focus stack corresponding to the second audio zone; and after detecting that the first sound generation device is disconnected, the method further comprises:
migrating the audio focus information in the second audio focus stack to the first audio focus stack, and deleting the second audio focus stack.

23. The method according to claim 21 or 22, wherein the vehicle comprises the first audio routing table corresponding to the first audio zone and the second audio routing table corresponding to the second audio zone; and after detecting that the first sound generation device is disconnected, the method further comprises:
migrating the application information in the second audio routing table to the first audio routing table, and deleting the second audio routing table.

24. The method according to any one of claims 21 to 23, wherein the vehicle comprises the first media session stack corresponding to the first audio zone and the second media session stack corresponding to the second audio zone; and after detecting that the first sound generation device is disconnected, the method further comprises:
migrating the media session in the second media session stack to the first media session stack, and deleting the second media session stack.

25. The method according to any one of claims 1 to 24, wherein the vehicle further comprises a fourth screen, and an audio zone associated with the fourth screen is consistent with the audio zone associated with the second screen; and after detecting again that the first application requests to play the first audio, and playing the first audio via the first sound generation device, the method further comprises:
detecting that a seventh application on the fourth screen requests to play a seventh audio, playing the seventh audio via the first sound generation device, and pausing playing of the first audio or reducing playing volume of the seventh audio.

26. A vehicle, wherein the vehicle comprises a plurality of screens, an in-vehicle speaker, a memory, and a processor, the screen is configured to display a user interface, the in-vehicle speaker is configured to play an audio, the processor is configured to store a computer program, and the processor is configured to invoke the computer program, to enable the vehicle to perform the method according to any one of claims 1 to 25.

27. A computer-readable storage medium, storing instructions, wherein when the instructions are run on a vehicle, the vehicle is enabled to perform the method according to any one of claims 1 to 25.

28. A computer program product, wherein the computer program product comprises computer instructions, and when the computer instructions are run on a vehicle, the vehicle is enabled to perform the method according to any one of claims 1 to 25.
